# EUROPÄISCHE PATENTSCHRIFT

(11) **EP 3 743 289 B1**
(45) Veröffentlichungstag und Bekanntmachung des Hinweises auf die Patenterteilung: **21.06.2023**
(21) Anmeldenummer: 19704731.9
(22) Anmeldetag: 18.01.2019
(51) Int. Cl.: B60B 11/10, B60B 15/26, B60B 19/00

(54) **NOTLAUFRAD**
EMERGENCY WHEEL
ROUE POUR ROULAGE À PLAT

(30) Priorität: 22.01.2018 DE 102018101355; 14.05.2018 DE 102018111492
(43) Veröffentlichungstag der Anmeldung: 02.12.2020
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2019/051265
(87) Internationale Veröffentlichungsnummer: WO 2019/141817

(56) Entgegenhaltungen:
- WO-A1-01/38106
- DE-B- 1 240 430
- FR-A- 1 043 038
- GB-A- 857 897
- US-A- 1 055 372
- US-A- 2 454 923

## Beschreibung

Die vorliegende Erfindung betrifft ein Spannmittel für einen Aufsatz für ein Fahrzeugrad zur Ermöglichung eines Fahrbetriebs bei eingeschränkter Reifenfunktion nach dem Oberbegriff der Ansprüche 1 und 2.

Die vorliegende Erfindung betrifft außerdem einen Aufsatz für ein Fahrzeugrad, mit Spannmitteln entsprechend der Ansprüche 1 oder 2, zur Ermöglichung eines Fahrbetriebs bei eingeschränkter Reifenfunktion nach dem Oberbegriff der Ansprüche 18 und 20.

Mit einem Fahrzeugrad ist vorliegend ein Fahrzeugrad eines Kraftfahrzeugs, insbesondere eines PKWs, gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte. Bevorzugtes Einsatzgebiet der vorliegenden Erfindung ist die Ermöglichung einer Fahrt mit plattem Reifen.

Bei am Fahrzeugrad angebrachtem Aufsatz ist mit axialer Richtung vorliegend die Richtung der Drehachse des Fahrzeugrades gemeint. Mit axial Außen ist die Richtung vom Fahrzeug weg und mit axial innen die Richtung zum Fahrzeug bzw. zur Felge des Fahrzeugrads hin gemeint.

Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise ein Lochkreis der Felge mit einer Mittenöffnung des Fahrzeugrades, wobei vorliegend mit dem Lochkreis des Fahrzeugrades die Anordnung der Löcher in der Felge, die zur Aufnahme von Radschrauben bzw. Stehbolzen vorgesehen sind, samt Mittenöffnung gemeint ist.

Mit Umfangsrichtung ist die Richtung entlang des Umfangs des Fahrzeugrades, also entlang seiner Reifenlauffläche, gemeint bzw. entlang einer Lauffläche des Aufsatzes gemeint.

Aus der DE 1 240 430 B ist ein Notlaufrad mit mehreren über den Radumfang verteilt angeordneten, radial verstellbaren und am Rand der Felge eines defekten Rades klauenartig angreifenden Befestigungselementen bekannt. Die Befestigungselemente mit ihren Klauen greifen ausschließlich an der am äußeren Umfang gelegenen Fläche des Felgenarmes an, wobei die Klauen von dem freien Ende eines doppelarmigen Hebels gebildet sind und die Hebel unter der Wirkung einer Rückstellkraft stehen, die den für die Hebel vorgesehenen Spannmitteln entgegenwirkt.

Aus dem Dokument FR 1 043 038 A ist ein Notrad für Automobile bekannt, welches mittels Schraubverbindungen von außen an der Felge eines defekten Fahrzeugrades befestigbar ist und eine ringförmige Lauffläche aufweist. Ein Segment dieser ringförmigen Lauffläche ist abklappbar, um die Montage des Notrades zu erleichtern.

Aus der WO 01/38106 A1 ist eine Notlaufvorrichtung für ein Fahrzeug bekannt, die wenigstens zwei Segmente aufweist, welche zu einem radförmigen, kreisbogenförmigen oder kreisscheibenförmigen System zusammengesetzt werden können. Die Notlaufvorrichtung umfasst auch Mittel, um die Segmente an der Felge eines Fahrzeugrades zu befestigen. Durch einen Teil eines äußeren Randes eines Segments ist eine Aufrollstrecke gebildet, die bevorzugt kurven- oder bogenförmig verläuft, sodass entlang des Abrollumfangs des Segments der äußere Rand in Richtung des Kreiszentrums abfällt. Eine solche Notlaufvorrichtung kann deshalb im Fall einer Reifenpanne auch ohne einen Wagenheber montiert werden.

Die US-Patentschrift 2,454,923 A offenbart ein weiteres Notlaufrad, welches mittels Spannmitteln, die einen hakenartig ausgebildeten Hintergriffabschnitt zum formschlüssigen Hintergreifen des Felgenhorns einer Fahrzeugradfelge umfassen, an einer Fahrzeugradfelge befestigbar ist, ohne dass dazu ein defekter Fahrzeugreifen abgenommen werden muss.

Aus der US-Patentschrift 1,055,372 A ist ein Notrad bekannt, welches mit schneckenförmig ausgebildeten Schrauben und von diesen betätigten Schrammelementen an einem Fahrzeugrad verspannt werden kann.

Aufgabe der vorliegenden Erfindung ist es zum einen, ein Spannmittel für einen Aufsatz bereitzustellen, mittels dem sich der Aufsatz in einfacher, schneller und dabei jedoch sicherer Weise am Fahrzeugrad befestigen lässt.

Diese Aufgabe wird durch die erfindungsgemäßen Spannmittel gemäß Anspruch 1 und 2 gelöst.

Aufgabe der vorliegenden Erfindung ist es auch, einen Aufsatz bereitzustellen, der sich in einfacher, schneller und dabei jedoch sicherer Weise am Fahrzeugrad befestigen lässt.

Diese Aufgabe wird durch die erfindungsgemäßen Aufsätze gemäß Anspruch 18 und 20 gelöst.

Ein erstes erfindungsgemäßes Spannmittel zum Verspannen eines Aufsatzes an einer Felge eines Fahrzeugrads , wobei der Aufsatz ausgebildet ist, um in einem Betriebszustand, in dem er am Fahrzeugrad befestigt ist, einen Fahrbetrieb bei eingeschränkter Reifenfunktion zu ermöglichen, ist derart ausgebildet, dass das Spannmittel in einem Schnitt durch eine in radialer und axialer Richtung erstreckten Schnittebene einen in axialer Richtung abragenden und nach radial innen verlaufenden hakenartig ausgebildeten Hintergriffabschnitt zum formschlüssigen Hintergreifen des Felgenhorns umfasst, wobei der Hintergriffabschnitt in eine Anlagefläche, die insbesondere in einer in radialer und/oder umfänglicher Richtung erstreckten Ebene liegt, übergeht, die dazu ausgebildet und angeordnet ist, das Felgenhorn von axial außen zu kontaktieren, wobei der Hintergriffabschnitt des Spannmittels einen Halteabschnitt, der zur Aufnahme von Spannkräften ausgebildet ist, und einen Einführabschnitt aufweist, der dazu ausgebildet ist, ein Einfahren des Hintergriffabschnitts zwischen das Felgenhorn und einer am Felgenhorn anliegenden Reifenseitenwand zu ermöglichen, wobei der Einführabschnitt axial innen gegenüber dem Halteabschnitt angeordnet ist, und der Einführabschnitt eine felgenhornseitige Oberfläche aufweist, die in der in radialer und axialer Richtung verlaufenden Schnittebene gesehen gegenüber der axialen Richtung in einem flacheren Winkel verläuft als eine felgenhornseitige Oberfläche des Halteabschnitts. Ein derartiges Spannmittel ist kostengünstig herstellbar und stellt einen definierten und sicheren Kontakt des Aufsatzes mit der Felge, insbesondere dem Felgenhorn, sicher.

Ein weiteres und von dem ersten erfindungsgemäßen Spannmittel unabhängiges erfindungsgemäßes Spannmittel ist derart ausgebildet, dass das Spannmittel einen hakenartig ausgebildeten Hintergriffabschnitt zum formschlüssigen Hintergreifen des Felgenhorns umfasst, wobei der Hintergriffabschnitt um eine Achse, die tangential zur Umfangsrichtung verläuft, gegenüber dem übrigen Spannmittel verschwenkbar ist und in wenigstens einer ersten Stellung und einer zur ersten Stellung um die Achse verschwenkten zweiten Stellung, insbesondere durch eine kraftschlüssige Verspannung und/oder eine formschlüssige Arretierung, positionierbar ist, wobei der Hintergriffabschnitt in der ersten Stellung in einem Schnitt durch eine in radialer und axialer Richtung erstreckten Schnittebene in axialer Richtung abragend und nach radial innen verlaufend hakenartig ausgebildet ist, insbesondere wobei das Spannmittel eine Anlagefläche aufweist, die insbesondere in einer in radialer und/oder umfänglicher Richtung erstreckten Ebene liegt und die ausgebildet und angeordnet ist, um das Felgenhorn von axial außen zu kontaktieren, insbesondere wobei der Hintergriffabschnitt gegenüber der Anlagefläche verschwenkbar ist, wobei der Hintergriffabschnitt des Spannmittels einen Halteabschnitt, der zur Aufnahme von Spannkräften ausgebildet ist, und einen Einführabschnitt aufweist, der dazu ausgebildet ist, ein Einfahren des Hintergriffabschnitts zwischen das Felgenhorn und einer am Felgenhorn anliegenden Reifenseitenwand zu ermöglichen, wobei der Einführabschnitt axial innen gegenüber dem Halteabschnitt angeordnet ist, und der Einführabschnitt eine felgenhornseitige Oberfläche aufweist, die in der in radialer und axialer Richtung verlaufenden Schnittebene gesehen gegenüber der axialen Richtung in einem flacheren Winkel verläuft als eine felgenhornseitige Oberfläche des Halteabschnitts. Ein derartiges Spannmittel kann durch die Verschwenkbarkeit des Hintergriffabschnitts beispielsweise an unterschiedliche Reifen und Felgengeometrien anpassbar sein. Insbesondere Ausführungsformen mit der Anlagefläche erlauben einen genau definierten und sicheren Kontakt mit dem Felgenhorn. Bei einem Spannmittel dieser Ausführungsform ist es außerdem möglich, den Hintergriffabschnitt, nachdem dieser zwischen Reifen und Felgenhorn eingeführt wurde, nachträglich zu verschwenken, beispielsweise um die Absicherung der Befestigung zu erhöhen.

Bei den erfindungsgemäßen Spannmitteln kann vorgesehen sein, dass das Spannmittel ein Arretierungsmittel umfasst, das dazu angeordnet und ausgebildet ist, in eine entsprechende Aufnahme an dem schwenkbaren Hintergriffabschnitt einzugreifen. Das Arretierungsmittel kann insbesondere eine Schraube, insbesondere eine Madenschraube, sein.

Die formschlüssige Arretierung kann auch durch ein Arretierungsmittel vorgesehen sein, dass am Hintergriffabschnitt angeordnet ist und in eine entsprechende Aufnahme am übrigen Spannmittel eingreift.

Die erfindungsgemäßen Spannmittel können lösbar mit einem Aufsatz verbunden sein oder auch als Teil des Aufsatzes einstückig mit diesem ausgeführt sein. Teil der Erfindung ist auch ein Aufsatz, der ausgebildet ist, um in einem Betriebszustand, in dem er am Fahrzeugrad befestigt ist, einen Fahrbetrieb bei eingeschränkter Reifenfunktion zu ermöglichen, wobei der Aufsatz wenigstens eines der erfindungsgemäßen Spannmittel umfasst. Ein derartiger Aufsatz muss nicht zwingend den später weiter im Detail beschriebenen erfindungsgemäßen Aufsätzen entsprechen. Vielmehr ist im Sinne der Erfindung, wenn die erfindungsgemäße Spannmittel mit einem Aufsatz, der beispielsweise kreisringsscheibenartig mit einer außenliegenden Lauffläche ausgebildet sein kann, verwendet werden. Bevorzugt ist jedoch insbesondere die Verwendung der erfindungsgemäßen Spannmittel in Kombination mit den später beschriebenen Ausführungsformen der erfindungsgemäßen Aufsätze.

Teil der vorliegenden Erfindung ist insbesondere ein, insbesondere kreisringförmiger, Aufsatz, der wenigstens zwei, insbesondere wenigstens drei der erfindungsgemäßen Spannmittel umfasst, wobei diese beweglich, insbesondere in radialer Richtung, beweglich an dem Aufsatz angeordnet sind, wobei die Lauffläche des Aufsatzes ein herausnehmbares Segment umfasst, das beim Montieren des Aufsatzes zur Fahrbahn hin gerichtet sein kann und nach Drehung des am Fahrzeugrad angebrachten Aufsatzes mit dem übrigen Aufsatz verbunden werden kann.

Bei den erfindungsgemäßen Spannmitteln ist vorgesehen, dass der Hintergriffabschnitt in die Anlagefläche in einem Übergangsbereich übergeht, wobei die Oberfläche des Übergangsbereichs zwischen dem Hintergriffabschnitt und der Anlagefläche einen zurückversetzten Abschnitt aufweist, der in axialer Richtung gegenüber der Anlagefläche nach axial außen versetzt angeordnet ist. Dies ermöglicht eine sehr präzise und genau definierte Anlage des Spannmittels am Felgenhorn. Hierdurch kann der Aufsatz präziser am Fahrzeugrad beziehungsweise an der Felge angebracht werden.

Bei den erfindungsgemäßen Spannmitteln kann vorgesehen sein, dass das Spannmittel einen Befestigungsabschnitt zur Verbindung des Spannmittels mit dem Aufsatz aufweist, insbesondere wobei der Befestigungsabschnitt radial innenliegend von dem Hintergriffabschnitt und/oder von der Anlagefläche angeordnet ist, insbesondere wobei der Befestigungsabschnitt wenigstens eine, insbesondere mehrere, Befestigungseinrichtungen, die insbesondere als Schraubenaufnahmen oder Gewindebolzen ausgebildet sind, aufweist, die ausgebildet und angeordnet sind, um das Spannmittel über den Befestigungsabschnitt, insbesondere mittels einer Schraube oder einer Schraubenmutter, an dem Aufsatz in axialer Richtung klemmend gegen ein Spiel zu sichern. Hierdurch kann der Aufsatz besonders sicher und genau definiert am Fahrzeugrad befestigt werden.

Bei den erfindungsgemäßen Spannmitteln kann vorgesehen sein, dass das Spannmittel einen Kopplungsabschnitt umfasst, insbesondere der eine Aufnahme für ein Kopplungsmittel, insbesondere eine Zugstange oder eine Gewindestange, aufweist. Der Kopplungsabschnitt kann dazu dienen das Spannmittel, insbesondere über das Kopplungsmittel, mit einer Verspanneinrichtung des Aufsatzes zu koppeln.

Bei den erfindungsgemäßen Spannmitteln kann vorgesehen sein, dass der Hintergriffabschnitt des Spannmittels, ggf. wenn er sich in der ersten Stellung befindet (im Fall der Spannmittel mit dem verschwenkbaren Hintergriffabschnitt), beim Blick nach radial innen, einen Halteabschnitt und einen Einführabschnitt aufweist. Der Halteabschnitt ist dabei zur Aufnahme von Spannkräften ausgebildet. Der Einführabschnitt, wiederum ist ausgebildet, um ein Einfahren des Hintergriffabschnitts zwischen Felgenhorn und einer am Felgenhorn anliegenden Reifenseitenwand zu vereinfachen. Der Einführabschnitt ist axial innen gegenüber dem Halteabschnitt angeordnet. Die axial innen liegende Anordnung des Einführabschnitts ist dabei auf die vorgesehene Position des Spannmittels an dem Aufsatz bezogen. Das Vorsehen eines Einführabschnitts und eines Halteabschnitts an dem Hintergriffabschnitt kann es ermöglichen, den Hintergriffabschnitt derart zu gestalten, dass der Einführabschnitt ein einfaches Einbringen des Hintergriffabschnitt zwischen Felgenhorn und Reifenseitenwand ermöglicht, während der Halteabschnitt beispielsweise mit einer stärkeren Materialdicke ausgeführt sein kann, um größere Kräfte aufzunehmen. Dadurch kann das Spannmittel eine hohe Stabilität bei gleichzeitig einfach möglichem Hintergreifen des Felgenhorns aufweisen.

Bei den erfindungsgemäßen Spannmitteln kann vorgesehen sein, dass der Einführabschnitt eine geringere Materialdicke als der Halteabschnitt aufweist und/oder dass der Einführabschnitt eine nach axial innenliegend, insbesondere kontinuierlich, abnehmende Materialdicke aufweist. Hierdurch kann das Einführen des Spannmittels bzw. des Hintergriffabschnitts zwischen das Felgenhorn und die Reifenseitenwand besonders einfach gestaltet werden.

Bei den erfindungsgemäßen Spannmitteln kann vorgesehen sein, dass der Halteabschnitt in Umfangsrichtung weiter erstreckt ist als der Einführabschnitt. Ein in Umfangsrichtung möglichst wenig erstreckter Einführabschnitt kann das Ansetzen des Spannmittels zwischen Felgenhorn und Reifenseitenwand erleichtern. Nach dem Ansetzen kann der an den Einführabschnitt angrenzende Hintergriffabschnitt in einfacher Weise hinter das Felgenhorn geführt werden und der in Umfangsrichtung weiter erstreckte Halteabschnitt kann ausreichend Kräfte aufnehmen, um den Aufsatz sicher am Fahrzeugrad zu befestigen.

Bei den erfindungsgemäßen Spannmitteln kann vorgesehen sein, dass der Halteabschnitt einen sich nach axial innen in seiner umfänglichen Erstreckung verjüngenden Abschnitt aufweist und/oder dass der Einführabschnitt einen sich nach axial innen in seiner umfänglichen Erstreckung verjüngenden Abschnitt aufweist, insbesondere wobei der Einführabschnitt über seine gesamte Erstreckung nach axial innen sich in seiner umfänglichen Erstreckung verjüngend ausgebildet ist. Der Einführabschnitt und oder der Halteabschnitt können sich also nach axial außen hin in ihrer umfänglichen Erstreckung erweitern. Eine axial innen liegend verjüngte Form vereinfacht das Einführen, während der sich in umfänglicher Richtung weiter erstreckende axial außen liegende Teil des Halteabschnitts ausreichend Kräfte zur sicheren Befestigung aufnehmen kann.

Bei den erfindungsgemäßen Spannmitteln ist vorgesehen, dass, ggf. wenn der Hintergriffabschnitt sich in der ersten Stellung befindet, der Einführabschnitt eine felgenhornseitige Oberfläche aufweist, die in der in radialer und axialer Richtung erstreckten Schnittebene gesehen gegenüber der axialen Richtung in einem flacheren Winkel verläuft als eine felgenhornseitige Oberfläche des Halteabschnitts, insbesondere wobei der Winkel des Einführabschnitts um wenigstens 5°, insbesondere wenigstens 7° geringer ist. Durch eine gegenüber der axialen Richtung flache Neigung der felgenhornseitigen Oberfläche des Einführabschnitts kann dieser auch bei Reifen, die dicht am Felgenhorn anliegen, leicht eingeführt werden. Ein steiler Winkel des Halteabschnitts hingegen kann die Sicherheit des Halts am Felgenhorn verbessern.

Bei den erfindungsgemäßen Spannmitteln kann vorgesehen sein, dass die felgenhornseitige Oberfläche des Hintergriffabschnitts in der in radialer und axialer Richtung erstreckten Schnittebene gesehen wenigstens einen gerade verlaufenden Abschnitt umfasst, insbesondere mehrere gerade verlaufende Abschnitte mit unterschiedlichen Winkeln gegenüber der axialen Richtung.

Bei den erfindungsgemäßen Spannmitteln kann vorgesehen sein, dass, ggf. wenn der Hintergriffabschnitt sich in der ersten Stellung befindet, die felgenhornseitige Oberfläche des Einführabschnitts in der in radialer und axialer Richtung erstreckten Schnittebene gesehen gegenüber der axialen Richtung in einem Winkel von wenigstens 10°, insbesondere wenigstens 15°, verläuft und/oder dass die felgenhornseitige Oberfläche des Halteabschnitts in der in radialer und axialer Richtung erstreckten Schnittebene gesehen gegenüber der axialen Richtung in einem Winkel von wenigstens 16°, insbesondere wenigstens 20°, insbesondere wenigstens 25°, verläuft.

Bei den erfindungsgemäßen Spannmitteln kann vorgesehen sein, dass, ggf. wenn der Hintergriffabschnitt sich in der ersten Stellung befindet, die felgenhornseitige Oberfläche des Einführabschnitts in der in radialer und axialer Richtung erstreckten Schnittebene gesehen gegenüber der axialen Richtung in einem Winkel von höchstens 40°, insbesondere höchstens 35°, insbesondere höchstens 30°, insbesondere höchstens 25°, verläuft und/oder dass die felgenhornseitige Oberfläche des Halteabschnitts in der in radialer und axialer Richtung erstreckten Schnittebene gesehen gegenüber der axialen Richtung in einem Winkel von höchstens 50°, insbesondere höchstens 45°, insbesondere höchstens 40°, insbesondere höchstens 35°, verläuft.

Die eben beschriebenen Ober- und Untergrenzen der Winkel stellen Varianten dar, die einen vorteilhaften Kompromiss zwischen sicherem Halt und leichter Einführbarkeit des Hintergriffabschnitts bieten.

Bei den erfindungsgemäßen Spannmitteln kann vorgesehen sein, dass das Spannmittel ein Sicherungsmittel umfasst, welches, insbesondere in Umfangsrichtung zu dem Hintergriffabschnitt versetzt und um eine Schwenkachse, die insbesondere tangential zur Umfangsrichtung verläuft, verschwenkbar an dem Spannmittel angeordnet ist, wobei das Sicherungsmittel einen Formschlussabschnitt umfasst, der ausgebildet ist, um durch Verschwenken des Sicherungsmittels in einen formschlüssigen Hintergriff mit dem Felgenhorn gebracht zu werden. Der Hintergriffabschnitt der Spannmittel kann dazu dienen, den Aufsatz in einfacher und zuverlässiger Weise an Felgenhorn befestigen zu können, wobei ein hohes Augenmerk auf die einfache Einführbarkeit des Hintergriffabschnitts zwischen Felgenhorn und Reifen liegen kann. Zwar können die erfindungsgemäßen Spannmittel über den Hintergriffabschnitt einen Aufsatz ausreichend am Felgenhorn befestigen, es kann jedoch vorteilhaft sein, insbesondere bei extremen Belastungen, wenn die erfindungsgemäßen Spannmittel zusätzlich das Sicherungsmittel umfassen. Dieses Sicherungsmittel ist ausgebildet, um durch Verschwenken des Sicherungsmittels in einen formschlüssigen Hintergriff mit dem Felgenhorn gebracht zu werden. Hierdurch kann die Befestigung nochmals sicherer gestaltet werden. Durch das Verschwenken des Sicherungsmittels bzw. dessen Formschlussabschnitts kann dieses das Felgenhorn bspw. in einer anderen Art und Weise als der Hintergriffabschnitt des Spannmittels hintergreifen. Hierdurch kann zum einen eine zusätzliche Sicherung in radialer Richtung erreicht werden und zum anderen kann der Formschlussabschnitt des Sicherungsmittels bspw. ausgebildet sein, um ein höheres Maß an Sicherung in axialer Richtung bereitzustellen, da er tiefer hinter das Felgenhorn eingeschwenkt werden kann und auch besser an die Kontur des Felgenhorns angepasst werden kann. Da der Aufsatz durch den Hintergriffabschnitt bereits gegenüber der Felge fixiert ist, kann der Formschlussabschnitt auch gegen einigen Widerstand des Reifens hinter das Felgenhorn geschwenkt werden. Mit anderen Worten, die Form des Formschlussabschnitts des Sicherungsmittels kann für die formschlüssige Kontaktierung und den sicheren Hintergriff des Felgenhorns optimiert sein, während die Form des Hintergriffabschnitts des Spannmittels für ein einfaches Einführen optimiert sein kann.

Bei den erfindungsgemäßen Spannmitteln kann vorgesehen sein, dass der Formschlussabschnitt des Sicherungsmittels einen Kontaktabschnitt umfasst, der ausgebildet ist, um das Felgenhorn auf seiner reifenzugewandten Seite zu kontaktieren, wobei der Kontaktabschnitt entsprechend der Kontur des Felgenhorns geformt ist, insbesondere wobei der Kontaktabschnitt entsprechend der Kontur des Felgenhorns einer J-Felge nach DIN 7817, geformt ist. Mit anderen Worten der Kontaktabschnitt ist als Gegenstück zur Innenkontur der Felge, insbesondere einer J Felge ausgebildet. Damit kann der Kontaktabschnitt des Sicherungsmittels flächig anliegen und insbesondere in axialer Richtung eine vorteilhafte Sicherung bieten. Bei den erfindungsgemäßen Spannmitteln kann vorgesehen sein, dass der Formschlussabschnitt des Sicherungsmittels eine größere Materialdicke aufweist als der Hintergriffabschnitt des Spannmittels. Hierdurch werden die durch das Spannmittel aufnehmbaren Kräfte erhöht. Gleichzeitig bleibt das Spannmittel in einfacher Art und Weise durch den Hintergriffabschnitt einführbar und der zur Aufnahme von hohen Kräften ausgelegte Formschlussabschnitt des Sicherungsmittels kann nach dem Ansetzen und Befestigen über den Hintergriffabschnitt hinter die Felge eingeschwenkt werden, um dann hohe Kräfte aufnehmen zu können.

Bei den erfindungsgemäßen Spannmitteln kann vorgesehen sein, dass das Spannmittel einen mehrteiligen Hintergriffabschnitt mit zueinander in radialer Richtung beweglichen Teilabschnitten umfasst, insbesondere wobei ein erster Teilabschnitt des Hintergriffabschnitts gegenüber einem zweiten Teilabschnitt des Hintergriffabschnitts in eine, insbesondere nach radial innen, versetzte Stellung vorgespannt ist. Hierdurch kann das Spannmittel quasi im noch nicht verspannten Zustand das Felgenhorn trotzdem greifen, da der vorgespannte erste Teilabschnitt des Hintergriffabschnitts greifend am Felgenhorn anliegen kann ohne verspannt zu sein. Bei diesen erfindungsgemäßen Spannmitteln kann vorgesehen sein, dass das Spannmittel einen Anschlag aufweist, der derart ausgebildet ist, dass der erste Teilabschnitt nicht in eine gegenüber dem zweiten Teilabschnitt nach radial außen versetzte Stellung bringbar ist. Das kann ein einfaches Platzieren eines mit dem Spannmittel versehenen Aufsatzes am Felgenhorn möglich machen. Nach dem Platzieren kann der zweite Teilabschnitt bzw. beide Teilabschnitt des Hintergriffabschnitts verspannt werden.

Die Spannmittel können insbesondere im Bereich ihres Befestigungsabschnitts, insbesondere auf ihrer axialen äußeren Seite, eine Riffelung aufweisen. Hierdurch kann der Kontakt zum Montage- und/oder Laufflächenabschnitt verbessert werden.

Die Spannmittel können insbesondere in dem Bereich ihres Hintergriffabschnitts, der zur Kontaktierung der Felge vorgesehen ist, und/oder im Bereich ihrer Anlagefläche eine dämpfenden Oberfläche, insbesondere in Form einer Gummierung der Oberfläche, aufweisen.

Bei den erfindungsgemäßen Spannmitteln kann vorgesehen sein, dass der Hintergriffabschnitt derart ausgebildet ist, dass, ggf. wenn er sich in der ersten Schwenkstellung befindet, das Material des Hintergriffabschnitts, welches axial innen von einer Referenzebene liegt, vollständig in einem gedachten Korridor liegt, wobei die Referenzebene in einem Abstand von 4, 6 oder 7 mm zu einer Anlageebene, insbesondere die mit der Anlagefläche zusammen fällt, angeordnet ist, wobei die Anlageebene eine in radialer Richtung und umfänglicher Richtung erstreckte Ebene ist, in welcher der axial äußere Kontaktpunkt des Felgenhorns mit dem Spannmittel liegt, wobei der gedachte Korridor eine Breite von 12mm, insbesondere 10mm, insbesondere 9mm, insbesondere 8mm, insbesondere 7mm, insbesondere 6mm, insbesondere 5mm, insbesondere 4mm, aufweist und seine Mittelachse in einem Winkel 192 von wenigstens 42°, insbesondere wenigstens 45°, insbesondere wenigstens 47°, insbesondere wenigstens 49°, insbesondere wenigstens 51°, insbesondere wenigstens 53°, insbesondere wenigstens 55°, und/oder höchstens 72°, insbesondere höchstens 69°, insbesondere höchstens 67°, insbesondere höchstens 65°, insbesondere höchstens 63°, insbesondere höchstens 61°, insbesondere höchstens 59° zur radialen Richtung R verläuft, insbesondere kann die Mittelachse in einem Winkel von 57° verlaufen, wobei die Breite und der Winkel der Mittelachse bezogen auf einen Blick auf eine in radialer und axialer Richtung erstreckten Ebene definiert sind. Derartig ausgebildete Spannmittel sind ausreichend stabil und ermöglichen dennoch ein einfaches Einführen zwischen Reifen und Felgenhorn.

Bei den erfindungsgemäßen Spannmitteln kann vorgesehen sein, dass die Mittelachse des gedachten Korridors beim Blick auf die in radialer und axialer Richtung erstreckten Ebene durch den Materialmittelpunkt des Hintergriffabschnitts in dessen Schnitt mit der Referenzebene verläuft und/oder dass die Mittelachse des gedachten Korridors beim Blick auf die in radialer Richtung R und axialer Richtung A erstreckten Ebene durch den Materialmittelpunkt des Hintergriffabschnitts in dessen Schnitt mit einer zur Referenzebene parallelen Ebene, in der das axial innere Ende des Hintergriffabschnitts liegt, verläuft. Derartig ausgebildete Spannmittel sind ausreichend stabil und ermöglichen dennoch ein einfaches Einführen zwischen Reifen und Felgenhorn.

Bei den erfindungsgemäßen Spannmitteln kann vorgesehen sein, dass eine, insbesondere mechanische, Indikationseinrichtung vorgesehen ist, über die erkennbar ist, ob das Spannmittel in Hintergriff, vorzugsweise ob das Spannmittel in der vorgesehenen Stellung in Hintergriff, mit dem Felgenhorn steht, insbesondere wobei die Indikationseinrichtung ein federgespanntes Element umfasst, das im Bereich des Hintergriffabschnitts derart in die vorgesehene Position des Felgenhorns hinein gespannt ist, dass es beim Hintergreifen des Felgenhorns durch das Spannmittel durch das Felgenhorn aus dieser Position gedrängt wird und vorzugsweise auf der axial und/oder radial außen liegenden Seite des Spannmittels über dieses hinaussteht, so dass erkennbar ist, ob das Felgenhorn wie vorgesehen hintergriffen ist.

Das federgespannte Element der Indikationseinrichtung kann sich insbesondere durch das Material des Spannmittels erstrecken. Insbesondere kann die Verspannrichtung des federgespannten Elements parallel zum Verlauf des Halteabschnitts des Spannmittels sein.

Die Erfindung betrifft auch einen Aufsatz mit Spannmitteln nach Anspruch 1 oder 2 für ein Fahrzeugrad, das eine Felge und einen auf der Felge angeordneten Reifen umfasst, wobei der Aufsatz dazu ausgebildet ist, in einem Betriebszustand, in dem er am Fahrzeugrad befestigt ist, einen Fahrbetrieb bei eingeschränkter Reifenfunktion zu ermöglichen, wobei der Aufsatz einen, insbesondere in Umfangsrichtung mehrteilig aufgebauten, Laufflächenabschnitt umfasst, der eine Lauffläche des Aufsatzes zur Kontaktierung der Fahrbahn, aufweist, wobei der Aufsatz des Weiteren einen Montageabschnitt umfasst, der, wenn der Aufsatz im Betriebszustand am Fahrzeugrad befestigt ist, radial innenliegend von der Lauffläche angeordnet ist, insbesondere und von wenigstens einem Teil des Laufflächenabschnitts, insbesondere dem gesamten Laufflächenabschnitt, lösbar ausgebildet ist, und wobei der Aufsatz wenigstens zwei, insbesondere wenigstens drei, insbesondere wenigstens vier, Spannmittel umfasst, wobei die Spannmittel ausgebildet sind, um einen Abschnitt, insbesondere ein Felgenhorn, der Felge zu hintergreifen, insbesondere wobei wenigstens ein, insbesondere mehrere Spannmittel, gemäß den eben beschriebenen Ausführungsformen ausgebildet ist bzw. sind, wobei der Aufsatz eine Verspanneinrichtung umfasst über die wenigstens ein Spannmittel in einer Verspannbewegung relativ zu dem Montageabschnitt nach radial innen bewegbar ist, wobei ferner der Laufflächenabschnitt wenigstens abschnittsweise von dem Montageabschnitt lösbar oder gegenüber diesem beweglich ist, und wenigstens ein, vorzugsweise jedes, Spannmittel einen Befestigungsabschnitt mit einer Befestigungseinrichtung aufweist, mittels der der Laufflächenabschnitt an dem Spannmittel befestigbar und in axialer Richtung gegen ein Spiel gegenüber dem Spannmittel sicherbar ist. Insbesondere kann das Spannmittel einen Kopplungsabschnitt umfassen, mit dem es mit der Verspanneinrichtung gekoppelt ist, wobei bei der Verspannbewegung des Spannmittels die Bewegung des Kopplungsabschnitts bezüglich des Montageabschnitts rein translatorisch, insbesondere und ausschließlich nach radial innen gerichtet, verläuft, insbesondere wobei wenigstens zwei, insbesondere wenigstens drei, insbesondere wenigstens vier, Spannmittel in einer Verspannbewegung relativ zu dem Montageabschnitt gleichförmig und zueinander bewegungsgekoppelt nach radial innen bewegbar sind, insbesondere wobei die Spannmittel je einen Kopplungsabschnitt umfassen mit dem sie mit der Verspanneinrichtung gekoppelt sind, wobei bei der Verspannbewegung der Spannmittel die Bewegung der Kopplungsabschnitte bezüglich des Montageabschnitts rein translatorisch, insbesondere und ausschließlich nach radial innen gerichtet, verläuft. Die Spannmittel können insbesondere einen Hintergriffabschnitt aufweisen, der starr mit dem Kopplungsabschnitt verbunden ist. In diesem Fall kann die Relativbewegung des Hintergriffabschnitts gegenüber dem Montageabschnitt der Relativbewegung des Kopplungsabschnitts gegenüber dem Montageabschnitt entsprechen. Denkbar ist jedoch auch eine Verbindung über ein biegsames Segment, bspw. ein Federblech. Mit gleichförmig und zueinander bewegungsgekoppelt ist dabei gemeint, dass die Bewegung der Spannmittel bewegungsgekoppelten Spannmittel vom Betrag bzw. von der Art der Bewegung her gleich ist. Dass sich also bspw. die Kopplungsabschnitte der sich gleichförmig bewegenden und zueinander bewegungsgekoppelten Spannmittel mit gleicher Geschwindigkeit radial einwärts bewegen.

Die Erfindung betrifft ferner einen Aufsatz mit Spannmitteln nach Anspruch 1 oder 2 für ein Fahrzeugrad, das eine Felge und einen auf der Felge angeordneten Reifen umfasst, wobei der Aufsatz dazu ausgebildet ist, in einem Betriebszustand, in dem er am Fahrzeugrad befestigt ist, einen Fahrbetrieb bei eingeschränkter Reifenfunktion zu ermöglichen, wobei der Aufsatz einen, insbesondere in Umfangsrichtung mehrteilig aufgebauten, Laufflächenabschnitt umfasst, der eine Lauffläche des Aufsatzes zur Kontaktierung der Fahrbahn, aufweist, wobei der Aufsatz des Weiteren einen Montageabschnitt umfasst, der, wenn der Aufsatz im Betriebszustand am Fahrzeugrad befestigt ist, radial innenliegend von der Lauffläche angeordnet ist, insbesondere und von wenigstens einem Teil des Laufflächenabschnitts, insbesondere dem gesamten Laufflächenabschnitt, lösbar ausgebildet ist, und wobei der Aufsatz wenigstens zwei, insbesondere wenigstens drei, insbesondere wenigstens vier, Spannmittel umfasst, wobei die Spannmittel ausgebildet sind, um einen Abschnitt, insbesondere ein Felgenhorn, der Felge zu hintergreifen, insbesondere wobei wenigstens ein, insbesondere mehrere Spannmittel gemäß den eben beschriebenen Ausführungsformen ausgebildet ist bzw. sind, wobei der Montageabschnitt wenigstens zwei zueinander bewegliche Segmente mit je wenigstens einem Spannmittel umfasst und der Aufsatz eine Verspanneinrichtung umfasst, über die die beiden zueinander beweglichen Segmente in einer Verspannbewegung relativ zueinander bewegbar sind, wobei die Verspannbewegung der Segmente bezüglich einander translatorisch, insbesondere rein translatorisch, und aufeinander zu gerichtet ist, wobei ferner der Laufflächenabschnitt wenigstens abschnittsweise von dem Montageabschnitt lösbar oder gegenüber diesem beweglich ist, und wenigstens ein, vorzugsweise jedes, Spannmittel einen Befestigungsabschnitt mit einer Befestigungseinrichtung aufweist, mittels der der Laufflächenabschnitt an dem Spannmittel befestigbar und in axialer Richtung gegen ein Spiel gegenüber dem Spannmittel sicherbar ist. Insbesondere kann wenigstens eines, insbesondere beide, der zueinander beweglichen Segmente des Montageabschnitts zwei Spannmittel umfassen, die derart an dem beweglichen Segment des Montageabschnitts angeordnet sind, dass sich ihre relative Position zueinander während der Verspannbewegung nicht ändert.

Der Montageabschnitt ist ein Teil des Aufsatzes, der ausgebildet ist, um vor dem Laufflächenabschnitt am Fahrzeugrad befestigt zu werden. Dabei kann der Laufflächenabschnitt bereits mit dem Montageabschnitt verbunden sein. Beim Anbringen des Aufsatzes wird zunächst der Montageabschnitt am Fahrzeugrad befestigt und anschließend der Laufflächenabschnitt befestigt bzw. in seine endgültige Position gebracht und befestigt. Bei dem erfindungsgemäßen Aufsatz ist es also möglich, zunächst den Montageabschnitt zu befestigen.

Wie weiter unten noch im Detail ausgeführt werden wird, kann der Laufflächenabschnitt lösbar von dem Montageabschnitt ausgebildet sein. Insbesondere ist der Aufsatz derart ausgebildet, dass zuerst der Montageabschnitt ohne den Laufflächenabschnitt am Fahrzeugrad befestigbar ist und der Laufflächenabschnitt, nachdem der Montageabschnitt am Fahrzeugrad befestigt ist, an das Fahrzeugrad mit Montageabschnitt abgebracht und an diesem befestigt wird. Der Laufflächenabschnitt kann auch, insbesondere unlösbar und, verschiebbar und/oder verschwenkbar mit dem Montageabschnitt verbunden sein. Der Aufsatz kann bei der Montage in einem ersten Schritt mittels des Montageabschnitts an der Felge des Fahrzeugrads befestigt werden. Gegebenenfalls kann der Aufsatz, insbesondere der Laufflächenabschnitt, dann zusätzlich, insbesondere am Montageabschnitt und, Fahrzeugrad bzw. der Felge des Fahrzeugrads befestigt werden.

Wie oben bereits erwähnt, so ist es bevorzugt, wenn der Laufflächenabschnitt in Umfangsrichtung gesehen wenigstens zwei Segmente, die jeweils einen Teil des Umfangs der Lauffläche umfassen, aufweist. Insbesondere sind die Segmente voneinander lösbar und/oder gegenüber einander verschwenkbar und/oder verschiebbar. Hierdurch lässt sich der Aufsatz besonders einfach am Fahrzeugrad montieren. Zunächst kann der Montageabschnitt am Fahrzeugrad befestigt werden, wobei der Montageabschnitt durch seine radiale Erstreckung, die geringer als die radiale Erstreckung des Laufflächenabschnitts ist, problemlos auch bei einem platten Reifen am Fahrzeugrad montierbar ist. Im Anschluss daran kann ein erstes Segment des Laufflächenabschnitts am Fahrzeugrad bzw. am Montageabschnitt und am Fahrzeugrad befestigt werden. Das Fahrzeugrad mit dem daran befindlichen Montageabschnitt und dem ersten Segment des Laufflächenabschnitts kann dann derart gedreht werden, dass das bereits am Fahrzeugrad befindliche Segment des Laufflächenabschnitts die Fahrbahn kontaktiert. Anschließend kann das weitere Segment des Laufflächenabschnitts ans Fahrzeugrad und den Montageabschnitt angebracht und befestigt werden. Der Aufsatz ist dann vollständig montiert, wobei die Montage ohne Wagenheber oder Hebebühne und bei am Fahrzeug befestigten Fahrzeugrad problemlos möglich ist.

Das Spannmittel liegt in der Endposition insbesondere vollständig mit dem Hintergriffabschnitt formschlüssig an der Innenseite des Felgenhorns an. Durch eine optionale Beschichtung (z.B. Gummierung) des Spannmittels auf der dem Felgenhorn zugewandten Seite kann (Beschichtung wird komprimiert) eine Verpressung zwischen Spannmittel und Felgenhorn erreicht werden. Dadurch können dann die durch Beschleunigungs- und Bremsvorgänge hervorgerufenen Umfangskräfte besonders gut aufgenommen werden. Damit wird eine Relativbewegung zwischen Reserverad und Fahrzeugfelge besonders effizient vermieden.

Das Spannmittel weist insbesondere allgemein eine reibungserhöhende und/oder komprimierbare Kontaktfläche, insbesondere mit einer Beschichtung, zur Kontaktierung des Felgenhorns auf.

Der Montageabschnitt und der Laufflächenabschnitt können, insbesondere aufeinander abgestimmte, Positioniereinrichtungen aufweisen. Insbesondere kann der Montageabschnitt wenigstens einen in axialer Richtung erstreckten, insbesondere zapfenartigen, Führungsvorsprung umfassen und der Laufflächenabschnitt wenigstens eine Führungsöffnung umfassen, die komplementär zu dem Führungsvorsprung ausgebildet ist, so dass, wenn der Montageabschnitt bereits am Fahrzeugrad angebracht ist, der Laufflächenabschnitt bzw. ein Teil des Laufflächenabschnitts derart auf den Montageabschnitt aufgesetzt werden kann, dass der Führungsvorsprung in die Führungsöffnung eingreift und eine axiale Montagebewegung des Laufflächenabschnitts gegenüber dem Montageabschnitt und dem Fahrzeugrad durch den Eingriff des Führungsvorsprungs in die Führungsöffnung geführt ist. Hierdurch lässt sich der Laufflächenabschnitt in besonders einfacher und effizienter Art und Weise an das Fahrzeugrad ansetzen, wenn der Montageabschnitt bereits am Fahrzeugrad befestigt ist. Es ist auch denkbar, dass der Montageabschnitt eine oder mehrere Führungsöffnungen aufweist und der Laufflächenabschnitt entsprechende zapfenartige Führungsvorsprünge, die komplementär zu den Führungsöffnungen ausgebildet sind. Durch die komplementäre Ausbildung von Führungsöffnung und Führungsvorsprung und deren Erstreckung in axialer Richtung kann der Laufflächenabschnitt in axialer Richtung in einfacher Weise auf den Montageabschnitt, der bereits am Fahrzeugrad befestigt ist, aufgesetzt werden. Hierdurch ist zum einen die korrekte Ausrichtung als auch die korrekte Montagestellung des Laufflächenabschnitts quasi vorgegeben.

Bevorzugt ist insbesondere, dass einer der Arme des Montageabschnitts Führungsvorsprünge oder Führungsaufnahmen für mehrere Segmente des Laufflächenabschnitts aufweist.

Insbesondere umfasst der Montageabschnitt mehrere sich nach radial außen erstreckende Arme, die jeweils wenigstens einen Führungsvorsprung aufweisen. Hierdurch ist es möglich, dass die Führungsvorsprünge an besonders geeigneten Positionen zur Befestigung des Laufflächenabschnitts angeordnet sind. Denkbar ist auch, dass die Streben statt Führungsvorsprüngen Führungsöffnungen aufweisen zur Aufnahme von Führungsvorsprüngen an dem Laufflächenabschnitt. Bei den erfindungsgemäßen Aufsätzen kann vorgesehen sein, dass der Laufflächenabschnitt wenigstens abschnittsweise von dem Montageabschnitt lösbar oder gegenüber diesem beweglich ist, und dass wenigstens ein, insbesondere jedes, Spannmittel einen Befestigungsabschnitt mit einer Befestigungseinrichtung aufweist, über die der Laufflächenabschnitt an dem Spannmittel befestigbar und in axialer Richtung, vorzugsweise durch eine klemmende Befestigung, gegen ein Spiel gegenüber dem Spannmittel sicherbar ist.

Bei den erfindungsgemäßen Aufsätzen ist vorgesehen, dass der Laufflächenabschnitt wenigstens abschnittsweise von dem Montageabschnitt lösbar oder gegenüber diesem beweglich ist, und dass der Montageabschnitt, wenigstens einen Befestigungsabschnitt mit einer Befestigungseinrichtung aufweist, über die der Laufflächenabschnitt am Montageabschnitt befestigbar und in axialer Richtung, vorzugsweise durch eine klemmende Befestigung, gegen ein Spiel gegenüber dem Montageabschnitt sicherbar ist.

Bei den erfindungsgemäßen Aufsätzen kann vorgesehen sein, dass die Befestigungseinrichtung derart ausgebildet ist, dass der Laufflächenabschnitt sich bei Befestigung über die Befestigungseinrichtung in der axialen Richtung zur Felge hin bewegt, insbesondere wobei die Befestigungseinrichtung eine schraubbare Verbindung umfasst, bei deren Anziehen der Laufflächenabschnitt sich in der axialen Richtung zum Montageabschnitt hin bewegt, insbesondere wobei die Befestigungseinrichtung elektrisch und/oder pneumatisch angetrieben und/oder durch eine Vorspannung, insbesondere eine Federvorspannung, die Bewegung des Laufflächenabschnitts in axialer Richtung wenigstens unterstützt.

Es kann an dem Aufsatz ein Antrieb vorgesehen sein, der als Elektromotor ausgebildet sein kann. Der Antrieb kann eine Energiequelle umfassen, die als Akku ausgeführt sein kann. Der Antrieb kann in den Montageabschnitt unlösbar integriert sein oder abnehmbar ausgeführt sein. Der Antrieb kann neben oder statt der Energiequelle auch einen Anschluss an eine externe Stromquelle bspw. einen Zigarettenanzünder des Fahrzeugs umfassen.

Der Antrieb kann zur Betätigung der Befestigungseinrichtung dienen. Bei Betätigung der Befestigungseinrichtung kann sich der Laufflächenabschnitt beim Befestigen an dem Montageabschnitt in der axialen Richtung zur Felge hin bewegen.

Die Befestigungseinrichtung kann auch einen Drehmomentbegrenzer umfassen. Generell ist es vorteilhaft, wenn die Befestigungseinrichtung als Schraubverbindung mit definiertem Anzugsmoment der Verschraubung ausgebildet ist.

Bei den erfindungsgemäßen Aufsätzen kann vorgesehen sein, dass der Laufflächenabschnitt mehrere umfängliche Segmente umfasst, die jeweils einen Teil des Umfangs der Lauffläche umfassen und die je von dem Montageabschnitt lösbar sind, und dass jedes der umfänglichen Segmente des Laufflächenabschnitts über mindestens eine Befestigungseinrichtung an dem gleichen der beweglichen Segmente des Montageabschnitts befestigbar ist. Durch die Befestigung jedes der Segmente des Laufflächenabschnitts an dem gleichen der beweglichen Segmente des Montageabschnitts kann der Gesamtkonstruktion des Aufsatzes eine zusätzliche Stabilität verliehen werden.

Bei den erfindungsgemäßen Aufsätzen kann vorgesehen sein, dass der Laufflächenabschnitt mehrere umfängliche Segmente umfasst, die jeweils einen Teil des Umfangs der Lauffläche umfassen und die je von dem Montageabschnitt lösbar sind, und dass der Montageabschnitt einteilig ausgeführt ist und jedes der umfänglichen Segmente des Laufflächenabschnitts an wenigstens zwei, vorzugsweise drei, zueinander beabstandeten Stellen über je eine Befestigungseinrichtung mit dem Montageabschnitt verbunden ist.

Bei den erfindungsgemäßen Aufsätzen, die den Montageabschnitt mit wenigstens zwei zueinander beweglichen Segmenten umfassen, kann vorgesehen sein, dass wenigstens ein, insbesondere mehrere, insbesondere jedes, Spannmittel starr mit dem Montageabschnitt verbunden ausgeführt ist. Insbesondere können die Spannmittel einstückig mit dem Montageabschnitt ausgeführt sind. Beispielsweise kann jedes der beweglichen Segmente des Montageabschnitts ein, insbesondere zwei, Spannmittel umfassen, insbesondere wobei die Segmente mit den daran befindlichen Spannmitteln als ein einstückiges Gussteil oder als ein Blechstanzteil ausgebildet sein können.

Bei den erfindungsgemäßen Aufsätzen kann vorgesehen sein, dass die Verspanneinrichtung über ein Kopplungsmittel, insbesondere in Form einer Zug- oder Gewindestange, mit dem Spannmittel gekoppelt sind, insbesondere wobei der Montageabschnitt einen Aufnahmeabschnitt für das Kopplungsmittel umfasst, insbesondere wobei der Aufnahmeabschnitt das Kopplungsmittel wenigstens entlang eines Teils seiner Erstreckung, insbesondere entlang seiner gesamten Erstreckung, nach axial außen hin bedeckt, insbesondere und in umfänglicher Richtung bedeckt, insbesondere vollumfänglich umschließt. Die Verspanneinrichtung kann insbesondere mit mehreren Spannmitteln über derartige Kopplungsmittel gekoppelt sein.

Bei den erfindungsgemäßen Aufsätzen kann vorgesehen sein, dass die Verspanneinrichtung ein Getriebe zur Umwandlung einer, insbesondere um die axiale Richtung, rotierenden Antriebsbewegung eines Betätigungselements in die translatorische Verspannbewegung aufweist, insbesondere wobei das Getriebe ein Antriebskegelrad und ein Abtriebskegelrad je Spannmittel umfasst und die gegenüber dem Montageabschnitt beweglichen Spannmittel je über ein mit dem Abtriebskegelrad gekoppeltes Kopplungsmittel, insbesondere eine Gewindestange, die in ein Gewinde an dem jeweiligen Spannmittel eingreift, mit dem Abtriebskegelrad gekoppelt sind.

Bei den erfindungsgemäßen Aufsätzen kann vorgesehen sein, dass die Lauffläche durch einen Laufbelag gebildet ist, insbesondere wobei der Laufbelag einen nach axial außen gesehen in radialer Richtung abfallenden Abschnitt aufweist, insbesondere wobei der Laufbelag Hohlräume und/oder Durchbrüche aufweist, insbesondere wobei die Durchbrüche sich in axialer Richtung durch das Material des Laufbelags erstrecken. Hierdurch kann beispielsweise ermöglicht werden, dass der Aufsatz bei Fahrzeugen mit geringem Freigang verwendet werden kann.

Insbesondere ist der Laufflächenabschnitt mit einem vergossenen Laufbelag, insbesondere aus einem gießbaren Polymer ausgeführt. Der Laufbelag ist also insbesondere an den Laufflächenabschnitt angegossen.

Der Laufbelag kann auch am Laufflächenabschnitt klemmend befestigt sein. Insbesondere ist die Klemmung derart, dass im normalen Fahrbetrieb keine Relativbewegungen zwischen Laufbelag und dem Rest des Laufflächenabschnitts stattfindet. Die Klemmung kann jedoch insbesondere derart eingestellt sein, dass bei extremen Beschleunigungen oder Extrembremsungen eine Relativbewegung zwischen Laufbelag und dem Rest des Laufflächenabschnitts stattfindet.

Bei den erfindungsgemäßen Aufsätzen kann vorgesehen sein, dass der Laufflächenabschnitt einen in radialer Richtung zur Felgenseite hin vorstehenden Tragabschnitt aufweist, auf dem ein Laufbelag, der die Lauffläche bildet, angeordnet ist. Hierdurch kann die Lauffläche des Aufsatzes näher in Richtung Fahrzeugrad angeordnet sein, was sich positiv bei Fahrzeugen mit geringem Freigang auswirken kann.

Bei den erfindungsgemäßen Aufsätzen kann vorgesehen sein, dass der Laufflächenabschnitt einen Tragabschnitt aufweist, auf dem ein Laufbelag, der die Lauffläche bildet, angeordnet ist, wobei der Tragabschnitt auf der felgenabgewandten Seite des Aufsatzes derart zurückversetzt ist, dass die felgenabgewandten Seite des Tragabschnitts höchstens 40mm, höchstens 30mm, insbesondere höchstens 20mm, insbesondere höchstens 10mm, in axialer Richtung über das Felgenhorn hinaussteht, wenn der Aufsatz in der vorgesehenen Position an der Felge befestigt ist. Hierdurch kann die Lauffläche mit entsprechend geringem axialem Überstand angeordnet sein, was sich positiv bei Fahrzeugen mit geringem Freigang auswirken kann.

Bei den erfindungsgemäßen Aufsätzen kann vorgesehen sein, dass der Laufflächenabschnitt einen Tragabschnitt aufweist, auf dem ein Laufbelag, der die Lauffläche bildet, angeordnet ist, wobei der Tragabschnitt auf der felgenzugewandten Seite des Aufsatzes in axialer Richtung zum Felgenhorn höchstens 10mm beabstandet ist, insbesondere 5mm, insbesondere 10mm, insbesondere 15mm, insbesondere 20mm, insbesondere 25mm, insbesondere 30mm, über das Felgenhorn nach axial innen übersteht. Hierdurch kann die Lauffläche mit entsprechend geringem axialem Überstand angeordnet sein, was sich positiv bei Fahrzeugen mit geringem Freigang auswirken kann.

Bei den erfindungsgemäßen Aufsätzen kann vorgesehen sein, dass der Laufflächenabschnitt von dem Montageabschnitt lösbar oder beweglich ist und in Umfangsrichtung gesehen wenigstens zwei Segmente, die jeweils einen Teil des Umfangs der Lauffläche umfassen, aufweist, wobei die Segmente voneinander lösbar oder gegenüber einander verschwenkbar oder verschiebbar sind, insbesondere wobei der Laufflächenabschnitt zwei, insbesondere genau zwei, umfängliche Segmente umfasst, die einen im Wesentlichen gleich aufgebauten Grundkörper, der insbesondere als Gussteil ausgebildet ist, umfassen oder insbesondere wobei der Laufflächenabschnitt ein Segment mit einer umfänglichen Erstreckung von mehr als 180°, insbesondere mehr als 190°, aufweist. Bei der Variante mit Segmenten des Laufflächenabschnitts mit im Wesentlichen gleich aufgebauten Grundkörpern kann die Herstellung der Segmente des Laufflächenabschnitts sehr kostengünstig realisiert werden. An den identischen Grundkörper der Segmente des Laufflächenabschnitts können unterschiedliche weitere Komponenten angebracht sein.

Bei den erfindungsgemäßen Aufsätzen kann vorgesehen sein, dass der Laufflächenabschnitt in Umfangsrichtung gesehen wenigstens zwei Segmente aufweist von denen eines mit dem Montageabschnitt fest verbunden ist und das weitere von dem Montageabschnitt lösbar ist. Das fest mit dem Montageabschnitt verbundene Segment des Laufflächenabschnitts kann insbesondere einstückig mit diesem, insbesondere als ein Gussteil, ausgebildet sein. Hierdurch kann ein einfach montierbarer Aufsatz geschaffen werden, der eine hohe strukturelle Stabilität aufweisen kann, da er wenige Verbindungsstellen umfasst.

Bei den erfindungsgemäßen Aufsätzen kann vorgesehen sein, dass der Montageabschnitt wenigstens zwei zueinander bewegliche Segmente und ein Mittelelement umfasst, wobei die Verspanneinrichtung an dem Mittelelement angeordnet ist und derart ausgebildet ist, dass die Verspannbewegung der beiden zueinander beweglichen Segmente bzgl. des Mittelelements gleich jedoch mit umgekehrter Richtung ist. Insbesondere können die beweglichen Segmente und das Mittelelement als Blechstanzteile ausgebildet sein.

Bei den erfindungsgemäßen Aufsätzen kann vorgesehen sein, dass eine Befestigungseinrichtung des Montageabschnitt an dem Mittelelement angeordnet ist, insbesondere wobei die Befestigungseinrichtung derart angeordnet und ausgebildet ist, dass die zueinander beweglichen Segmente zwischen dem Laufflächenabschnitt und dem Mittelelement klemmend verspannt sind, wenn der Laufflächenabschnitt mittels der Befestigungseinrichtung an dem Montageabschnitt befestigt ist. Hierdurch kann eine zusätzliche Stabilität des Aufsatzes erreicht werden.

Die beweglichen Segmente des Montageabschnitts besonders einfach, beispielsweise als Blechstanzteile ausgebildet sein. Die Spannmittel können durch einen umgebogenen Teil der beweglichen Segmente des Montageabschnitts geschaffen sein.

Bei den erfindungsgemäßen Aufsätzen kann vorgesehen sein, dass der Aufsatz wenigstens ein, insbesondere mehrere, Sicherungsmittel umfasst, das bzw. die in Umfangsrichtung versetzt zu den Spannmitteln angeordnet ist bzw. sind und um eine Schwenkachse, die insbesondere tangential zur Umfangsrichtung verläuft, verschwenkbar an dem Aufsatz, insbesondere dem Laufflächenabschnitt oder dem Montageabschnitt angeordnet ist bzw. sind, wobei das Sicherungsmittel einen Formschlussabschnitt umfasst, der ausgebildet ist, um durch Verschwenken des Sicherungsmittels in einen formschlüssigen Hintergriff mit dem Felgenhorn gebracht zu werden. Hierdurch kann ein zusätzliches Maß an Befestigung und Sicherung des Aufsatzes am Fahrzeugrad erreicht werden.

Vorzugsweise sind die Sicherungsmittel als Fertigteil ausgebildet. Vorzugsweise sind diese als Fertigteil ausgebildeten Sicherungsmittel an die umfänglichen Segmente des Laufflächenabschnitts angeschraubt.

Vorzugsweise umfasst der Aufsatz, insbesondere das Sicherungsmittel, ein Kontaktelement, das ausgebildet ist, um beim Anbringen des Laufflächenabschnitts an dem Montageabschnitt die Felge oder dem Montageabschnitt zu kontaktieren, wobei das Kontaktelement derart mit dem Sicherungsmittel gekoppelt ist, dass das Sicherungsmittel bei dieser Kontaktierung in formschlüssigen Hintergriff mit dem Felgenhorn einschwenkt.

Vorzugsweise umfasst das Sicherungsmittel eine Einschalung, insbesondere und ist als Fertigteil ausgebildet. Vorzugsweise umfasst das Sicherungsmittel einen Verriegelungsmechanismus, der das Sicherungsmittel, insbesondere durch ein Einrasten, insbesondere eines, insbesondere durch eine Feder, vorgespannten Bolzens, gegen ein Herausschwenken verriegelt, wenn das Sicherungsmittel mit seinem Formschlussabschnitt in formschlüssigen Hintergriff mit dem Felgenhorn steht. Vorzugsweise ist der Verriegelungsmechanismus in der Einschalung angeordnet ist. Der Verriegelungsmechanismus und das Sicherungsmittel, vorzugsweise und das Kontaktelement, können also, jedenfalls teilweise, in einer Einschalung angeordnet sein, die eine Art Gehäuse für diese Komponenten bildet. Insbesondere kann diese Einschalung bzw. dieses Gehäuse mit den darin befindlichen Komponenten einzeln zusammenbaubar sein und dann die fertig vormontierte Einheit als Fertigteil an den Aufsatz, insbesondere an den Laufflächenabschnitt, montierbar sein.

Der Verriegelungsmechanismus kann ein, bspw. über eine Feder, vorgespanntes Verriegelungsmittel, das als Bolzen ausgeführt sein kann, umfassen. Das Verriegelungsmittel kann derart ausgebildet und angeordnet sein, dass es in eine entsprechende Aufnahme an dem Sicherungsmittel einrastet, wenn das Sicherungsmittel bzw. dessen Formschlussabschnitt sich in der das Felgenhorn hintergreifenden Stellung befindet.

Das Sicherungsmittel sowie das Verriegelungsmittel können in einer Einschalung angeordnet sein. Dem Sicherungsmittel kann auch ein Kontaktelement zugeordnet sein. Das Kontaktelement kann derart mit dem Sicherungsmittel gekoppelt, dass das Sicherungsmittel bei Kontaktierung des Kontaktelements aus axialer Richtung A in die das Felgenhorn hintergreifende Stellung einschwenkt.

Die Einschalung und das Verriegelungsmittel können derart ausgebildet und zueinander angeordnet sein, dass optisch erkennbar ist, wenn das Verriegelungsmittel das Sicherungsmittel in der hinter das Felgenhorn eingeschwenkten Stellung verriegelt. Bspw. kann das Verriegelungsmittel als Bolzen ausgeführt sein, der mit seinem hinteren Ende aus der Einschalung heraus ragt, wenn das Sicherungsmittel sich nicht in der eingeschwenkten Stellung befindet. Damit bietet der Bolzen eine optische Anzeige dafür, ob das Sicherungsmittel bzw. dessen Formschlussabschnitt das Felgenhorn hintergriffen hat.

Bei den erfindungsgemäßen Aufsätzen kann vorgesehen sein, dass der Formschlussabschnitt des Sicherungsmittels einen Kontaktabschnitt umfasst, der ausgebildet ist, um das Felgenhorn auf seiner reifenzugewandten Seite zu kontaktieren, wobei der Kontaktabschnitt entsprechend der Kontur des Felgenhorns geformt ist, insbesondere wobei der Kontaktabschnitt entsprechend der Kontur des Felgenhorns einer J-Felge nach DIN 7817, geformt ist. Hierdurch kann ein flächiger Formschluss der Sicherungsmittel mit dem Felgenhorn erreicht werden, was eine gute Befestigung in axialer sowie in radialer Richtung ermöglicht.

Bei den erfindungsgemäßen Aufsätzen kann vorgesehen sein, dass der Formschlussabschnitt des Sicherungsmittels eine größere Materialdicke aufweist als der Hintergriffabschnitt des Spannmittels. Die Spannmittel können mit einer recht geringen Materialdicke ausgeführt werden, um das Einführen zwischen Felgenhorn und Reifen zu erleichtern, und die Sicherungsmittel mit einer entsprechend dicken Materialdicke, um eine sichere Befestigung des Aufsatzes in jeglichen Betriebszustand zu garantieren.

Bei den erfindungsgemäßen Aufsätzen kann vorgesehen sein, dass die Spannmittel einen Hintergriffabschnitt umfassen, der in Umfangsrichtung gekrümmt ausgebildet ist, um die umfängliche Krümmung des Felgenhorns beim Hintergreifen des Felgenhorns zu kompensieren, oder dass die Sicherungsmittel einen Formschlussabschnitt umfassen, der in Umfangsrichtung gekrümmt ausgebildet ist, um die umfängliche Krümmung des Felgenhorns beim Hintergreifen des Felgenhorns zu kompensieren.

Bei den erfindungsgemäßen Aufsätzen kann vorgesehen sein, dass die Spannmittel und/oder die Sicherungsmittel in verschiedenen radial zueinander beabstandeten Positionsstufen, die auf unterschiedliche Felgendurchmesser abgestimmt sind, an dem Aufsatz, insbesondere dem Montageabschnitt, festlegbar sind, insbesondere wobei wenigstens ein Spannmittel in den Positionsstufen in radialer Richtung translatorisch beweglich ist, jedoch in den Positionsstufen weniger weit in radialer Richtung beweglich ist als die radial zueinander beabstandeten Positionsstufen zueinander in radialer Richtung beabstandet sind. Durch die Anbringungsmöglichkeit in verschiedenen Positionsstufen kann der Aufsatz an verschiedene Felgendurchmesser in einfacher Weise angepasst werden. Dabei kann der Bewegungsweg der beweglichen Segmente des Montageabschnitts oder der radial beweglichen Spannmittel gering gehalten werden dennoch unterschiedliche Felgengrößen abgedeckt werden.

Bei den erfindungsgemäßen Aufsätzen kann vorgesehen sein, dass der Aufsatz eine Vorspannvorrichtung umfasst, über die ein Spannmittel oder einen Teilbereich des Hintergriffabschnitts eines Spannmittels nach radial innen vorgespannt ist, oder, über die eines der beweglichen Segmente des Montageabschnitts in Richtung des anderen beweglichen Segments vorgespannt ist.

Bei den erfindungsgemäßen Aufsätzen kann vorgesehen sein, dass ein Führungsabschnitt des Spannmittels, welcher den Befestigungsabschnitt des Spannmittels umfassen kann oder durch ein Teil des Befestigungsabschnitts gebildet sein kann, in einer Führungsaufnahme, die insbesondere am Montageabschnitt des Aufsatzes angeordnet ist, in radialer Richtung beweglich geführt ist. Insbesondere kann der Führungsabschnitt vollumfänglich umschlossen in der Führungsaufnahme aufgenommen sein. Spannmittel, die gegenüber dem Montageabschnitt beweglich ausgebildet sind, können so sehr präzise geführt und befestigt sein.

Die Spannmittel des Aufsatzes können, insbesondere formschlüssig, für eine Bewegung gegenüber dem Montageabschnitt in radialer Richtung mittels einer Führungseinrichtung beweglich gelagert sein. Bei der Führungseinrichtung kann beispielsweise ein Führungselement, beispielsweise ein stabartiger Vorsprung, formschlüssig in einer Führungsaufnahme, bspw. einer entsprechend komplementär zu dem Vorsprung ausgebildeten Nut, geführt sein. Dabei kann die Nut am Montageabschnitt und der Vorsprung am Spannmittel angeordnet sein oder umgekehrt.

Bei den erfindungsgemäßen Aufsätzen kann vorgesehen sein, dass der Hintergriffabschnitt und/oder die Anlagefläche wenigstens eines der Spannmittel gegenüber dem Kopplungsabschnitt schwenkbar, insbesondere über eine ein Federblech umfassende Verbindung, gelagert ist. Vorzugsweise ist das Spannmittel derart an dem Montageabschnitt geführt, dass der Hintergriffabschnitt und/oder die Anlagefläche bei der radial einwärts gerichteten Verspannbewegung des Kopplungsabschnitts nach axial einwärts bewegen, insbesondere verschwenken.

Bei den erfindungsgemäßen Aufsätzen kann vorgesehen sein, dass die Verspanneinrichtung mittig am Montageabschnitt angeordnet ist. Bei den erfindungsgemäßen Aufsätzen kann vorgesehen sein, dass sich die Kopplungsmittel von der mittig angeordneten Verspanneinrichtung radial auswärts zu den Spannmitteln erstrecken. Bei den erfindungsgemäßen Aufsätzen kann vorgesehen sein, dass das oder die Kopplungsmittel beim Durchführen der Verspannbewegung über die Verspanneinrichtung sich bezüglich des Montageabschnitts translatorisch nicht bewegt bzw. bewegen. Bei den erfindungsgemäßen Aufsätzen kann vorgesehen sein, dass das oder die Kopplungsmittel beim Durchführen der Verspannbewegung über die Verspanneinrichtung sich bezüglich des Montageabschnitts entweder translatorisch oder rotatorisch bewegt bzw. bewegen, insbesondere jedoch nicht beides.

Vorzugsweise ist der Montageabschnitt mit einem Zentralabschnitt ausgebildet, der das Betätigungselement, insbesondere und das Getriebe, der Verspanneinrichtung umfasst und bei am Fahrzeugrad angebrachtem Aufsatz im Bereich des Lochkreises des Fahrzeugrads angeordnet ist bzw. diesen wenigstens teilweise überdeckt. Vorzugsweise weist der Montageabschnitt strebenartig ausgebildete Arme auf, die sich von dem Zentralabschnitt nach radial auswärts zu den Spannmitteln erstrecken. Vorzugsweise ist der Montageabschnitt, insbesondere sind die Arme, mit Aufnahmen für das bzw. die Kopplungsmittel ausgebildet, sodass die Kopplungsmittel in dem Montageabschnitt, insbesondere in den Armen, angeordnet sind und vorzugsweise durch das Material des Montageabschnitt s, insbesondere der Arme, wenigstens nach axial außen, insbesondere auch in umfänglicher Richtung, insbesondere auch nach axial innen verdeckt sind. Hierdurch sind die Kopplungsmittel nach außen hin nicht sichtbar und auch vor mechanischen Einflüssen abgeschirmt.

Bei den erfindungsgemäßen Aufsätzen kann vorgesehen sein, dass die Verspanneinrichtung eine nach axial außen gerichtete Bewegung eines Zugelements in eine radial einwärts gerichtete Bewegung der Spannmittel wandelt. Die Verspanneinrichtung kann insbesondere derart ausgeführt sein, dass sie eine nach axial außen gerichtete Betätigungsbewegung in eine nach radial innen gerichtete Bewegung der Kopplungsabschnitte der Spannmittel umwandelt. Insbesondere kann die Verspanneinrichtung eine Spanneinheit umfassen, die über eine Gewindestange gegenüber einem Abstützelement, nach axial außen bewegbar ist, wobei das Abstützelement im Bereich des Lochkreises der Felge anordenbar ist und sich in diesem Bereich gegen die Felge abstützen kann während der Verspannbewegung.

Bei den erfindungsgemäßen Aufsätzen kann vorgesehen sein, dass der Montageabschnitt derart ausgebildet ist, dass er im am Fahrzeugrad angebrachten Zustand zum Bereich des Lochkreises des Fahrzeugrads in radialer Richtung beabstandet ist. Beispielsweise kann der Montageabschnitt kreisringförmig ausgebildet sein. Insbesondere bei einer derartigen Ausführungsform, kann die Verspanneinrichtung in Form eines in Umfangsrichtung erstreckten Elements, beispielsweise eines ringförmigen Drahtseils, dessen Radius reduzierbar ist und das mit den Spannmitteln gekoppelt ist, ausgebildet sein.

Die Spannmittel der Aufsätze können insbesondere in dem Bereich ihres Hintergriffabschnitts, der zur Kontaktierung der Felge vorgesehen ist, und/oder im Bereich ihrer Anlagefläche eine dämpfenden Oberfläche, insbesondere in Form einer Gummierung der Oberfläche, aufweisen.

Die Aufsätze können an Stellen, die zur Kontaktierung der Felge des Fahrzeugrads vorgesehen sind, eine nachgiebige Oberfläche, insbesondere in Form einer Gummierung der Oberfläche, aufweisen.

Bei den erfindungsgemäßen Aufsätzen kann vorgesehen sein, dass eines oder mehrere Spannmittel derart nach radial innen vorgespannt sind, dass sie eine Freigangstrecke gegen diese Vorspannung nach radial außen bewegbar sind. Beim Verspannen der Spannmittel überwindet die Verspanneinrichtung dann zunächst diese Freigangstrecke bevor die Spannmittel endgültig durch die Verspanneinrichtung nach radial einwärts bewegt werden. Dies kann bspw. über die weiter oben bereits erwähnte Vorspannvorrichtung implementiert sein.

Bei den erfindungsgemäßen Aufsätzen kann vorgesehen sein, dass die zueinander beweglichen Segmente des Montageabschnitts derart aufeinander zu vorgespannt sind, dass sie eine Freigangstrecke gegen diese Vorspannung voneinander weg bewegbar sind. Beim Verspannen der Spannmittel überwindet die Verspanneinrichtung dann zunächst diese Freigangstrecke bevor die zueinander beweglichen Segmente des Montageabschnitts endgültig durch die Verspanneinrichtung nach aufeinander zu bewegt werden.

Bei den erfindungsgemäßen Aufsätzen kann vorgesehen sein, dass der Aufsatz, vorzugsweise der Laufflächenabschnitt, Stützflächen zur Kontaktierung des Felgenhorns von axial außen umfasst, insbesondere die an Stützkörpern angeordnet sind, die wiederum am Laufflächenabschnitt angebracht sind. Bei den erfindungsgemäßen Aufsätzen kann auch vorgesehen sein, dass die Stützflächen einstückig mit dem Laufflächenabschnitt ausgebildet sind bzw. durch einen Teil des Laufflächenabschnitts gebildet sind. Die Stützflächen zur Kontaktierung des Felgenhorns können insbesondere zu den Spannmitteln in umfänglicher Richtung beabstandet sein. Die Stützflächen zur Kontaktierung des Felgenhorns können bei Aufsätzen mit Spannmitteln mit Anlagefläche oder ohne Anlagefläche vorgesehen sein.

Vorzugsweise beschränkt sich der Kontakt des Aufsatzes mit der Felge auf die Stützflächen und/oder die Anlageflächen der Spannmittel. Mit anderen Worten bei am Fahrzeugrad angebrachtem Aufsatz sind außer den Anlageflächen und/oder den Stützflächen sämtliche Teile des Aufsatzes zur Felge beabstandet. Vorzugsweise weisen die Stützflächen und oder die Anlageflächen der Spannmittel eine nachgiebige Oberfläche, vorzugsweise in Form einer, insbesondere Kunststoff umfassenden, Beschichtung, auf.

Bei den erfindungsgemäßen Aufsätzen kann vorgesehen sein, dass das Spannmittel einen Hintergriffabschnitt umfasst, der derart ausgebildet ist, dass, ggf. wenn er sich in der ersten Schwenkstellung befindet, das Material des Hintergriffabschnitts, welches axial innen von einer Referenzebene liegt, vollständig in einem gedachten Korridor liegt, wobei die Referenzebene 4, 6 oder 7 mm zu einer Anlageebene, die mit einer Anlagefläche des Aufsatzes zusammenfällt, beabstandet ist, wobei die Anlageebene des Aufsatzes den axial äußeren Kontaktpunkt, der bspw. durch eine Stützfläche gebildet ist, des Felgenhorns mit dem Aufsatz umfasst, und wobei der gedachte Korridor eine Breite von 12mm, insbesondere 10mm, insbesondere 9mm, insbesondere 8mm, aufweist und seine Mittelachse in einem Winkel von wenigstens 42°, insbesondere wenigstens 45°, insbesondere wenigstens 47°, insbesondere wenigstens 49°, insbesondere wenigstens 51°, insbesondere wenigstens 53°, insbesondere wenigstens 55°, und/oder höchstens 72°, insbesondere höchstens 69°, insbesondere höchstens 67°, insbesondere höchstens 65°, insbesondere höchstens 63°, insbesondere höchstens 61°, insbesondere höchstens 59°, insbesondere in einem Winkel von 57°, zur radialen Richtung verläuft, und wobei die Breite und der Winkel der Mittelachse bezogen auf einen Blick auf eine in radialer und axialer Richtung erstreckten Ebene definiert sind.

Bei den erfindungsgemäßen Aufsätzen kann vorgesehen sein, dass die Mittelachse des gedachten Korridors beim Blick auf eine in radialer und axialer Richtung erstreckten Ebene durch den Materialmittelpunkt des Hintergriffabschnitts des Spannmittels in dessen Schnitt mit der Referenzebene verläuft und/oder dass die Mittelachse des gedachten Korridors beim Blick auf die in radialer und axialer Richtung erstreckten Ebene durch den Materialmittelpunkt des Hintergriffabschnitts in dessen Schnitt mit einer zur Referenzebene parallelen Ebene, in der das axial innere Ende des Hintergriffabschnitts liegt, verläuft.

Die angegebenen Geometrien des Spannmittels haben sich als vorteilhafte Kompromisslösung zwischen Stabilität des Spannmittels bzw. dessen Hintergriffabschnitt und einer leichten Einführbarkeit des Hintergriffabschnitts zwischen Felgenhorn und Reifen herausgestellt.

Bei den erfindungsgemäßen Aufsätzen kann vorgesehen sein, dass wenn der Laufflächenabschnitt in seiner endgültigen Position am Fahrzeugrad angebracht ist, also über die Befestigungseinrichtungen zum Montageabschnitt bzw. zur Felge hinbewegt ist, die Stützflächen in einer Ebene mit den Anlageflächen der Spannmittel liegen und das Felgenhorn kontaktieren. Hierdurch erhält der Laufflächenabschnitt zusätzliche Abstützung am Felgenhorn.

Bei den erfindungsgemäßen Aufsätzen kann vorgesehen sein, dass der Aufsatz Befestigungseinrichtungen umfasst, die an dem Spannmittel angeordnet sind und zusätzlich Befestigungseinrichtungen umfasst, die an dem Montageabschnitt und zu den Spannmitteln beabstandet angeordnet sind.

Der Laufflächenabschnitt kann insbesondere mit genau zwei umfänglichen Segmenten ausgebildet sein, die insbesondere beide eine umfängliche Erstreckung von 180° aufweisen, insbesondere im Wesentlichen baugleich sind, insbesondere identische Grundelemente, die als Gussteile ausgebildet sind. Insbesondere sind an jedem dieser beiden umfänglichen Segmente genau wenigstens ein, insbesondere zwei Sicherungsmittel angeordnet.

Die Verspanneinrichtung kann von dem Montageabschnitt abnehmbar sein. Vorzugsweise ist die Verspanneinrichtung jedoch fest in den Montageabschnitt integriert.

Bei den erfindungsgemäßen Aufsätzen kann vorgesehen sein, dass eine, insbesondere mechanische, Indikationseinrichtung vorgesehen ist, die einem Spannmittel zugeordnet ist und über die erkennbar ist, ob das Spannmittel in Hintergriff, vorzugsweise ob das Spannmittel in der vorgesehenen Stellung in Hintergriff, mit dem Felgenhorn steht, insbesondere wobei die Indikationseinrichtung ein federgespanntes Element umfasst, das im Bereich des Hintergriffabschnitts derart in die vorgesehene Position des Felgenhorns gespannt ist, dass es beim Hintergreifen des Felgenhorns durch das Spannmittel von dem Felgenhorn aus dieser Position gedrängt wird und vorzugsweise auf der axial und/oder radial außen liegenden Seite des Spannmittels über dieses hinaussteht, so dass aus dieser Richtung erkennbar ist, ob das Felgenhorn wie vorgesehen hintergriffen ist. Die Indikationseinrichtung bzw. deren federgespanntes Element kann auch in umfänglicher Richtung versetzt zu dem Spannmittel angeordnet sein. Die Indikationseinrichtung bzw. deren federgespanntes Element kann jedoch auch in das Spannmittel integriert sein.

Das federgespannte Element der Indikationseinrichtung kann sich insbesondere durch das Material des Spannmittels erstrecken. Insbesondere kann die Verspannrichtung des federgespannten Elements parallel zum Verlauf des Halteabschnitts des Spannmittels sein.

### Figurenbeschreibung

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden.

Es zeigen:
Figur 1 ein Fahrzeugrad beim Blick in einer axialen Richtung;
Figur 2 eine Schnittdarstellung der Felge des Fahrzeugrads aus Figur 1;
Figur 3 eine erste Ausführungsform eines erfindungsgemäßen Aufsatzes in verschiedenen Darstellungen;
Figur 4 einen Montageabschnitt einer alternativen Ausführungsform eines erfindungsgemäßen Aufsatzes in verschiedenen Darstellungen;
Figur 5 ein erfindungsgemäßes Spannmittel;
Figur 6 ein weiteres erfindungsgemäßes Spannmittel;
Figur 7 eine weitere Ausführungsform eines erfindungsgemäßen Aufsatzes in verschiedenen Darstellungen;
Figur 8 eine weitere Ausführungsform eines erfindungsgemäßen Aufsatzes in verschiedenen Darstellungen;
Figur 9 eine weitere Ausführungsform eines erfindungsgemäßen Aufsatzes in verschiedenen Darstellungen;
Figur 10 eine weitere Ausführungsform eines erfindungsgemäßen Aufsatzes in verschiedenen Darstellungen;
Figur 11 eine weitere Ausführungsform eines erfindungsgemäßen Aufsatzes in verschiedenen Darstellungen;
Figur 12 die Ausführungsform aus Figur 12 in verschiedenen Darstellungen;
Figur 13 eine weitere Ausführungsform eines erfindungsgemäßen Aufsatzes in verschiedenen Darstellungen;
Figur 14 eine weitere Ausführungsform eines erfindungsgemäßen Aufsatzes in verschiedenen Darstellungen;
Figur 15 einen Montageabschnitt einer alternativen Ausführungsform eines erfindungsgemäßen Aufsatzes;
Figur 16 einen Montageabschnitt einer alternativen Ausführungsform eines erfindungsgemäßen Aufsatzes;

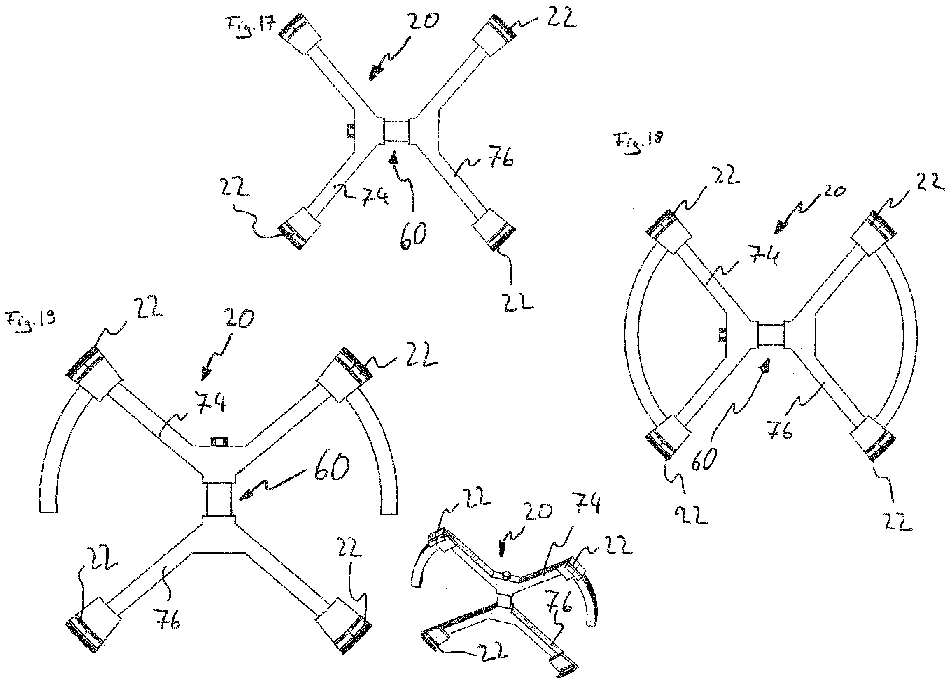

Figur 17 einen Montageabschnitt einer alternativen Ausführungsform eines erfindungsgemäßen Aufsatzes;
Figur 18 einen Montageabschnitt einer alternativen Ausführungsform eines erfindungsgemäßen Aufsatzes;
Figur 19 einen Montageabschnitt einer alternativen Ausführungsform eines erfindungsgemäßen Aufsatzes in verschiedenen Darstellungen;
Figur 20 einen Montageabschnitt einer alternativen Ausführungsform eines erfindungsgemäßen Aufsatzes in verschiedenen Darstellungen;
Figur 21 einen Montageabschnitt einer alternativen Ausführungsform eines erfindungsgemäßen Aufsatzes in verschiedenen Darstellungen;
Figur 22 eine weitere Ausführungsform eines erfindungsgemäßen Aufsatzes in verschiedenen Darstellungen;
Figur 23 eine weitere Ausführungsform eines erfindungsgemäßen Aufsatzes in verschiedenen Darstellungen;
Figur 24 eine weitere Ausführungsform eines erfindungsgemäßen Aufsatzes in verschiedenen Darstellungen;
Figur 25 eine weitere Ausführungsform eines erfindungsgemäßen Aufsatzes in verschiedenen Darstellungen;
Figur 26 eine weitere Ausführungsform eines erfindungsgemäßen Aufsatzes in verschiedenen Darstellungen;
Figur 27 ein weiteres erfindungsgemäßes Spannmittel;
Figur 28 ein weiteres erfindungsgemäßes Spannmittel;
Figur 29 ein Sicherungsmittel;
Figur 30 das Sicherungsmittel aus Figur 29 in einer verschwenkten Stellung;
Figur 31 Details eines erfindungsgemäßen Spannmittels;
Figur 32 Details eines weiteren Spannmittels, welches nicht unter den Schutzbereich der beanspruchten Erfindung fällt;
Figur 33 einen Montageabschnitt einer alternativen Ausführungsform eines erfindungsgemäßen Aufsatzes in verschiedenen Darstellungen;
Figur 34 den Montageabschnitt aus Figur 33 in verschiedenen Darstellungen;
Figur 35 eine Vorspannvorrichtung;
Figur 36 ein Detail eines Montageabschnitts eines erfindungsgemäßen Aufsatzes;
Figur 37 einen Montageabschnitt einer alternativen Ausführungsform eines erfindungsgemäßen Aufsatzes;
Figur 38 einen Montageabschnitt einer alternativen Ausführungsform eines erfindungsgemäßen Aufsatzes;
Figur 39 einen Montageabschnitt einer alternativen Ausführungsform eines erfindungsgemäßen Aufsatzes;
Figur 40 Details eines weiteren Spannmittels, welches nicht unter den Schutzbereich der beanspruchten Erfindung fällt;
Figur 41 einen Montageabschnitt einer alternativen Ausführungsform eines erfindungsgemäßen Aufsatzes;
Figur 42 einen Montageabschnitt einer alternativen Ausführungsform eines erfindungsgemäßen Aufsatzes;
Figur 43 einen Montageabschnitt einer alternativen Ausführungsform eines erfindungsgemäßen Aufsatzes in verschiedenen Darstellungen;
Figur 44 einen Montageabschnitt einer alternativen Ausführungsform eines erfindungsgemäßen Aufsatzes in verschiedenen Darstellungen;
Figur 45 einen Montageabschnitt einer alternativen Ausführungsform eines erfindungsgemäßen Aufsatzes in verschiedenen Darstellungen;
Figur 46 einen Montageabschnitt einer alternativen Ausführungsform eines erfindungsgemäßen Aufsatzes in verschiedenen Darstellungen;
Figur 47 einen Aufsatz einer alternativen Ausführungsform in verschiedenen Darstellungen;
Figur 48 einen Montageabschnitt einer alternativen Ausführungsform eines erfindungsgemäßen Aufsatzes;
Figur 49 Details eines Spannmittels, welches nicht unter den Schutzbereich der beanspruchten Erfindung fällt;
Figur 50 Details eines weiteren erfindungsgemäßen Spannmittels;
Figur 51 einen Laufflächenabschnitt einer alternativen Ausführungsform eines erfindungsgemäßen Aufsatzes;
Figur 52 einen Montageabschnitt einer alternativen Ausführungsform eines erfindungsgemäßen Aufsatzes;
Figur 53 Details eines weiteren erfindungsgemäßen Spannmittels; und
Figur 54 einen Aufsatz einer alternativen Ausführungsform in verschiedenen Darstellungen.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

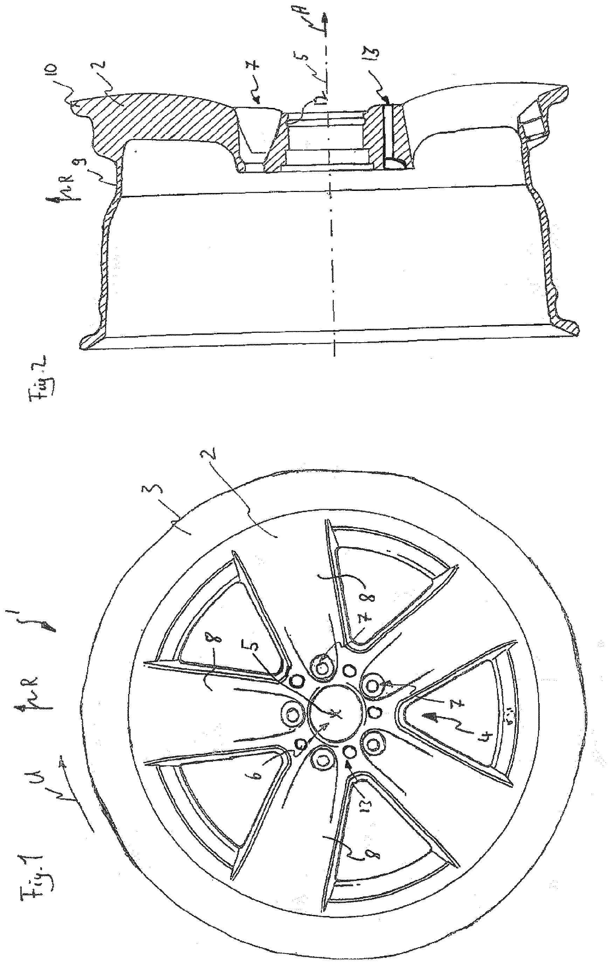

Figur 1 zeigt in schematischer Darstellung ein Fahrzeugrad 1. Das Fahrzeugrad 1 umfasst eine Felge 2 und einen auf der Felge 2 angebrachten Reifen 3. Die Felge 2 ist in Figur 2 einzeln ohne den Reifen 3 gezeigt. Eine Umfangsrichtung U ist durch einen Pfeil mit dem Bezugszeichen U dargestellt. Eine axiale Richtung A ist durch einen Pfeil mit dem Bezugszeichen A dargestellt (Figur 2). Der Pfeil ist nach axial außen gerichtet. Eine radiale Richtung R ist durch einen Pfeil, der nach radial außen gerichtet ist, mit dem Bezugszeichen R dargestellt. Radial innenliegend umfasst die Felge 2 einen Lochkreis 4 des Fahrzeugrads 1. Im Zentrum des Lochkreises 4 ist um eine entlang der axialen Richtung A verlaufende Drehachse 5 des Fahrzeugrads 1 eine sogenannte Mittenöffnung 6, die teilweise auch als Nabenbohrung oder Mittellochzentrierung bezeichnet wird, angeordnet. Der Lochkreis 4 umfasst vorliegend fünf Schraubenlöcher 7, von denen zwei mit einem Bezugszeichen versehen sind. Bei dem vorliegenden Fahrzeugrad 1 erstrecken sich fünf Speichen 8 vom Bereich des Lochkreises 4 nach radial außen.

Die Felge 2 umfasst ein Felgenbett 9 und ein Felgenhorn 10 und die Mittenöffnung 6 weist eine vertiefte umlaufende Nut 12 auf. Die Felge 2 weist mehrere Öffnungen 13 auf, die im Bereich des Lochkreises 4 angeordnet sind. Die Öffnungen 13 sind zu den Schraubenlöchern 7, also Löchern 7, die zur Aufnahme von Radschrauben bzw. Stehbolzen vorgesehen sind, und zu der Mittenöffnungen 6 der Felge 2, beabstandet in der Felge 2 angeordnet. Die Öffnungen 13 können, bspw. als Polykontrollbohrungen ausgeführt sein, über die ein Achsspiel der Achse des Fahrzeugrads 1 gemessen werden kann.

Hat der Reifen 3 des Fahrzeugrads 1 ein Loch, so entweicht die im Reifen befindliche Luft und die Reifenfunktion des Fahrzeugrades 1 ist eingeschränkt. Um in einem solchen Fall den Fahrbetrieb weiterhin zu ermöglichen, kann ein erfindungsgemäßer Aufsatz 14 verwendet werden.

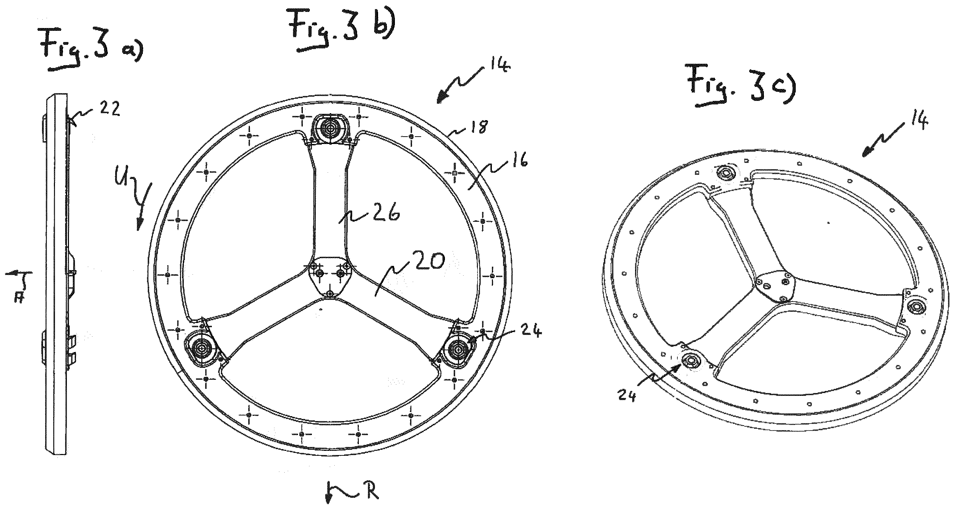

Ein Beispiel eines derartigen erfindungsgemäßen Aufsatzes ist in Figur 3 gezeigt. Der Aufsatz 14 ist mit einem Laufflächenabschnitt 16, der eine Lauffläche 18 des Aufsatzes 14 umfasst, und mit einem Montageabschnitt 20, der bei der Montage des Aufsatzes 14 radial innenliegend von der Lauffläche 18 angeordnet ist, ausgebildet.

Auf der axial innen liegenden Seite des Aufsatzes sind Spannmittel 22 angeordnet.

Der Laufflächenabschnitt 16 ist über mehrere Befestigungseinrichtungen 24 am Montageabschnitt 20 befestigbar. Die Befestigungseinrichtungen 24 sind vorliegend als Schraubenbefestigungen 24 ausgebildet.

Der Montageabschnitt 20 ist vorliegend sternartig mit drei jeweils radial auswärtslaufenden Streben 26 ausgebildet. Vorliegend ist an jeder dieser Streben eine der Befestigungseinrichtungen 24 angeordnet.

Der Laufflächenabschnitt 16 ist bei der vorliegenden Ausführungsform einstückig ausgebildet. Im Sinne der Erfindung kann der Laufflächenabschnitt 16 jedoch mehrteilig ausgebildet sein. Hierauf wird später noch im Detail eingegangen.

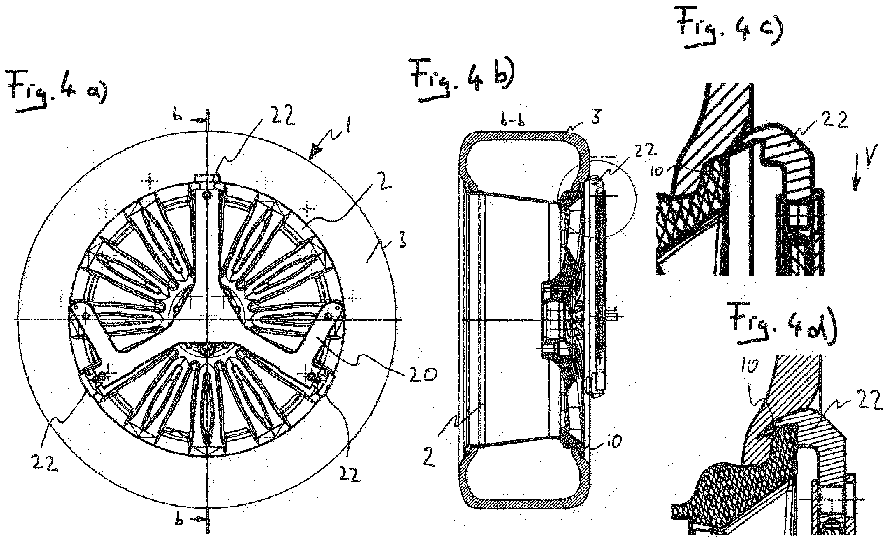

Ein weiteres Beispiel eines erfindungsgemäßen Aufsatzes ist in Figur 4 gezeigt, wobei lediglich der Montageabschnitt 20 beim Anbringen am Fahrzeugrad 1 dargestellt ist.

Der Montageabschnitt 20 wird in der in Figur 4 gezeigten Stellung an der Felge 2 angesetzt, sodass die axial innen liegenden Enden der Spannmittel 22 gerade am Felgenhorn 10 aufliegen (wie in Figur 4 c) gezeigt). Die Spannmittel 22 werden dann in einer Verspannbewegung V nach radial innen bewegt.

Bei der vorliegenden Ausführungsform sind alle drei Spannmittel 22 in der Verspannbewegung V relativ zu dem Montageabschnitt 20 gleichförmig und zueinander bewegungsgekoppelt nach radial innen bewegbar. Dabei verläuft bei der vorliegenden Ausführungsform die Verspannbewegung V der Spannmittel 22 bezüglich des Montageabschnitts 20 rein translatorisch und ausschließlich nach radial innen gerichtet.

Durch die Form der Spannmittel 22 gleiten diese während der Verspannbewegung in Hintergriff mit dem Felgenhorn 10 (wie in Figur 4 d) gezeigt) und ziehen den Montageabschnitt 20 dabei in axialer Richtung A zur Felge 2 hin.

Im Folgenden werden nun zunächst die erfindungsgemäßen Spannmitteln 22 erläutert, die bspw. auch in dem Aufsatz 14 von Figur 4 verwendet werden.

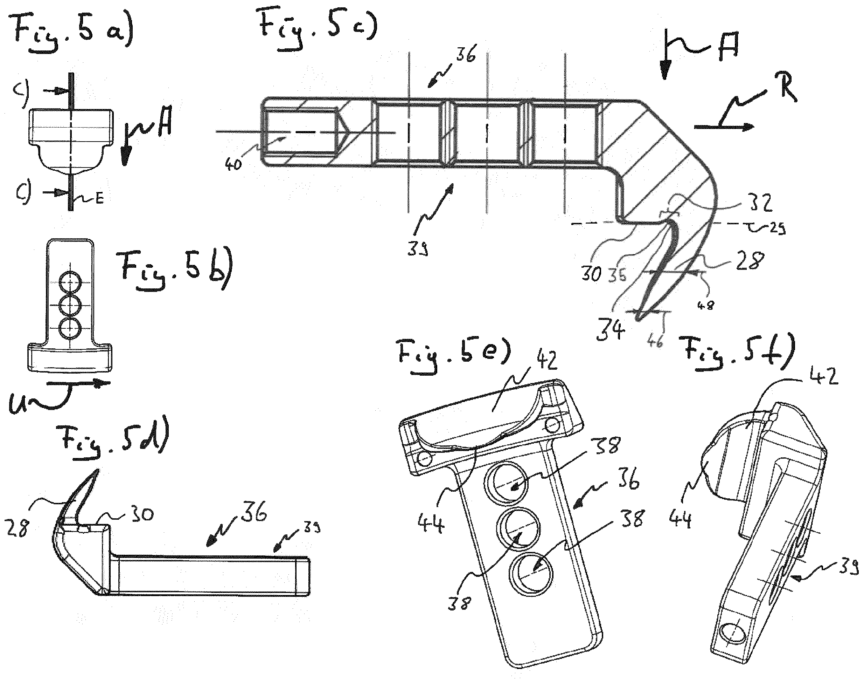

Ein derartiges Spannmittel 22 ist in Figur 5 in verschiedenen Ansichten im Detail gezeigt.

Das Spannmittel 22 ist zum Verspannen eines Aufsatzes 14 an einer Felge 2 eines Fahrzeugrads 1 ausgebildet. Das Spannmittel 22 weist einen Hintergriffabschnitt 28 auf. Der Hintergriffabschnitt 28 ist in einem Schnitt durch eine in radialer Richtung R und axialer Richtung A erstreckten Schnittebene E (Blick entlang der Pfeile c)-c)), wie er in Figur 5c) gezeigt ist, hakenartig in axialer Richtung A abragend und nach radial innen verlaufend ausgebildet. Der Hintergriffabschnitt 28 dient zum formschlüssigen Hintergreifen des Felgenhorns 10.

Der Hintergriffabschnitt 28 geht in eine Anlagefläche 30, die vorliegend in einer in radialer und umfänglicher Richtung erstreckten Ebene 29 liegt, über. Die Anlagefläche 30 ist ausgebildet und angeordnet, um das Felgenhorn 10 von axial außen zu kontaktieren.

Der Hintergriffabschnitt 28 geht in die Anlagefläche 30 in einem Übergangsbereich 32 über. Die Oberfläche 34 des Übergangsbereichs 32 zwischen dem Hintergriffabschnitt 28 und der Anlagefläche 30 weist einen zurückversetzten Abschnitt 35 auf, der in axialer Richtung A gegenüber der Anlagefläche 30 nach axial außen versetzt angeordnet ist. Die Anlagefläche 30 erlaubt es, dass das Spannmittel 22 in genau definierter Position am Felgenhorn 10 anliegt, wenn der Hintergriffabschnitt 28 das Felgenhorn 10 hintergreift. Dies ist insbesondere gegenüber Spannmitteln 22 vorteilhaft, bei denen das Felgenhorn 10 in einem gekrümmten Abschnitt aufgenommen wird. Bei derartigen Spannmittel 22 kann sich das Felgenhorn 10 bei Belastung in axialer Richtung gegenüber dem Spannmittel 11 hin und her bewegen. Durch eine derartige Bewegung kann das Felgenhorn 10 beschädigt werden und zum anderen sind auch die Spannmittel 22 einer höheren Belastung ausgesetzt. Dies wird durch das erfindungsgemäße Spannmittel 22 mit der Anlagefläche 30 verhindert.

Das Spannmittel 22 weist einen Befestigungsabschnitt 36 zur Verbindung des Spannmittels 22 mit dem Aufsatz 14 auf. Der Befestigungsabschnitt 36 ist vorliegend radial innenliegend von dem Hintergriffabschnitt 28 und von der Anlagefläche 30 angeordnet. Der Befestigungsabschnitt 36 weist mehrere spannmittelseitigen Befestigungseinrichtungen 38, die vorliegend als Schraubenaufnahmen 38 ausgebildet sind, auf.

Die Befestigungseinrichtungen 38 sind ausgebildet und angeordnet, um das Spannmittel 22 über den Befestigungsabschnitt 36, im Fall der als Schraubenaufnahmen 38 ausgebildeten Befestigungseinrichtungen 38 mittels einer Schraube, an dem Aufsatz 14 in axialer Richtung A klemmend gegen ein Spiel zu sichern. Die Spannmittel 22 können also über den Befestigungsabschnitt 36 im vorliegenden Beispiel quasi gegen den Aufsatz 14 in axialer Richtung verschraubt werden.

Das Spannmittel 22 weist einen Führungsabschnitt 39 auf, der vorliegend durch den Befestigungsabschnitt 36 gebildet ist. Der Befestigungsabschnitt 36 ist angeordnet und ausgebildet, um in einer Führungsaufnahme, die insbesondere am Montageabschnitt des Aufsatzes angeordnet ist, in radialer Richtung beweglich geführt aufgenommen zu werden.

Das Spannmittel 22 weist vorliegend noch eine Kopplungseinrichtung 40, die als Aufnahme 40 für ein Kopplungsmittel, vorliegend eine Gewindestange, ausgebildet ist, auf. Die Kopplungseinrichtung 40 ist allgemein ausgebildet, um das Spannmittel 22, insbesondere über das Kopplungsmittel, mit einer Verspanneinrichtung des Aufsatzes 14 zu koppeln. Auf die Verspanneinrichtung wird später noch im Detail eingegangen.

Der Hintergriffabschnitt 28 des Spannmittels 22 weist beim Blick nach radial innen, einen Halteabschnitt 42, der zur Aufnahme von Spannkräften ausgebildet ist, und einen Einführabschnitt 44, der ausgebildet ist, um ein Einfahren des Hintergriffabschnitts 28 zwischen Felgenhorn 10 und der am Felgenhorn 10 anliegenden Reifenseitenwand zu ermöglichen, auf. Der Einführabschnitt 44 ist dabei axial innen gegenüber dem Halteabschnitt 42 angeordnet. Der Halteabschnitt 42 ist in Umfangsrichtung U weiter erstreckt ist als der Einführabschnitt 44.

Die Materialdicke 46 des Einführabschnitts 44 ist vorliegend geringer als die Materialdicke 48 des Halteabschnitts 42. Der Einführabschnitt 44 weist überdies eine nach axial innenliegend, kontinuierlich abnehmende Materialdicke 46 auf. Der Einführabschnitt 44 läuft bezüglich seiner Materialdicke also quasi spitz nach axial innen liegend zu. Dies erleichtert das Einführen zwischen Felgenhorn 10 und Reifen 3.

In der vorliegenden Ausführungsform sind sowohl der Halteabschnitt 42 als auch der Einführabschnitt 44 sich nach axial innen in ihrer umfänglichen Erstreckung verjüngend ausgebildet. Der Halteabschnitt 42 und der Einführabschnitt 44 verjüngen sich nach axial innen hin in ihrer umfänglichen Erstreckung jeweils in einer abgerundeten Form.

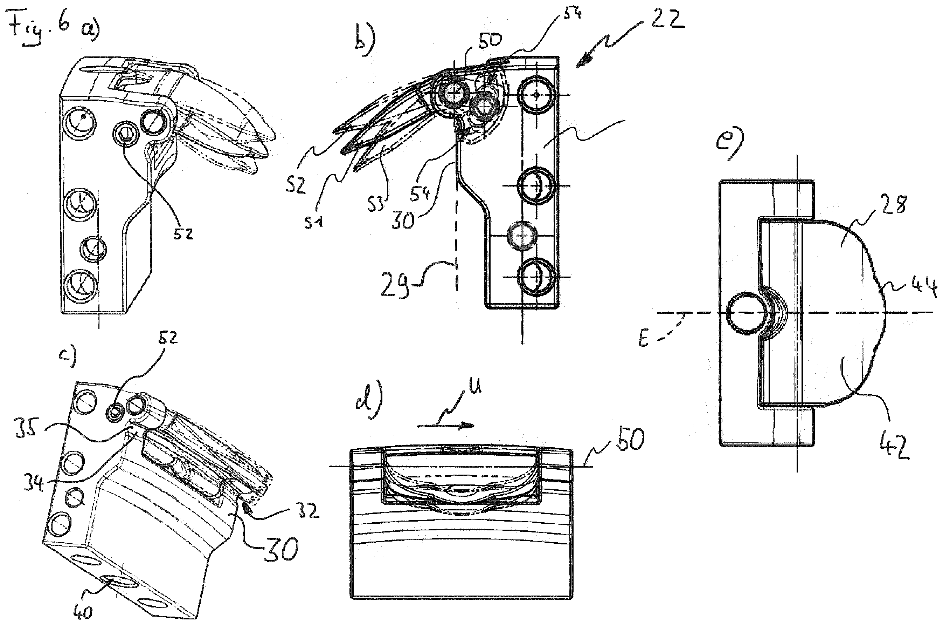

In Figur 6 ist ein weiteres erfindungsgemäßes Spannmittel 22 gezeigt. Das in Figur 6 gezeigte Spannmittel 22 weißt ebenso einen hakenartig ausgebildeten Hintergriffabschnitt 28 zum formschlüssigen Hintergreifen des Felgenhorns 10 auf. Der Hintergriffabschnitt 28 des Spannmittels 22 aus Figur 6 ist um eine Achse 50, die tangential zur Umfangsrichtung U verläuft, gegenüber dem übrigen Spannmittel 22 verschwenkbar.

Der Hintergriffabschnitt 28 ist in wenigstens einer ersten Stellung S1 und einer zur ersten Stellung S1 um die Achse 50 verschwenkten zweiten Stellung S2 sowie in einer um die Achse 50 verschwenkten dritten Stellung S3, durch eine formschlüssige Arretierung positionierbar. Der Hintergriffabschnitt 28 kann jedoch auch durch eine kraftschlüssige Verspannung positionierbar sein. Neben den 3 gezeigten Stellungen kann der Hintergriffabschnitt 28 der gezeigten Ausführungsform noch in 2 weiteren Stellungen arretierbar. Die formschlüssige Arretierung wird im vorliegenden Beispiel durch ein Arretierungsmittel 52, das im vorliegenden Fall als Madenschraube 52 ausgeführt ist, bewirkt. Das Arretierungsmittel 52 bzw. die Madenschraube 52 greift in eine entsprechende Aufnahme 54 an dem schwenkbaren Hintergriffabschnitt 28 ein. Die fünf Aufnahmen 54 sind in Figur 6b), in der ein Grundkörper 56 des Spannmittels 22 teilweise transparent dargestellt ist, sichtbar.

In der vorliegenden Ausführungsform ist der Hintergriffabschnitt 28 in der ersten Stellung S1 in allen 4 weiteren arretierbaren Stellungen in einem Schnitt durch eine in radialer und axialer Richtung erstreckten Schnittebene E in axialer Richtung abragend und nach radial innen verlaufend hakenartig ausgebildet.

Das Spannmittel 22 aus Figur 6 weist ebenso die Anlagefläche 30 auf. Das Spannmittel 22 aus Figur 6 weist vorliegend auch die Kopplungseinrichtung 40, die als Aufnahme 40 für ein Kopplungsmittel, vorliegend eine Gewindestange, ausgebildet ist, auf.

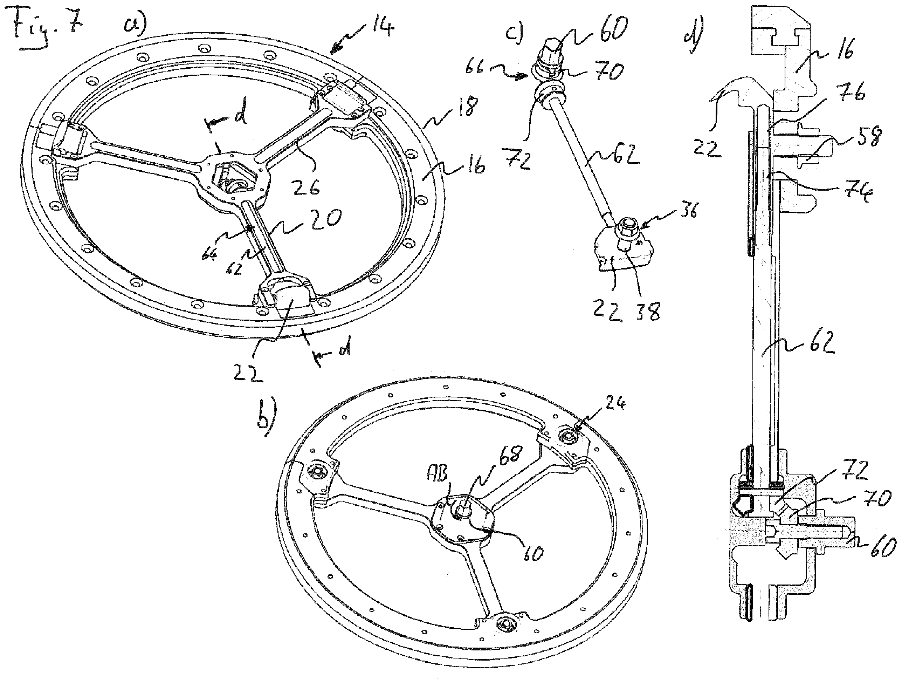

Figur 7 zeigt eine weitere Ausführungsform eines erfindungsgemäßen Aufsatzes 14. Der Aufsatz 14 umfasst einen Montageabschnitt 20 mit drei in Umfangsrichtung gleich verteilten Spannmitteln 22. An dem Montageabschnitt 20 ist der Laufflächenabschnitt 16 angebracht. Die Spannmittel 22 sind jeweils mit einem Befestigungsabschnitt 36 versehen. Befestigungsabschnitt 36 umfasst jeweils eine Befestigungseinrichtung 38, vorliegend in Form eines nach axial außen abstehenden Gewindebolzens.

Mittels einem Laufflächenabschnitt seitigen Teil 58 der Befestigungseinrichtung 38, der als Schraubenmutter 58 ausgeführt ist, kann der Laufflächenabschnitt 16 an dem Spannmittel 22 und damit an dem Montageabschnitt 20 fest fixiert werden. Dabei ist bei dieser Befestigung der Montageabschnitt zwischen Laufflächenabschnitt und Spannmittel verklemmbar. Hierdurch ist stets ein spielfreier Kontakt zwischen dem Laufflächenabschnitt 16 und dem Spannmittel 22 gewährleistet. Das Spannmittel 22 wiederum liegt in genau definierter Position mit seiner Anlagefläche 30 am Felgenhorn 10 von axial außen an. Hierdurch ist eine genaue Positionierung und ein spielfreier Halt des Laufflächenabschnitts 16 an der Felge 2 gewährleistet.

Der Aufsatz weist eine, vorliegend zentral angeordnete, Verspanneinrichtung 60 auf. Die Verspanneinrichtung 60 ist über ein Kopplungsmittel 62 mit dem Spannmittel 22 gekoppelt. Dies ist in Figur 7c in Einzeldarstellung gezeigt.

Der Montageabschnitt 20 weist einen Aufnahmeabschnitt 64 für das Kopplungsmittel 62 auf. Der Aufnahmeabschnitt 64 ist dabei derart ausgebildet und angeordnet, dass das Kopplungsmittel 62 entlang seiner gesamten Erstreckung nach axial außen hin bedeckt ist.

Vorliegend ist das Kopplungsmittel 62 auch in umfänglicher Richtung U jeweils durch die Wand des Aufnahmeabschnitts 64 bedeckt. Nach axial innen hin ist der Aufnahmeabschnitt 64 offen. Die Verspanneinrichtung 60 umfasst ein Getriebe 66. Das Getriebe 66 dient der Umwandlung einer um die axiale Richtung A rotierenden Antriebsbewegung, welche durch den gekrümmten Pfeil AB dargestellt ist, in die translatorische Verspannbewegung umzuwandeln. Die Antriebsbewegung AB wird dabei auf ein Betätigungselement 68, das vorliegend als Sechskantbolzen ausgebildet ist ausgeübt. An dem Betätigungselement 68 kann ein Schraubenschlüssel angesetzt werden und die Antriebsbewegung AB ausgeübt werden. Die rotierende Antriebsbewegung AB wird dann im vorliegenden Fall über ein Antriebskegelrad 70 auf ein Abtriebskegelrad 72 übertragen, welches mit dem Kopplungsmittel 62, das vorliegend als Gewindestange 62 ausgeführt ist, übertragen.

Die Gewindestange 62 weist an ihrem spannmittelseitigen Ende ein Gewinde 74 auf, das in ein entsprechendes Gegengewinde 76 an dem Spannmittel 22 eingreift. Durch die Rotation des Kopplungsmittels bzw. der Gewindestange 62 schraubt sich das Gewinde 74 an der Gewindestange 62 in das Gewinde 76 an dem Spannmittel 22. Hierdurch wird das Spannmittel 22 nach radial innen bewegt, während die Gewindestange 62 gegenüber dem Montageabschnitt 20 ortsfest bleibt und lediglich rotiert.

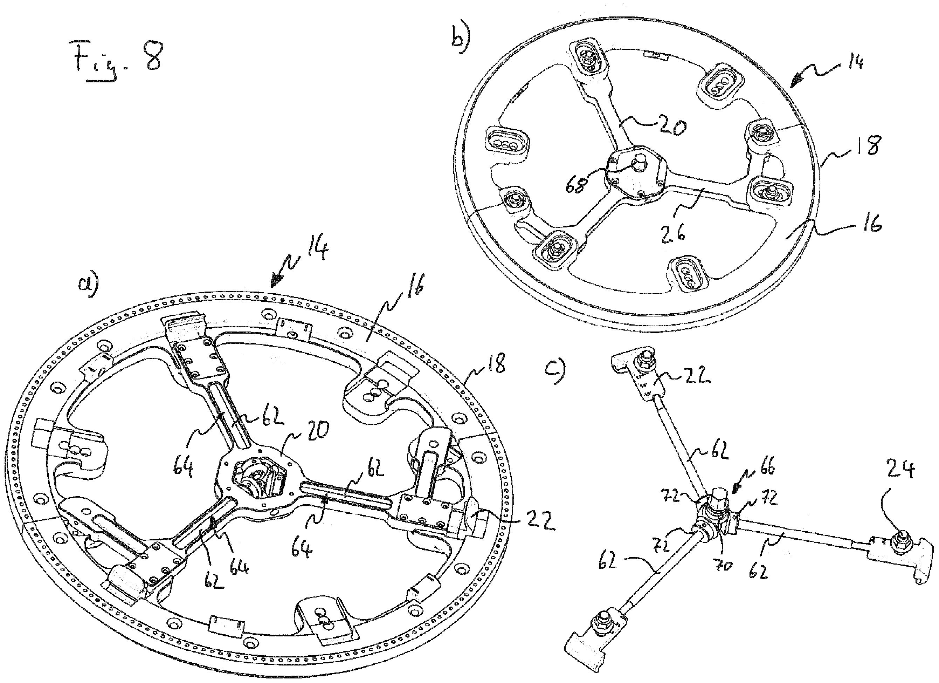

Im Beispiel von Figur 7 ist lediglich eines der Spannmittel 22 über die Verspanneinrichtung 60 bewegbar. Im Beispiel von Figur 8 ist eine alternative Ausführungsform des Aufsatzes 14 gezeigt, wobei bei dieser Ausführungsform alle drei Spannmittel 22 über jeweils ein Kopplungsmittel 62 mit einem Abtriebskegelrad 72 mit einem zentralen Antriebskegelrad 70 verbunden sind.

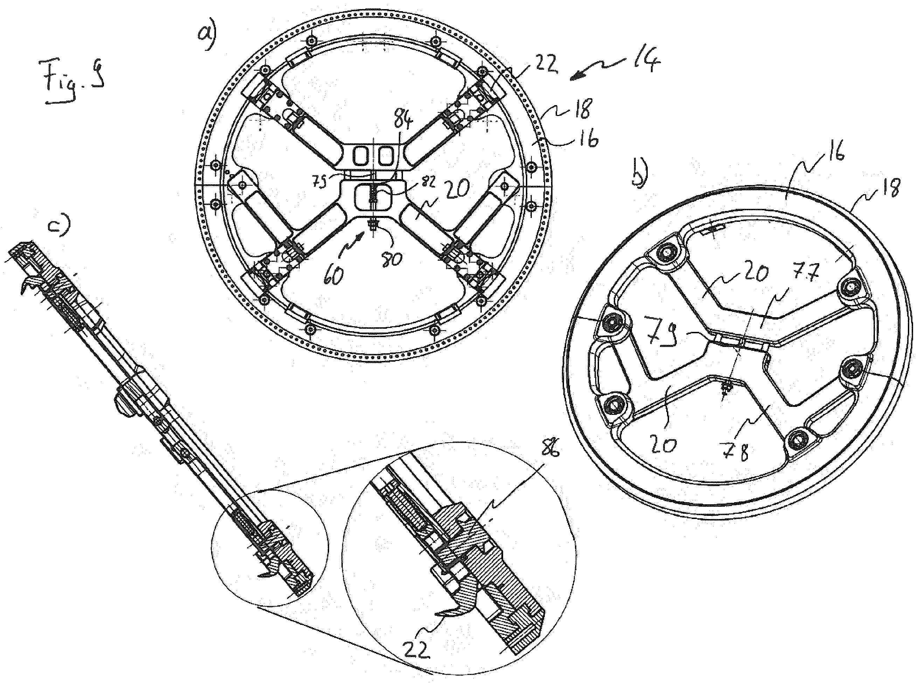

Figur 9 zeigt eine weitere alternative Ausführungsform eines erfindungsgemäßen Aufsatzes 14. Bei dem Aufsatz von Figur 9 weist der Montageabschnitt 20 vier Spannmittel 22 auf, die in mehreren fest vorgegebenen Positionen, die auf verschiedene Felgendurchmesser abgestimmt sind, an dem Montageabschnitt 20 unbeweglich befestigt sind. Der Montageabschnitt 20 weist ein erstes Segment 77 und ein zweites Segment 78 auf. Das erste Segment 77 ist weitestgehend W-förmig ausgebildet, während das zweite Segment 78 weitestgehend bogenartig ausgebildet ist. Der Aufsatz weist ebenso eine Verspanneinrichtung 60 auf, wobei diese als Zugstange, die fest mit dem zweiten Segment 78 verbunden ist, ausgeführt ist. Diese Zugstange 79 ist durch das zweite Segment 78 hindurchgeführt und mit einer Schraubenmutter 80 versehen. Durch Anziehen der Schraubenmutter 80 zum ersten Segment 77 hin, wird das erste Segment 74 zum zweiten Segment 76 in einer Verspannbewegung translatorisch zu diesem hin gerichtet bewegt.

Die Verspanneinrichtung 60 weist einen Federmechanismus 82 auf, der derart ausgebildet ist, dass eine Feder 84, die um die Zugstange 79 angeordnet ist, den ersten Abschnitt 74 zum zweiten Abschnitt 76 hin drängt. Hierdurch können die Spannmittel 22 in einfacher Weise auf das Felgenhorn 10 aufgesetzt werden und durch den Federmechanismus 82 werden diese quasi direkt in die das Felgenhorn greifende Stellung gedrängt. Wird die Schraubenmutter 80 dann angezogen, so wird die durch die Feder 84 vorgegebene Bewegung weiter durchgeführt und die Spannmittel 22 hintergreifen das Felgenhorn 10 und bewegen den Montageabschnitt 20 in axialer Richtung A zum Felgenhorn 10 hin. Anschließend kann der Laufflächenabschnitt 16 auf den Montageabschnitt 20 bzw. die Spannmittel 22 aufgesetzt und befestigt werden. Zur Befestigung des Laufflächenabschnitts 16 werden dabei Schrauben 86 in die entsprechenden Befestigungseinrichtungen 38, die als Schraubenlöcher ausgeführt und in den Spannmitteln 22 angeordnet sind, eingebracht. Hierdurch ergibt sich ähnlich wie bei der Version von Figur 7 bzw. 8 eine genau definierte und feste Befestigung des Laufflächenabschnitts 16 an den Spannmitteln 22.

Der Federmechanismus 82 stellt eine Möglichkeit einer Vorspannvorrichtung 83 dar, über die eines der beweglichen Segmente 77, 78 des Montageabschnitts 20 in Richtung des anderen beweglichen Segments 77, 78 vorgespannt ist.

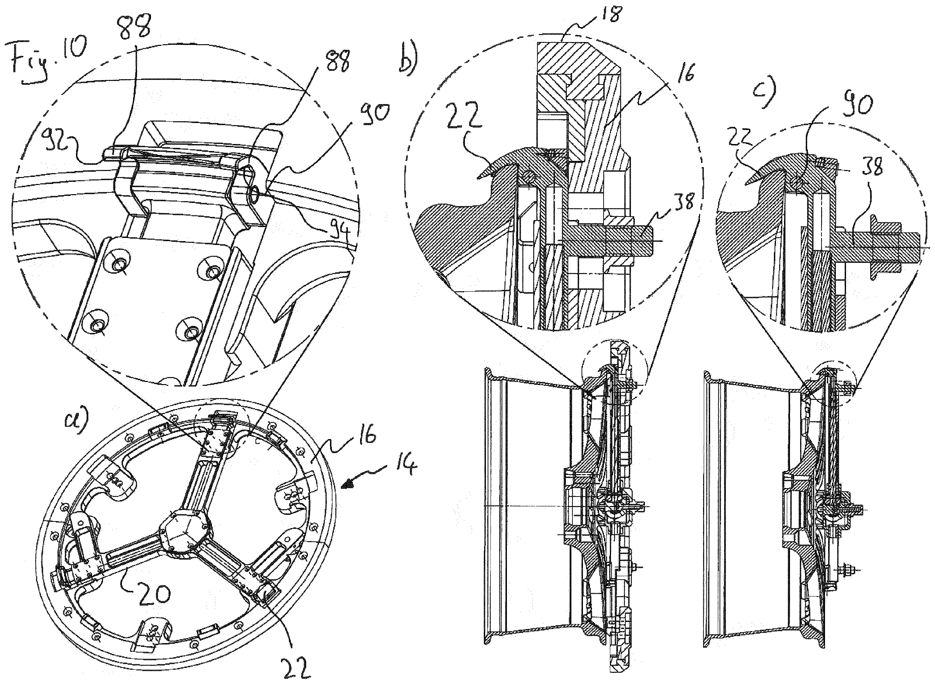

Figur 10 zeigt eine weitere alternative Ausführungsform eines erfindungsgemäßen Aufsatzes 14. Der Aufsatz 14 aus Figur 10 weist außerdem erfindungsgemäße Spannmittel 22 auf, die jeweils noch zwei Sicherungsmittel 88 umfassen. Die Sicherungsmittel 88 sind in Umfangsrichtung U zu dem Hintergriffabschnitt der Spannmittel 22 versetzt angeordnet.

Die Sicherungsmittel 88 sind je um eine Schwenkachse 90 verschwenkbar an dem Spannmittel 22 angeordnet. Es ist jedoch auch denkbar, dass die Sicherungsmittel 88 separat von dem Spannmittel 22 ausgebildet sein können.

Die Sicherungsmittel umfassen je einen Formschlussabschnitt 92, der ausgebildet ist, um durch Verschwenken des Sicherungsmittels in formschlüssigen Hintergriff mit dem Felgenhorn 10 gebracht zu werden. Der Formschlussabschnitt 92 der Sicherungsmittel 88 ist dabei vorliegend als Kontaktabschnitt 94 ausgebildet, der wiederum ausgebildet ist, um das Felgenhorn 10 auf seiner reifenzugewandten Seite zu kontaktieren, wobei der Kontaktabschnitt 94 entsprechend der axial innenliegenden Kontur des Felgenhorns 10 geformt ist. Dabei wird vorliegend von einer Kontur des Felgenhorns einer J-Felge nach DIN 7817 ausgegangen.

Die Ausbildung des Aufsatzes 14 aus Figur 10 entspricht ansonsten weitestgehend der des Aufsatzes aus Figur 8.

In Figur 10b ist der Montageabschnitt im an der Felge montierten Zustand gezeigt. Hier ist zu sehen, wie das Spannmittel 22 das Felgenhorn 10 hintergreift. In einem weiteren Schritt werden die einzelnen umfänglichen Segmente des Laufflächenabschnitts 16 am Montageabschnitt 20 angebracht. Hierzu wird die Befestigungseinrichtung 38 an den Spannmitteln 22 verwendet.

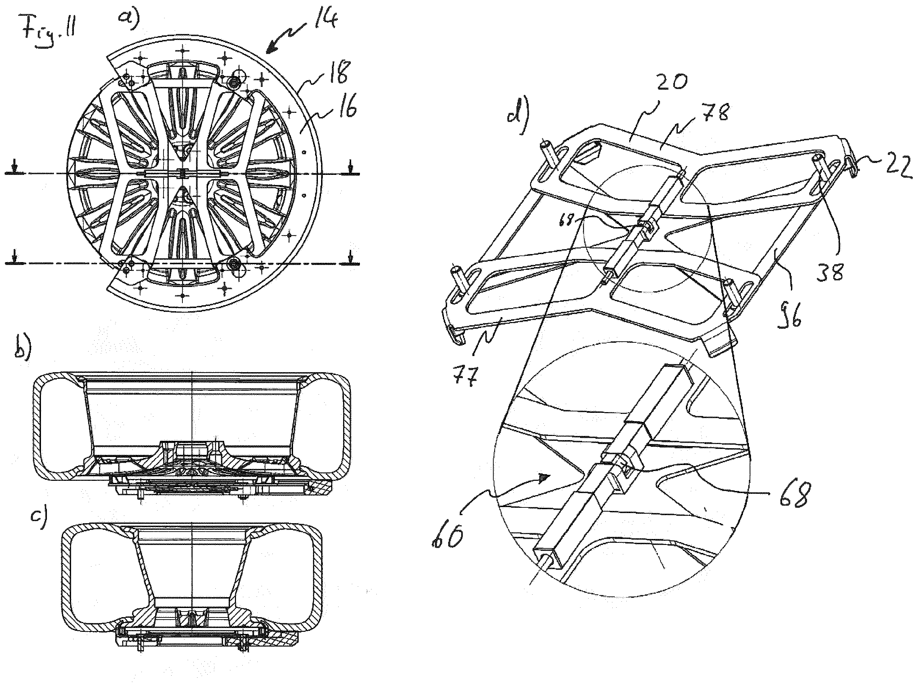

Figur 11 zeigt eine weitere Ausführungsform eines erfindungsgemäßen Aufsatzes. Dabei ist der Aufsatz mit einem Montageabschnitt 20 ausgeführt, der zwei zueinander bewegliche Segmente 77 und 78 aufweist, wobei der Aufsatz zusätzlich ein Mittelelement 96 umfasst.

Das Mittelelement 96 umfasst des Weiteren die Verspanneinrichtung 60. Die Verspanneinrichtung 60 ist dabei derart ausgebildet, dass die Verspannbewegung der beiden zueinander beweglichen Segmente 77, 78 bezüglich des Mittelelements 96 gleich, jedoch mit umgekehrter Richtung ist. Damit ist gemeint, dass bei Betätigung des zentral angeordneten Betätigungsabschnitts 68 der Verspanneinrichtung 60 die beiden beweglichen Segmente 77 und 78 jeweils mit gleicher relativer Geschwindigkeit zu dem Mittelelement 96 bewegt werden.

Der Montageabschnitt 20 umfasst auch Befestigungseinrichtungen 98, mittels denen die einzelnen Segmente des Laufflächenabschnitts 16 am Montageabschnitt 20 befestigt werden. Die Befestigungseinrichtungen 38 sind dabei als Gewindebolzen ausgeführt, die fest mit dem Mittelelement 96 verbunden sind. Die Spannmittel 22 der vorliegenden Ausführungsform sind ebenfalls fest mit dem Montageabschnitt 20 verbunden, jedoch mit den beweglichen Segmenten 77 und 78. Jedes der beiden Segmente 77, 78 des Montageabschnitts 20 umfasst je zwei Spannmittel 22. Die beiden Spannmittel 22 jedes der beweglichen Segmente 77, 78 des Montageabschnitts 20 sind dabei relativ zueinander beabstandet angeordnet, wobei die relative Position der Spannmittel 22 während der Verspannbewegung unverändert bleibt.

Beim Befestigen des Laufflächenabschnitts 16 über die Befestigungseinrichtung 38 werden die beweglichen Segmente 77 und 78 zwischen dem Mittelelement 96 und dem Laufflächenabschnitt 16 verklemmt.

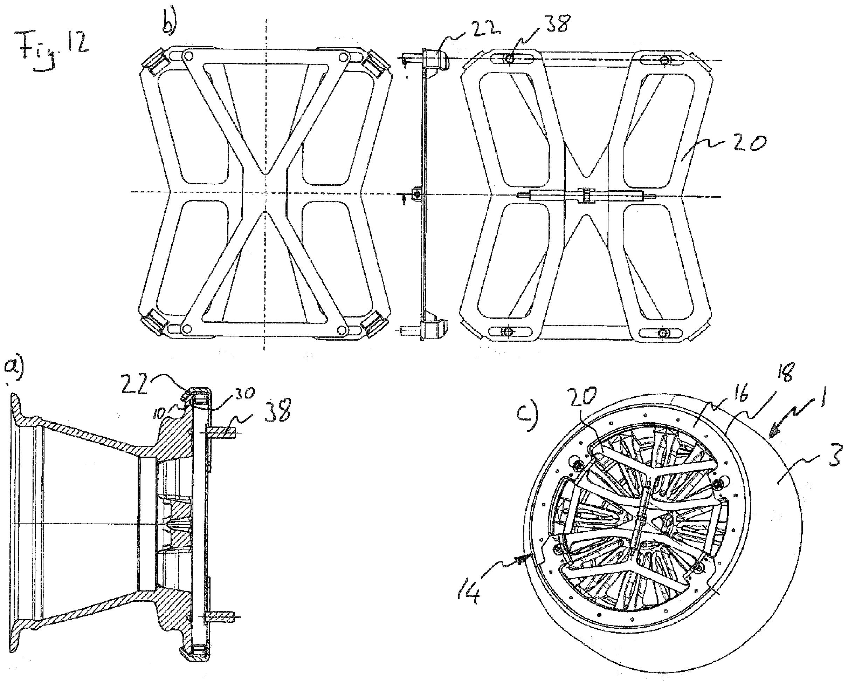

Der Aufsatz 14 aus Figur 11 ist in Figur 12 noch in weiteren Ansichten gezeigt.

In Figur 12c ist der Aufsatz 14 im vollständig am Fahrzeugrad 1 angebrachten Zustand dargestellt. In der Darstellung von Figur 12c kann man gut erkennen, dass die Lauffläche 18 des Aufsatzes 14 in etwa 15 mm gegenüber der Lauffläche des Reifens 3 nach radial innen versetzt ist. Dies ist deshalb so dargestellt, da der Reifen 3 in Figur 12c vollständig mit Luft gefüllt ist. Hat der Reifen ein Loch, so entweicht die Luft und der Aufsatz 14 kontaktiert die Fahrbahn, wobei der Reifen zusätzlich in Form gehalten wird und weiter bei der Rollbewegung des Rades aktiv bleibt.

Auch die Spannmittel 22 des Aufsatzes 14 aus Figur 11 und 12 weisen eine Anlagefläche 30 auf. Die Anlagefläche 30 ist im vorliegenden Fall durch ein einfaches Vierkantprofil, welches an der Innenseite des Spannmittels 22 angeordnet ist, ausgebildet. Bei dem eben beschriebenen Ausführungsbeispiel sind die beweglichen Segmente 77, 78 des Montageabschnitts 20 als Blechstanzteile ausgebildet. Die Befestigungseinrichtungen 38 sind an das Mittelelement angebracht und die Spannmittel 22 sind durch Umbiegen von Randabschnitten der beweglichen Segmente 77 und 78 gebildet.

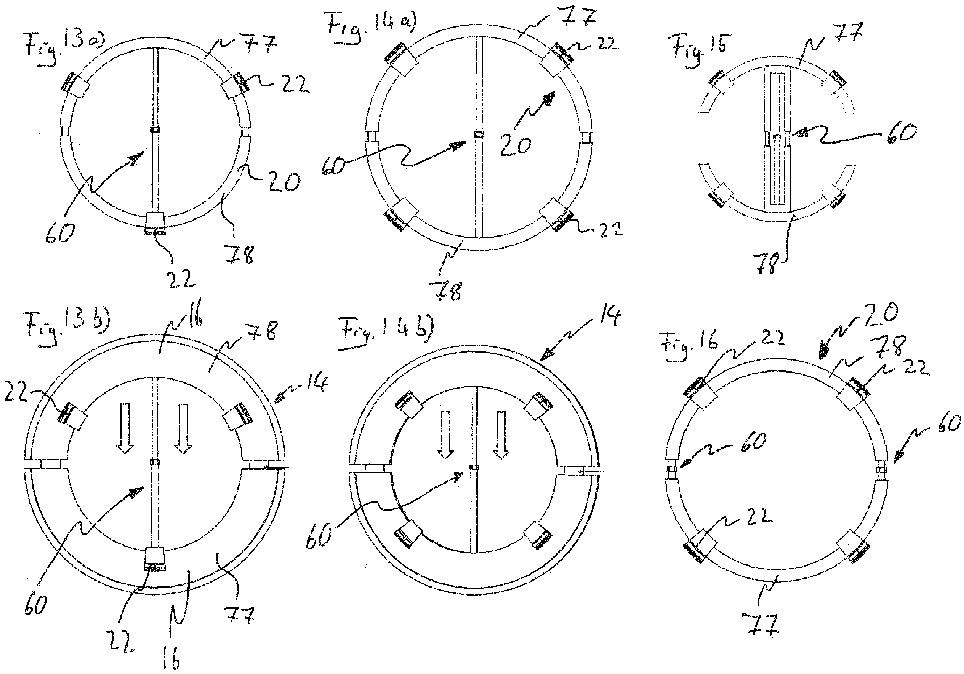

Die Figuren 13 bis 16 zeigen verschiedene Möglichkeiten zur Ausführung eines Montageabschnitts 20. Die Ausführungsform von Figur 13a weist drei Spannmittel auf, die an einem Montageabschnitt in zwei zueinander beweglichen Segmenten 77 und 78 angeordnet sind. Die beiden beweglichen Segmente 77 und 78 sind über eine Verspanneinrichtung 60, die in Form eines verkürzbaren stababartigen Abschnitts ausgeführt ist, gegeneinander bewegbar. In Figur 13b ist der Montageabschnitt 20 aus Figur 13a mit daran angebrachtem Laufflächenabschnitt 16, der ebenso zwei Segmente aufweist, gezeigt.

Die Ausführungsform von Figur 14 entspricht weitestgehend der von Figur 13, wobei an jedem der beweglichen Segmente 77 und 78 des Montageabschnitts 20 zwei Spannmittel 22 angeordnet sind.

Die Ausführungsform von Figur 15 umfasst einen Montageabschnitt der einen teilweise bzw. nicht geschlossenen Kreisring bildet.

Die Ausführungsform von Figur 16 zeigt einen ringförmigen Montageabschnitt 20, dessen beiden beweglichen Segmente 77 und 78 über zwei Verspanneinrichtungen 60 aufeinander zu bewegbar sind. Der Montageabschnitt 20 ist also derart ausgebildet, dass er im am Fahrzeugrad 1 angebrachten Zustand zum Bereich des Lochkreises des Fahrzeugrads 1 in radialer Richtung R beabstandet ist. Die Verspanneinrichtung 60 ist quasi in Form eines in Umfangsrichtung U erstreckten Elements, das dem Montageabschnitt 20 entspricht, aber beispielsweise auch durch ein Drahtseil gebildet sein kann, dessen Radius reduzierbar ist und das mit den Spannmitteln 22 gekoppelt ist, ausgebildet.

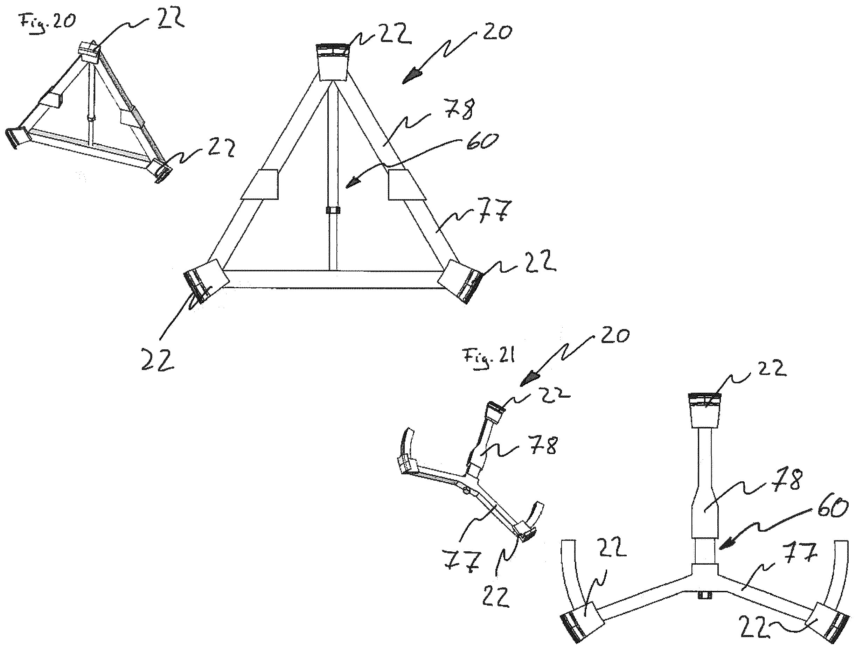

Figur 20 zeigt einen weitestgehend dreiecksförmigen Montageabschnitt 20.

Figur 21 zeigt eine weitere erfindungsgemäße Ausführungsform eines Montageabschnitts 20 mit einer kreuzartigen Grundstruktur.

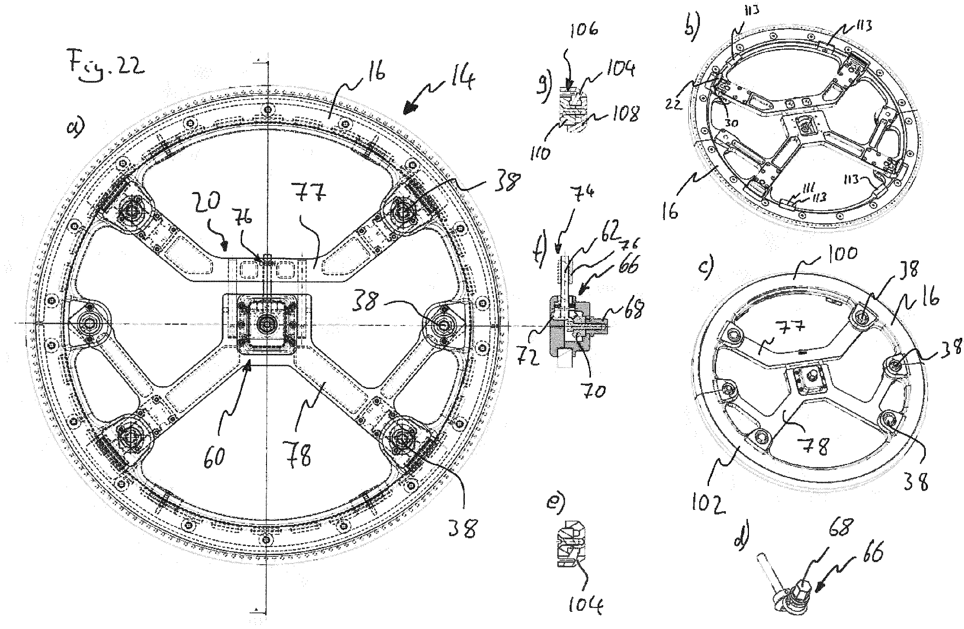

Figur 22 zeigt einen weiteren erfindungsgemäßen Aufsatz. Der Aufsatz umfasst einen Laufflächenabschnitt 16 mit einem ersten umfänglichen Segment 100 und einem zweiten umfänglichen Segment 102.

Der Montageabschnitt 20 des in Figur 22 gezeigten Aufsatzes 14 umfasst zwei zueinander bewegliche Segmente 77 und 78, wobei das zweite bewegliche Segment 78 die Verspanneinrichtung 60 umfasst.

Die Verspanneinrichtung 60 umfasst das Getriebe 66, welches wiederum ein Antriebskegelrad 70, das mit einem Betätigungselement 68 bewegungsgekoppelt ist, umfasst. Das Antriebskegelrad 70 wiederum wirkt mit dem Abtriebskegelrad 72 zusammen, um eine Antriebsbewegung des Betätigungselements 68, welche bspw. über einen Schraubenschlüssel oder einen Elektroantrieb ausgeübt werden kann, in eine Rotationsbewegung des Kopplungsmittels 62 umzuwandeln.

Die Rotationsbewegung des Kopplungsmittels 62 führt dazu, dass ein Gewinde 74, das an dem als Gewindestange ausgeführten Kopplungsmittels 62 in ein Gegengewinde 76, das an dem ersten beweglichen Segment des Montageabschnitts 20 angeordnet ist, eingeschraubt wird. Hierdurch bewegen sich die beweglichen Segmente 77 und 78 des Montageabschnitts 20 aufeinander zu bzw. voneinander weg. Die Figuren g und e zeigen jeweils einen Schnitt durch den Laufflächenabschnitt und illustrieren, dass dieser einen Laufbelag 104 umfasst. Der Laufbelag 104 weist vorliegend Ausnehmungen 106, die von axial innenliegend in das Material des Laufbelags eingebracht sind, auf. Die Ausnehmungen 106 können auch als Durchbrüche ausgeführt sein, die sich durch das gesamte Material des Laufbelags 104 erstrecken, oder sich von axial außen in das Material des Laufbelags 104 erstrecken. Der Laufbelag 104 ist auf einem Tragabschnitt 105 aus Metall, insbesondere Aluminium, angeordnet.

Vorliegend ist der Laufbelag 104 zwischen zwei miteinander verschraubten axialen Segmenten 108 und 110 des Laufflächenabschnitts verklemmt, wobei die axialen Segmente 108 und 110 des Laufflächenabschnitts 16 vorliegend miteinander verschraubt sind. Jedes der umfänglichen Segmente 100 und 102 des Laufflächenabschnitts 16 ist mit dem zweiten beweglichen Segment 78 des Montageabschnitts 20 über die Befestigungseinrichtungen 38 verbunden. Das erste bewegliche Segment 77 des Montageabschnitts 20 ist lediglich mit dem ersten umfänglichen Segment 100 des Laufflächenabschnitts verbunden.

Die Befestigungseinrichtungen 38 sind derart ausgebildet, dass der Laufflächenabschnitt 16 bzw. dessen umfänglichen Segmente 100 und 102 sich beim Befestigen in axialer Richtung A zur Felge bzw. zum an der Felge befestigten Montageabschnitt 20 hin bewegen.

Der in Figur 22 gezeigte Aufsatz 14 umfasst Stützflächen 111, die an Stützkörpern 113 angeordnet sind, die wiederum am Laufflächenabschnitt 16 angebracht sind.

Wenn der Laufflächenabschnitt 16 in seiner endgültigen Position am Fahrzeugrad angebracht ist, also über die Befestigungseinrichtungen 38 zum Montageabschnitt 20 bzw. zur Felge 2 hinbewegt ist, so liegen die Stützflächen 111 in einer Ebene mit den Anlageflächen 30 der Spannmittel 22 und kontaktieren das Felgenhorn 10. Hierdurch erhält der Laufflächenabschnitt 16 zusätzliche Abstützung am Felgenhorn.

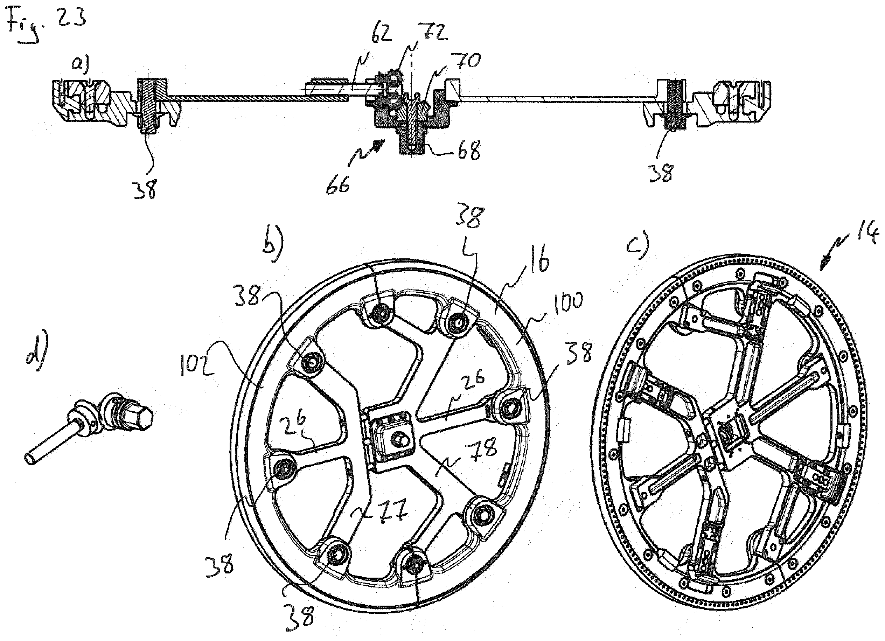

Figur 23 zeigt eine weitere Ausführungsform eines erfindungsgemäßen Aufsatzes 14. Die Ausführungsform von Figur 23 ähnelt der von Figur 22, wobei jedoch die beweglichen Segmente 77 und 78 des Montageabschnitts 20 zusätzliche nach radial außen erstreckte Arme 26 aufweisen, die jeweils Befestigungseinrichtungen 38 umfassen, um den Laufflächenabschnitt 16 bzw. dessen umfängliche Segmente 100 und 102 mit den beweglichen Segmenten 77 und 78 zu verbinden.

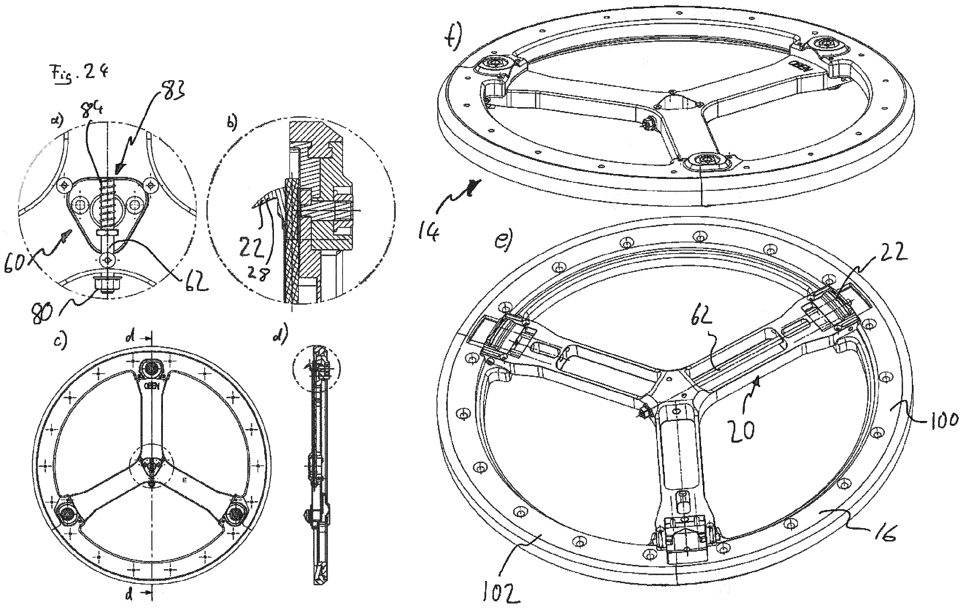

Figur 24 zeigt eine Ausführungsform eines erfindungsgemäßen Aufsatzes 14, bei dem eines der Spannmittel 22 gegenüber dem Montageabschnitt 20 beweglich ausgeführt ist. Die Bewegung des Spannmittels 22 kann über ein als Gewindestange ausgeführtes Kopplungsmittel 62, das über eine Schraubenmutter 80, die auf die Gewindestange aufschraubbar ist, verspannt werden.

Bei der Variante von Figur 24 weist der Laufflächenabschnitt 16 ein erstes umfängliches Segment 100 und ein zweites umfängliches Segment 102 auf, wobei das erste umfängliche Segment 100 eine umfängliche Erstreckung von etwas über 240° aufweist und das zweite umfängliche Segment 102 eine umfängliche Erstreckung von etwas unter 120°.

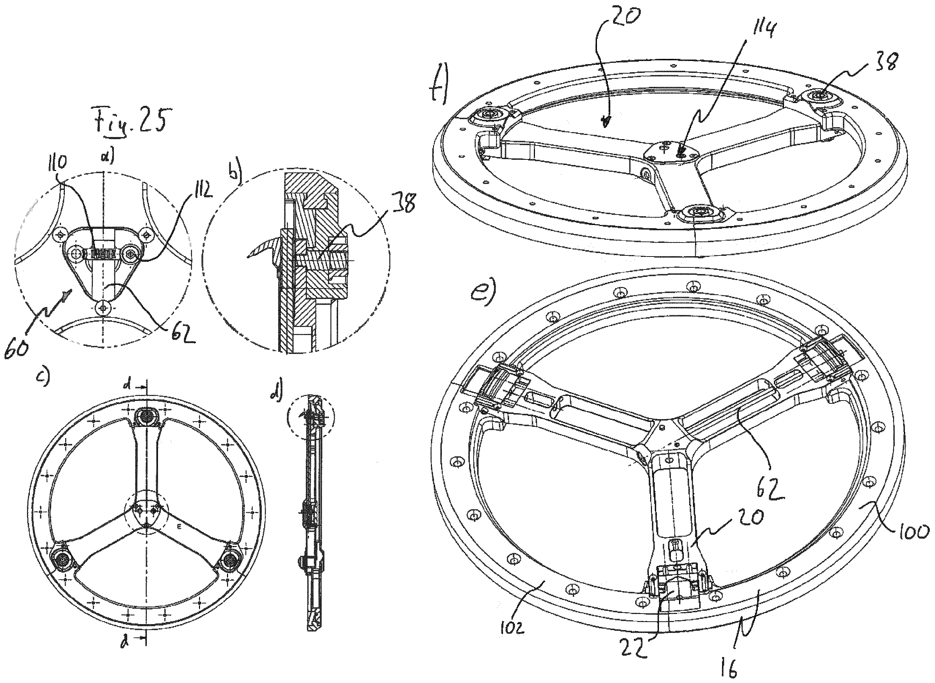

Figur 25 zeigt einen Aufsatz mit einer alternativen Verspanneinrichtung 60, der ansonsten dem Aufsatz aus Figur 24 entspricht. Bei der Ausführungsform von Figur 25 ist das als Gewindestange ausgeführte Kopplungsmittel 62, welches ein Zahnrad 110 trägt, über ein Schneckenrad 112 antreibbar, welches wiederrum über eine Werkzeugansetzstelle 114 von axial außen am Montageabschnitt 20 antreibbar ist. An die Werkzeugansetzstelle 114 kann ein beispielsweise als Inbusschlüssel ausgeführtes Werkzeug angesetzt werden oder auch ein elektrischer Antrieb, mit dem das Schneckenrad 112 antragbar ist, angesetzt werden.

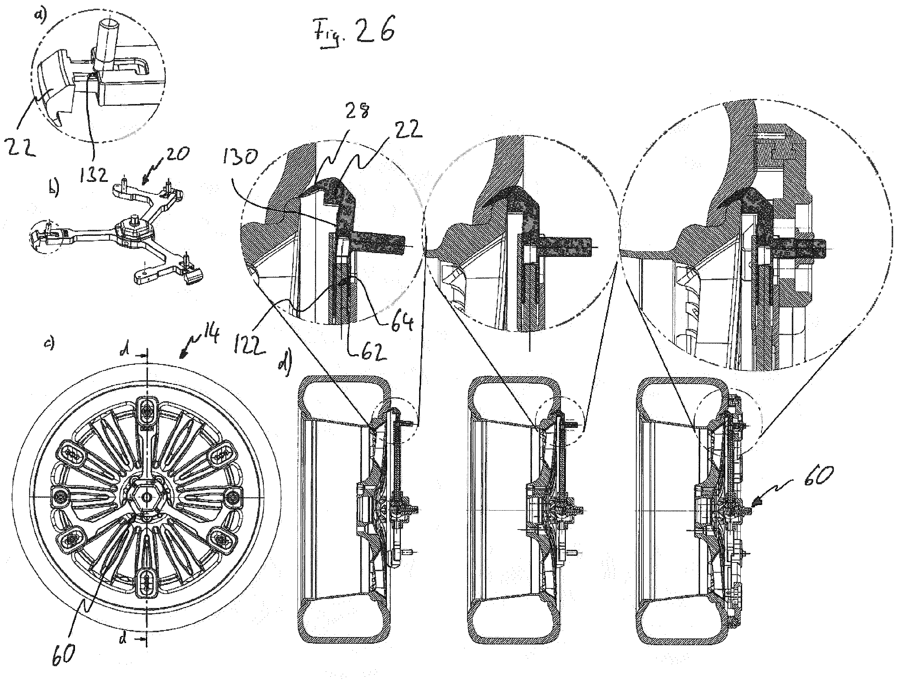

In Figur 26 ist ein weiterer erfindungsgemäßer Aufsatz 14 gezeigt, der Aufsatz 14 aus Figur 26 umfasst einen Montageabschnitt 20, der drei über eine zentrale Verspanneinrichtung 60 nach radial einwärts bewegbare Spannmittel 22 umfasst.

Der hintergriffabschnitttragende Teil der Spannmittel 22 ist je über ein Federblech 130 mit einem Kopplungsabschnitt 122 mit der Kopplungseinrichtung 40, die als Aufnahmeabschnitt 64 für das Kopplungsmittel 62 ausgebildet ist, verbunden.

Die Verbindung zwischen dem Hintergriffabschnitt 28 der Spannmittel 22 und dem Kopplungsabschnitt 122, der den Aufnahmeabschnitt 64 für das Kopplungsmittel 62 umfasst, ist, vorliegend durch das Federblech 130, in axialer Richtung A biegbar bzw. um die umfängliche Richtung U schwenkbar ausgebildet.

Die translatorisch rein nach radial innen gerichtete Verspannbewegung des Kopplungsabschnitts 122 führt durch eine vorliegend als rampenartige Erhebung 132 auf der axial außenliegenden Seite des Spannmittels 22 ausgebildete Führungseinrichtung 132 zu einer nach axial innen gerichteten Einschwenkbewegung des Hintergriffabschnitts 28 des Spannmittels 22, wenn der Kopplungsabschnitt 122 rein translatorisch nach radial innen bewegt wird.

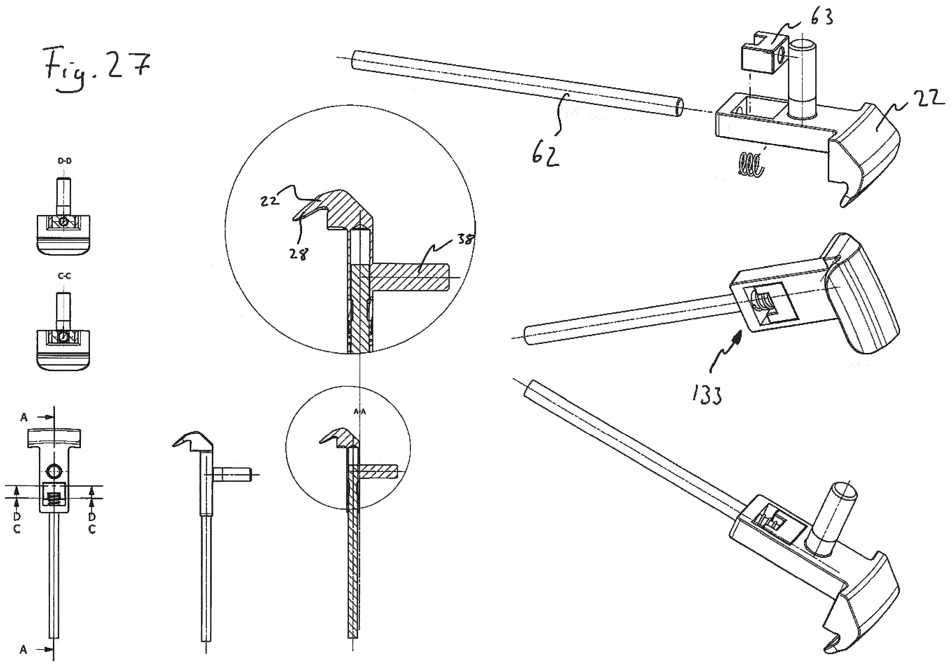

Figur 27 zeigt ein Spannmittel 22, das über eine Vorspannvorrichtung 133 nach radial innen vorgespannt ist. Die Vorspannvorrichtung 133 ist vorliegend dadurch implementiert, dass das Kopplungsmittel 62 in Form einer Gewindestange mit einem in dem Spannmittel 22 federgelagerten Kopplungsabschnitt 122 verbunden ist. Beim Einschrauben des Kopplungsmittels 62 in den Kopplungsabschnitt 122 bzw. dessen Aufnahmeabschnitt 64 und dem in dem Aufnahmeabschnitt 64 angeordneten Gegengewinde 76 wird zunächst der Kopplungsabschnitt 122 nach radial innen gezogen und kommt dann in Kontakt mit dem ihm umgebenden Teil des Spannmittels 22, so dass auch das Spannmittel 22 nach radial einwärts gezogen wird. Hierdurch wird es möglich, das Spannmittel 22 in dem Felgenhorn 10 einzuhängen, wobei das Spannmittel 22 das Felgenhorn 10 durch die Federvorspannung hintergreift obwohl das Spannmittel 22 noch nicht auf eine Stellung herangezogen ist, in der es das Felgenhorn 10 fest hintergreift.

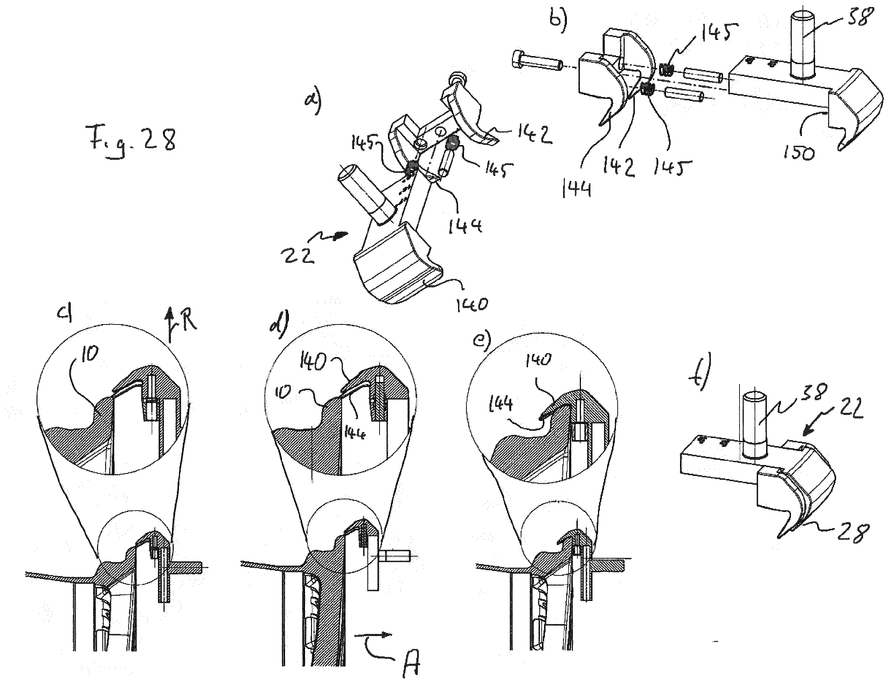

Figur 28 zeigt ein Spannmittel, das einen mehrteiligen Hintergriffabschnitt 28 aufweist. Der Hintergriffabschnitt 28 weist einen Haupthintergriffabschnitt 140 sowie zwei seitlich hierzu angeordnete Nebenhintergriffabschnitte 142 und 144 auf. Die beiden seitlichen Nebenhintergriffabschnitte 142 und 144 sind gegenüber dem Haupthintergriffabschnitt 140 nach radial einwärts über Federn 145 vorgespannt. Hierdurch greifen die seitlichen Nebenhintergriffabschnitte 142 und 144 das Felgenhorn, bevor der Haupthintergriffabschnitt 140 über eine Verspanneinrichtung 60 in Hintergriff mit dem Felgenhorn gebracht wird (Figuren 28 c) bis e)). Hierdurch wird das Einhaken des Spannmittels 22 am Felgenhorn 10 vereinfacht, da die Nebenhintergriffabschnitte 142 und 144 das Felgenhorn greifen und den Montageabschnitt 20 an diesem fixiert, bevor der Haupthintergriffabschnitt 140 endgültig verspannt ist. Ansonsten entspricht das Spannmittel 22 aus Figur 27 weitestgehend den Spannmitteln 22, wie sie an dem Aufsatz aus Figur 8 verwendet werden

Der Haupthintergriffabschnitt 140 sowie die zwei seitlich hierzu angeordneten Nebenhintergriffabschnitte 142 und 144 bilden jeweils Teilabschnitte des mehrteiligen Hintergriffabschnitt 28 in Figur 28 und sind zueinander in radialer Richtung R beweglich. Dabei bilden die Nebenhintergriffabschnitte 142 und 144 je einen ersten Teilabschnitt des Hintergriffabschnitts, der gegenüber einem zweiten Teilabschnitt des Hintergriffabschnitts, vorliegend dem Haupthintergriffabschnitt 140, in eine, insbesondere nach radial innen, versetzte Stellung (Figur 28 c) und d)) vorgespannt ist. Das Spannmittel 22 weist einen Anschlag 150 auf, der derart ausgebildet ist, dass die ersten Teilabschnitte 142, 144 nicht in eine gegenüber dem zweiten Teilabschnitt 140 nach radial außen versetzte Stellung bringbar sind. Kontaktieren die ersten Teilabschnitte und 142, 144 den Anschlag 150, so befinden sich die ersten Teilabschnitte 142, 144 in einer Stellung in der ihre Felgenhorn zugewandte Seite mit der des zweiten Teilabschnitts 140 bündig verläuft (Figur 28 e)).

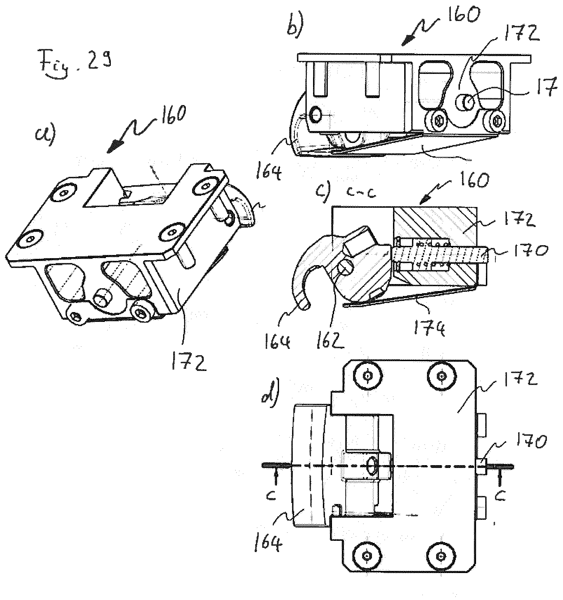

Figur 29 zeigt ein Sicherungsmittel 160, das separat von den Spannmitteln 22 ausgeführt ist. Das Sicherungsmittel 160 ist über die Schwenkachse 162 derart verschwenkbar, dass sein Formschlussabschnitt 164 mit dem daran befindlichen Kontaktabschnitt 166 in formschlüssigen Hintergriff mit dem Felgenhorn 10 bringbar ist.

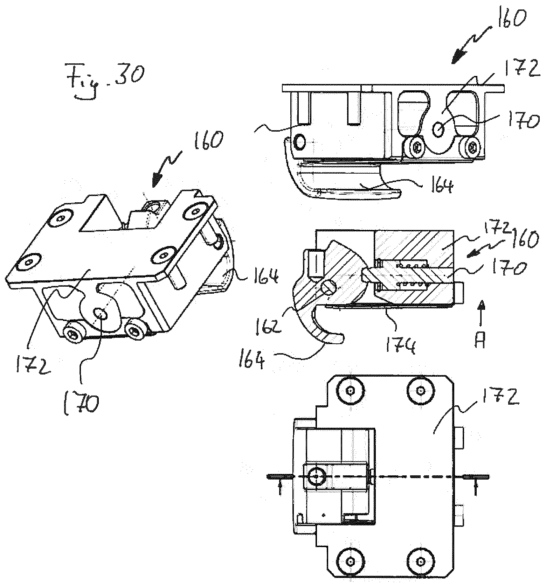

Das Sicherungsmittel 160 umfasst vorliegend einen Verriegelungsmechanismus 168, der ein, vorliegend über eine Feder, vorgespanntes Verriegelungsmittel 170, das vorliegend als Bolzen 170 ausgeführt ist, umfasst. Ist das Sicherungsmittel 160 in der in Figur 30 gezeigten Stellung, so hintergreift es das Felgenhorn 10 und der federvorgespannte Bolzen 170 rastet in eine entsprechende Aufnahme an dem Sicherungsmittel 160 ein, so dass dessen Formschlussabschnitt 164 an einem Herausschwenken aus der in Figur 29 II gezeigten Position gehindert ist. Das Sicherungsmittel 160 sowie der Verriegelungsmechanismus 168 und der federvorgespannte Bolzen 170 sind in einer Einschalung 172 angeordnet. An der Einschalung 172 ist auch noch ein Kontaktelement 174 angeordnet. Das Kontaktelement 174 ist derart mit dem Sicherungsmittel 160 gekoppelt, dass das Sicherungsmittel 160 bei Kontaktierung des Kontaktelements 174 aus axialer Richtung A aus der in Figur 29I gezeigten Stellung in die in Figur 29II gezeigte Stellung einschwenkt.

Die Einschalung 172 und das als Bolzen 170 ausgeführte Verriegelungsmittel 170 sind derart ausgebildet und zueinander angeordnet, dass der Bolzen 170 mit seinem hinteren Ende aus der Einschalung 172 heraus ragt, wenn das Sicherungsmittel 160 sich nicht in der in Figur 29II gezeigten Stellung befindet. Damit bietet der Bolzen 170 eine optische Anzeige dafür, ob das Sicherungsmittel 160 bzw. dessen Formschlussabschnitt 164 das Felgenhorn 10 hintergriffen hat.

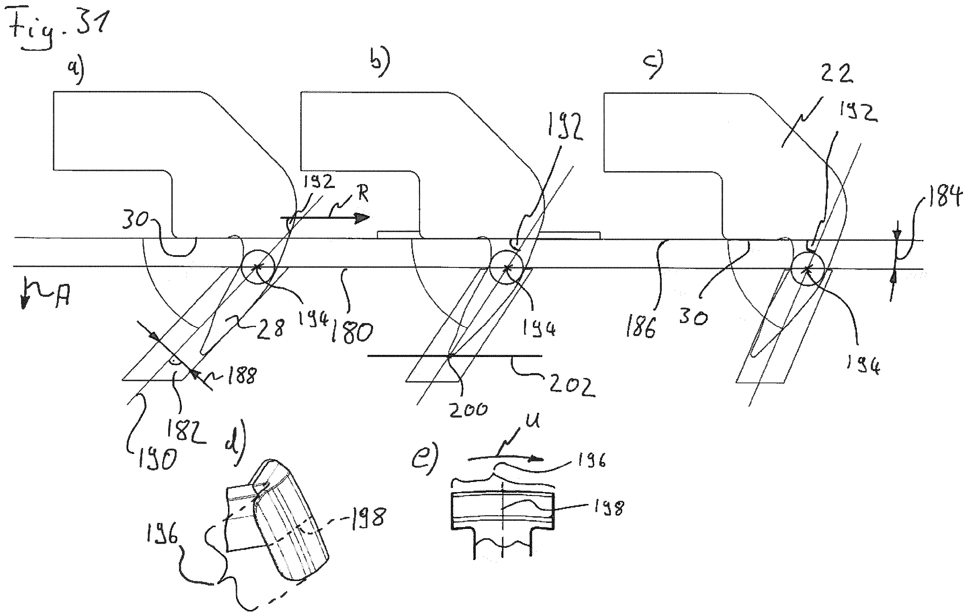

Figur 31 illustriert verschiedene Spannmittel 22, die je einen Hintergriffabschnitt 28 umfassen, der derart ausgebildet ist, dass das Material der Hintergriffabschnitte, welches axial innen (Der Pfeil mit dem Bezugszeichen A zeigt in Figur 31 nach axial innen) von einer Referenzebene 180 liegt, vollständig in einem gedachten Korridor 182 liegt.

Die Referenzebene 180 liegt dabei in einem Abstand 184 von, im vorliegenden Beispiel, 6 mm zu einer Anlageebene 186. Ein Abstand von 4 oder 7 mm ist jedoch ebenso im Sinne der Erfindung. Die Anlageebene 186 entspricht derjenigen zur axialen Richtung orthogonalen Ebene, in der der axial äußere Kontaktpunkt des Felgenhorns 14 mit dem Aufsatz 14 liegt, wenn der Aufsatz 14 über die Spannmittel 22 vollständig am Felgenhorn 14 befestigt ist. Die Anlageebene 186 fällt vorliegend mit der Anlagefläche 30 zusammen. Der gedachte Korridor 182 weist eine Breite 188 von 12mm, insbesondere 10mm, insbesondere 9mm, insbesondere 8mm, insbesondere 7mm, insbesondere 6mm, insbesondere 5mm, auf.

Eine Mittelachse 190 des gedachten Korridors 182 verläuft in einem Winkel 192 von wenigstens 42°, insbesondere 45°, insbesondere 47° (Figur 31 a)), insbesondere 49°, insbesondere 51°, insbesondere 53°, insbesondere 55°, und höchstens 72°, insbesondere 69°, insbesondere 67°(Figur 31 c)), insbesondere 65°, insbesondere 63°, insbesondere 61°, insbesondere 59°, insbesondere beträgt der Winkel 192 57°(Figur 31 b)), zur radialen Richtung R.

Dabei verläuft die Mittelachse 190 in axial einwärts gerichteter Richtung nach radial innen und der Winkel 192 ist zwischen der Verlaufsrichtung der Mittelachse 190 und der radial einwärts gerichteten Richtung (entgegen dem Pfeil mit Bezugszeichen R) gemessen. Die Breite und der Winkel der Mittelachse 190 sind dabei bezogen auf einen Blick auf eine in radialer Richtung R und axialer Richtung A erstreckten Ebene definiert, die der Bildebene aus Figur 31 entspricht. Insbesondere kann diese Betrachtungsebene in Umfangsrichtung U in der Mitte 198 des Materials des Hintergriffabschnitts 28 liegen. Vorzugweise erfüllt der Hintergriffabschnitt 28 diese Bedingung jedoch über seine gesamte umfängliche Erstreckung 196.

Die Mittelachse 190 des gedachten Korridors verläuft beim Blick auf die in radialer und axialer Richtung erstreckte Ebene durch den Materialmittelpunkt 194 des Hintergriffabschnitts 28 in dessen Schnitt mit der Referenzebene 180 (Figur 31 a) bis c)). Im Sinne der Erfindung ist auch, wenn die Mittelachse 190 des gedachten Korridors 182 beim Blick auf die in radialer Richtung R und axialer Richtung A erstreckten Ebene durch den Materialmittelpunkt 200 des Hintergriffabschnitts 28 in dessen Schnitt mit einer zur Referenzebene 180 parallelen Ebene 202, in der das axial innere Ende des Hintergriffabschnitts 28 liegt, verläuft.

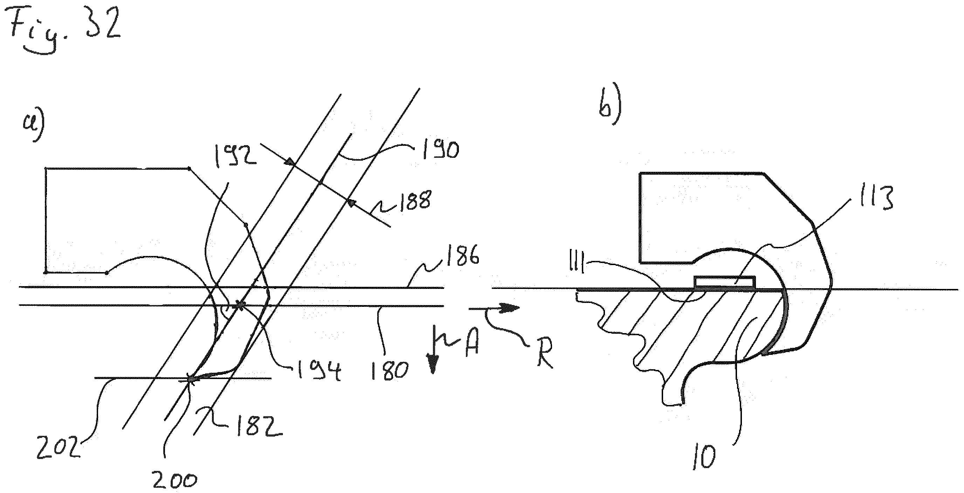

In Figur 32 ist eine Ausführungsform eines Spannmittels 22 gezeigt, welches nicht unter den Schutzbereich der beanspruchten Erfindung fällt, wobei der Hintergriffabschnitt 28 ebenfalls in dem gedachten Korridor 182 liegt. Bei der Ausführungsform, die in Figur 32 dargestellt ist, ist die Referenzebene 4 mm zu der Anlageebene 186 beabstandet. Die Anlageebene 186 ist im Fall von Figur 32 durch die axiale Position der am Laufflächenabschnitt 16 angeordneten Stützfläche 111, die in Umfangsrichtung U versetzt zum Spannmittel 22 angeordnet ist, gebildet.

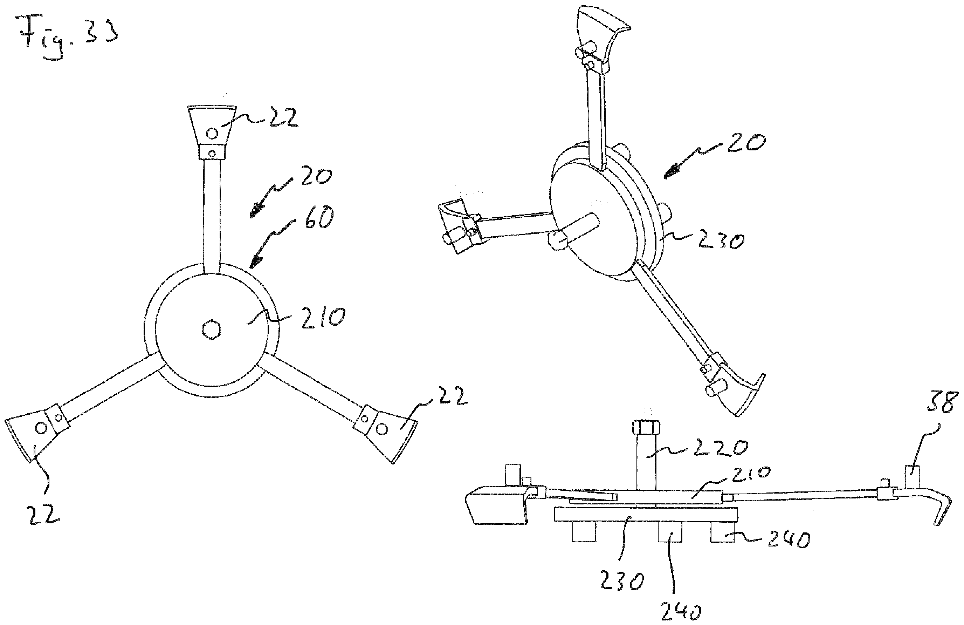

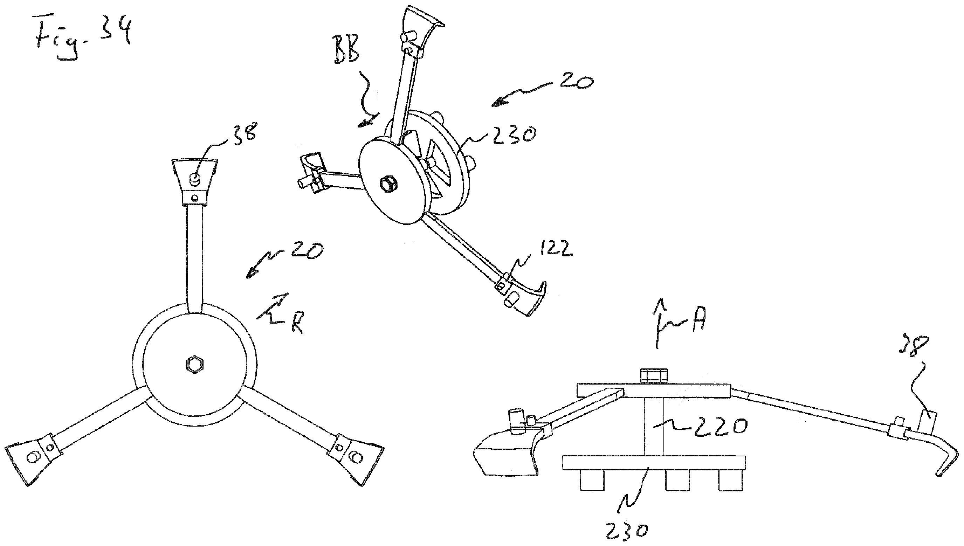

Bei den erfindungsgemäßen Aufsätzen kann vorgesehen sein, dass die Verspanneinrichtung eine nach axial Außen gerichtete Bewegung eines Zugelements 210 in eine radial einwärts gerichtete Bewegung der Spannmittel 22 wandelt. Ein Montageabschnitt mit einer derartigen Verspanneinrichtung 60 ist in den Figuren 33 und 34 gezeigt.

Die Verspanneinrichtung 60 kann insbesondere derart ausgeführt sein, dass sie eine nach axial außen gerichtete Betätigungsbewegung BB in eine nach radial innen gerichtete Bewegung der Kopplungsabschnitte 122 der Spannmittel 22 umwandelt. Insbesondere kann die Verspanneinrichtung 60 eine Spanneinheit 210, die als das Zugelement 210 ausgebildet sein kann, umfassen, die über ein, Anstandsveränderungselement 220, insbesondere eine Gewindestange 220, gegenüber einem Abstützelement 230, nach axial außen bewegbar ist, wobei das Abstützelement 230 im Bereich des Lochkreises der Felge 2 anordenbar ist und sich in diesem Bereich gegen die Felge 2 abstützen kann während der Verspannbewegung. Insbesondere weist das Abstützelement 230 Fortsätze 240 zur Abstützung an den Radschrauben auf.

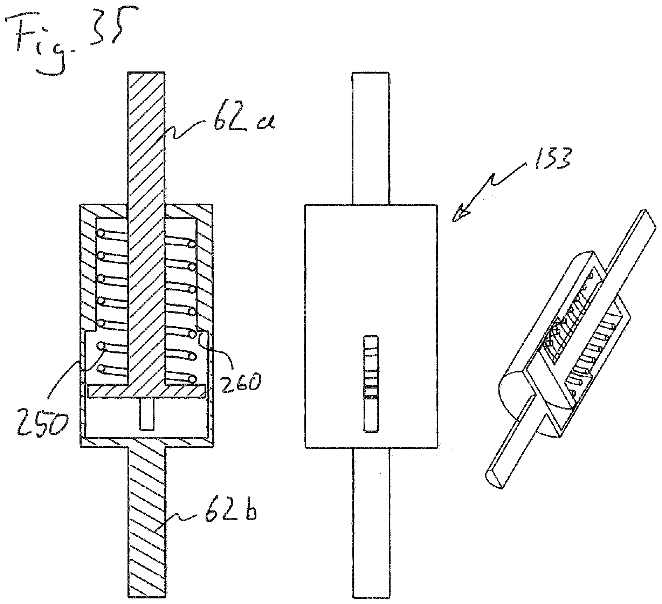

Figur 35 zeigt eine Vorspannvorrichtung 133 die in ein stangenartiges Kopplungsmittel integrierbar ist. Über eine Feder 250 sind zwei Abschnitte des Kopplungmittels 62a und 62b gegeneinander verspannt. Bei Zug an dem Kopplungsmittel 62 werden zunächst die beiden Abschnitte des Kopplungsmittels 62a und 62b voneinander weg bewegt, bis der Abschnitt 62a an den Anschlags 160 anstößt und das Kopplungsmittel 62 insgesamt bewegt wird. Eine, insbesondere derartige, Vorspannvorrichtung 133 kann auch zwischen Kopplungsabschnitt 122 und Hintergriffabschnitt 28 und oder Anlagefläche 30 des Spannmittels 22 angeordnet sein.

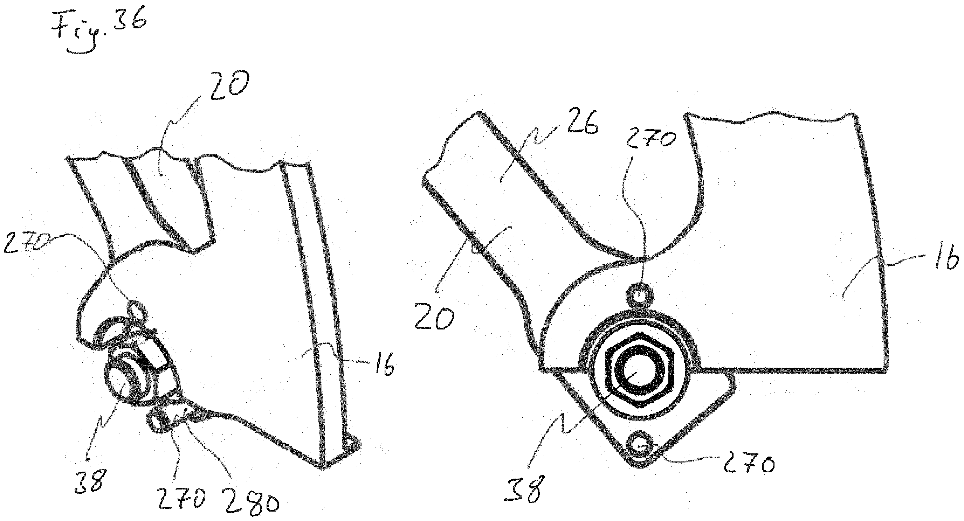

Figur 36 zeigt einen Arm 26 eines Montageabschnitts 20 sowie ein Teil eines Laufflächenabschnitts 16. Der Montageabschnitt 20 und der Laufflächenabschnitt 16 können aufeinander abgestimmte Positioniereinrichtungen 270 aufweisen. Insbesondere kann der Montageabschnitt 20 wenigstens einen in axialer Richtung A erstreckten, insbesondere zapfenartigen, Führungsvorsprung 280 umfassen und der Laufflächenabschnitt 16 wenigstens eine Führungsöffnung 290 umfassen, die komplementär zu dem Führungsvorsprung 280 ausgebildet ist, so dass, wenn der Montageabschnitt 20 bereits am Fahrzeugrad 1 angebracht ist, der Laufflächenabschnitt 16 bzw. ein Teil des Laufflächenabschnitts 16 derart auf den Montageabschnitt 20 aufgesetzt werden kann, dass der Führungsvorsprung 280 in die Führungsöffnung 290 eingreift und eine axiale Montagebewegung des Laufflächenabschnitts 16 gegenüber dem Montageabschnitt 20 und dem Fahrzeugrad 1 durch den Eingriff des Führungsvorsprungs 280 in die Führungsöffnung 290 geführt ist. Denkbar ist auch dass die Führungsöffnung 290 an dem Montageabschnitt 20 und der Führungsvorsprung 280 dem Laufflächenabschnitt 16 angeordnet ist.

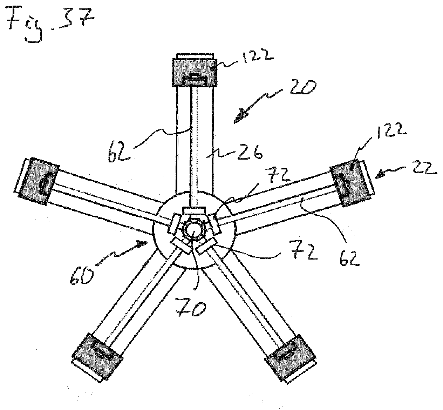

Im Beispiel von Figur 37 sind alle fünf Spannmittel 22 über die Verspanneinrichtung 60 bewegbar, wobei bei dieser Ausführungsform alle fünf Spannmittel 22 über jeweils ein Kopplungsmittel 62 mit einem Abtriebskegelrad 72 mit einem zentralen Antriebskegelrad 70 verbunden sind.

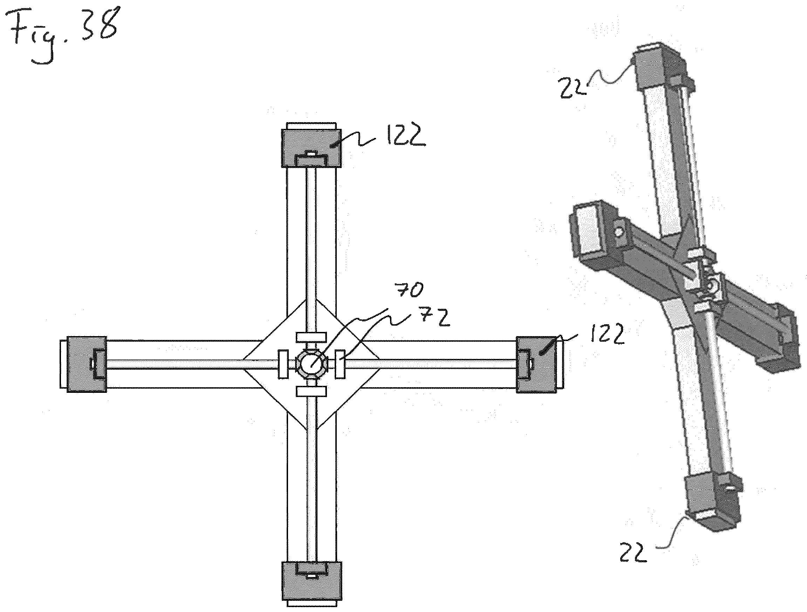

Das Beispiel von Figur 38 ist entsprechend, jedoch mit 4 Spannmitteln ausgeführt.

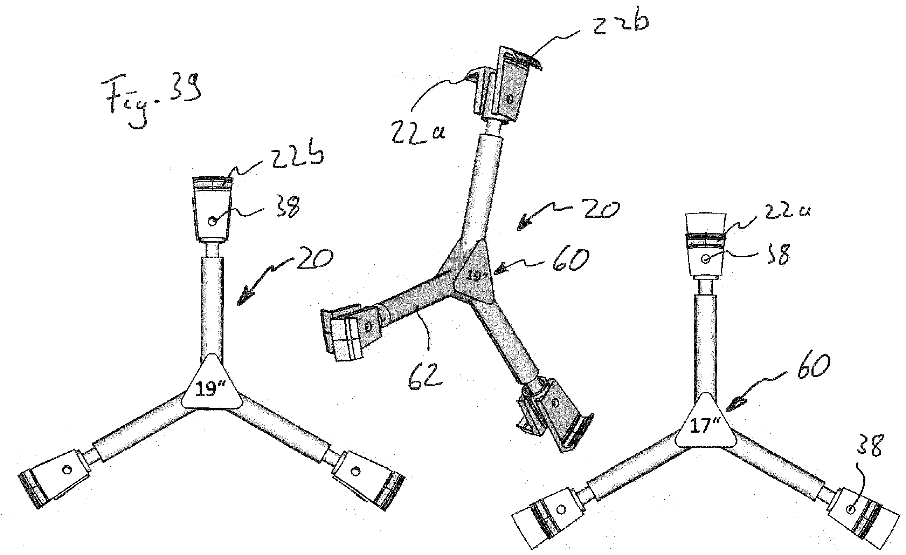

Der Montageabschnitt 20 aus Figur 39 weist Spannmittel 22 auf, die jeweils doppelseitig ausgeführt sind, wobei jede Seite auf einen anderen Felgendurchmesser abgestimmt ist, so kann beispielsweise eine Seite auf einen Felgendurchmesser von 17 Zoll und die andere Seite auf einen Felgendurchmesser von 19 Zoll abgestimmt sein. Derartige doppelseitige Spannmittel 22 können an jedem der erfindungsgemäßen Aufsätze 14 vorgesehen sein. Durch einfaches Drehen um 180° können die Spannmittel 22 auf unterschiedliche Felgengrößen voreingestellt werden. Über die Verspanneinrichtung 60 können Sie dann über eine möglichst kleine Wegstrecke in den Hintergriff bewegt werden.

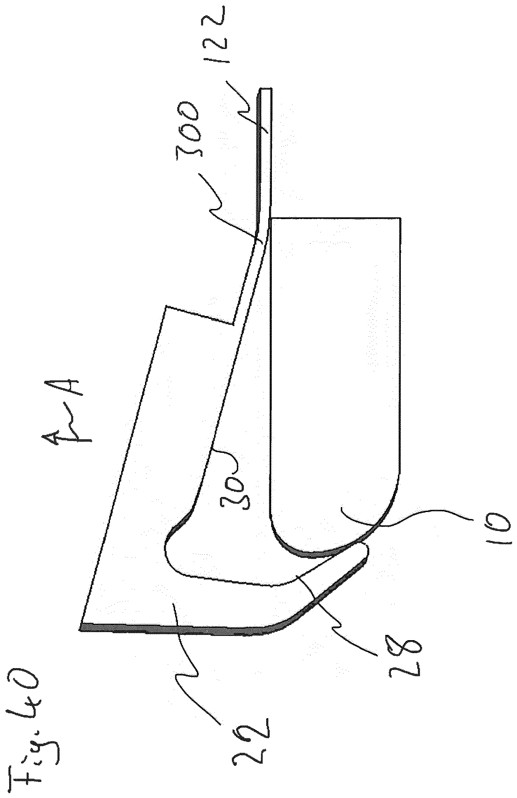

Figur 40 zeigt ein Spannmittel 22, welches nicht unter den Schutzbereich der beanspruchten Erfindung fällt; und dessen Kopplungsabschnitt 122 durch ein Federblech 300 gebildet ist. Das Federblech 300 ist mit der Anlagefläche 30 sowie dem Hintergriffabschnitt 28 verbunden. Der Hintergriffabschnitt 28 und die Anlagefläche 30 sind gegenüber dem Kopplungsabschnitt 122 durch die Verbindung mittels des Federblechs 300 nach axial außen gegenüber dem Kopplungsabschnitt 122 schwenkbar.

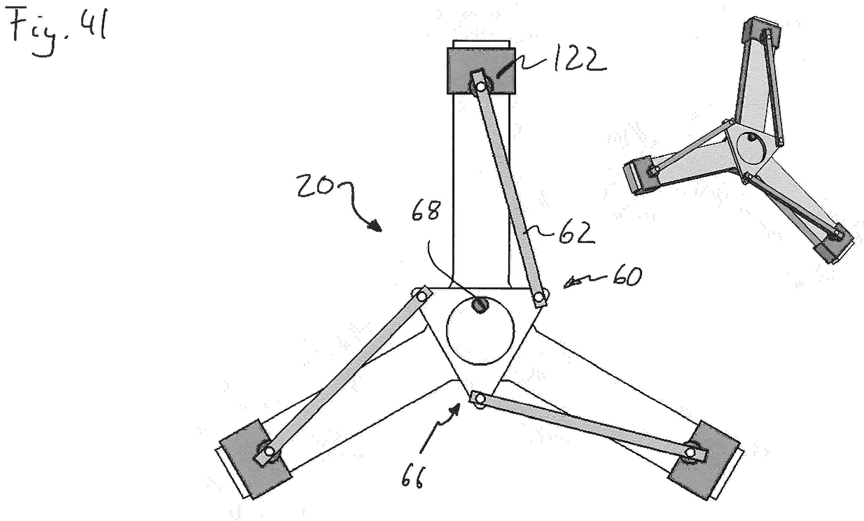

Wie in Figur 41 gezeigt kann der Montageabschnitt 20, eine Verspanneinrichtung 60 aufweisen, bei der die Kopplungsmittel 62 bei einer Rotationsbewegung des Betätigungselement 68 gegenüber dem Kopplungsabschnitt 122 verschwenkt werden, wodurch die Kopplungsabschnitt und 122 radial einwärts bewegt werden.

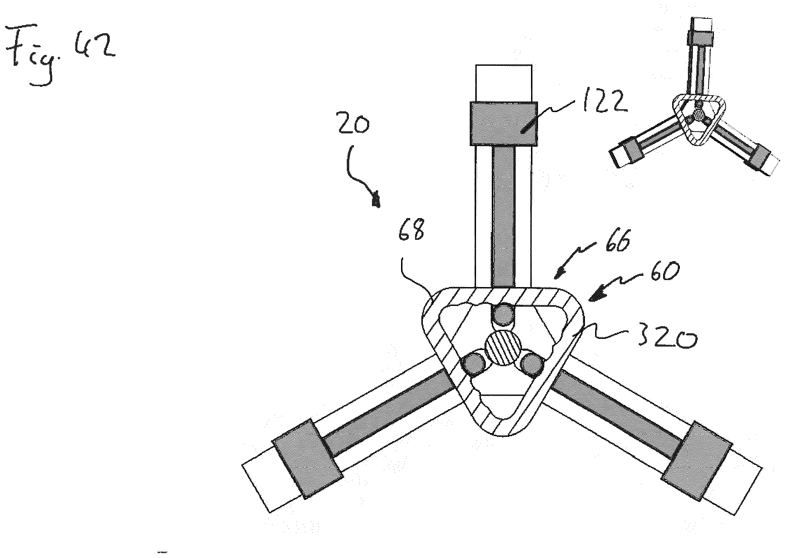

Wie in Figur 42 gezeigt kann der Montageabschnitt 20, eine Verspanneinrichtung 60 aufweisen, bei der die Kopplungsmittel mit einem eine Kurvenbahn 320 umfassenden Getriebe 66 gekoppelt sind. Die Kurvenbahn 320 bildet im vorliegenden Beispiel auch gleichzeitig das Betätigungselement 68 wobei bei dessen Rotation um die axiale Richtung die Kopplungsabschnitte 122 radial einwärts bewegt werden.

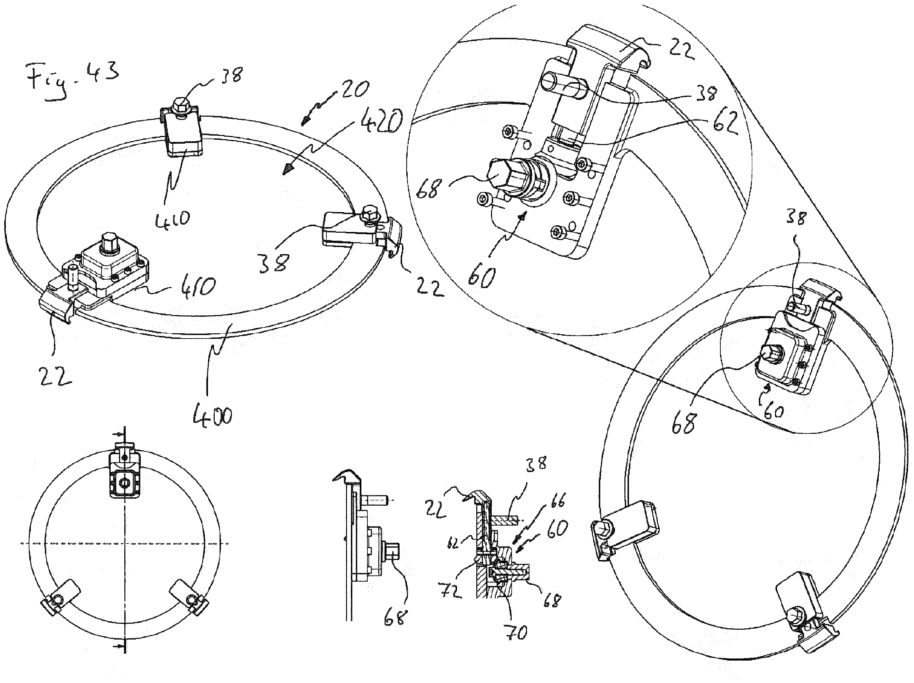

Wie in Figur 43 gezeigt, so kann der Montageabschnitt 20 mit einer Verspanneinrichtung 60 ausgebildet sein, die im Bereich der Spannmittels 22 angeordnet ist. Die Verspanneinrichtung 60, die in Figur 43 illustriert ist, umfasst ein Getriebe 66 mit einem Antriebskegelrad 70 sowie einem Abtriebskegelrad 72, das über ein Kopplungsmittel 62 mit dem Spannmittel 22 gekoppelt ist. Bei Betätigung des Betätigungselements 68 bzw. beim Rotieren dieses Betätigungselements 68 wird das Antriebskegelrad 70 in Rotation versetzt, welches in das Abtriebskegelrad 72 eingreift, so dass dieses ebenso rotiert, wodurch auch das mit dem Abtriebskegelrad 72 bewegungsgekoppelte Kopplungsmittel 62 rotiert. Das Kopplungsmittel 62 trägt ein Gewinde, welches in ein entsprechendes Gegengewinde am Kopplungsabschnitt 122 des Spannmittels 22 eingreift und entsprechend für eine translatorische Verschiebung des Spannmittels 22 sorgen kann. Andere Arten an Verspanneinrichtungen 60 sind ebenso denkbar.

Der Montageabschnitt aus Figur 20 weist einen vorliegenden kreisringförmig ausgebildeten Grundkörper 400 auf. An dem Grundkörper 400 sind die einzelnen Spannmittel 22 angebracht. Von den Spannmitteln 22 ist im vorliegenden Beispiel nur eines für die Verspanneinrichtung 60 nach radial innen bewegbar.

Bei der Variante von Figur 43 trägt jedes der Spannmittel 22 eine Befestigungseinrichtung 38. Die Spannmittel 22 sind in jeweiligen Aufnahmen 410 aufgenommen. Die Aufnahme 410 des beweglichen Spannmittels 22 ist dabei derart ausgebildet, dass dieses innerhalb der Aufnahme 410 translatorisch verschiebbar ist. Die Verwendung einer im Bereich des Spanmittels 22 angeordneten Verspanneinrichtung 60 ist mit einem andersartig ausgeformten Grundkörper 400, insbesondere mit den in dieser Anmeldung beschriebenen weiteren Ausführungsformen des Montageabschnitts 20, kombinierbar.

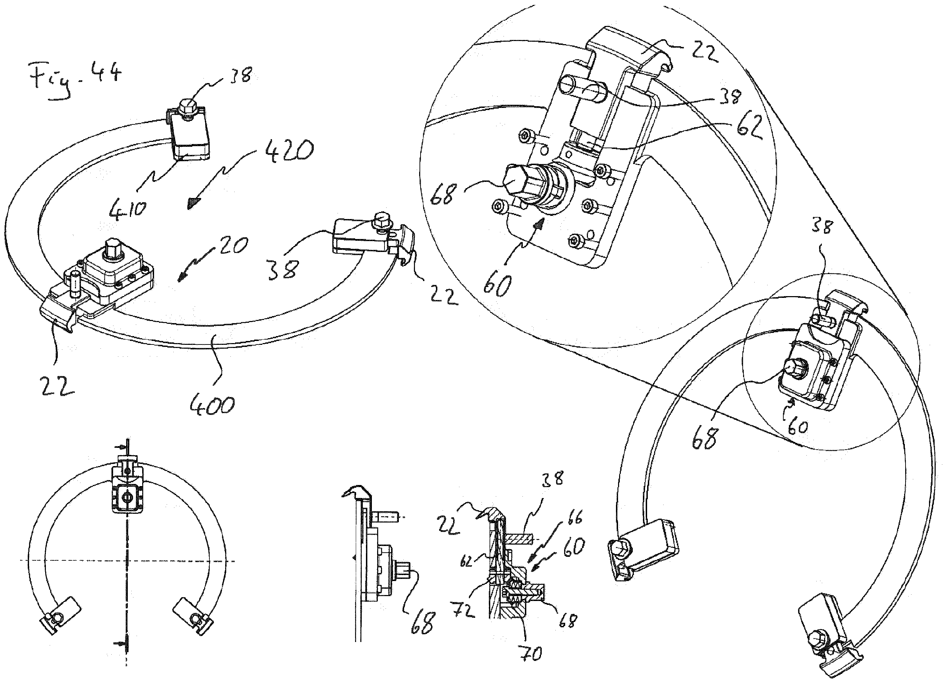

Ein Grundkörper 400 des Montageabschnitts 20, insbesondere in Kombination mit einer Verspanneinrichtung 60, die im Bereich des Spannmittels 22 angeordnet ist, welcher im Bereich des Lochkreises des Fahrzeugrades materialfrei ausgeführt ist, kann vorteilhaft sein. Ein derartiger Montageabschnitt 20 kann es bspw. ermöglichen, dass der Aufsatz 14 in einfacher Weise für Felgen 2, die in diesem Bereich nach axial außen hervorstehen, verwendet werden kann. Der Grundkörper 400 des Montageabschnitts kann, wie in Figur 43 gezeigt, in umfänglicher Richtung geschlossen ausgeführt sein und einen zentralen materialfreien Bereich 420 umschreiben. Im Sinne der Erfindung sind jedoch auch Ausführungsformen, ähnlich der, die in Figur 44 dargestellt ist. Der zentrale materialfreie Bereich 420 kann von dem Grundkörper 400 nur teilweise umschlossen sein. Der entsprechende Montageabschnitt 20 kann hierdurch bspw. materialsparender ausgeführt werden.

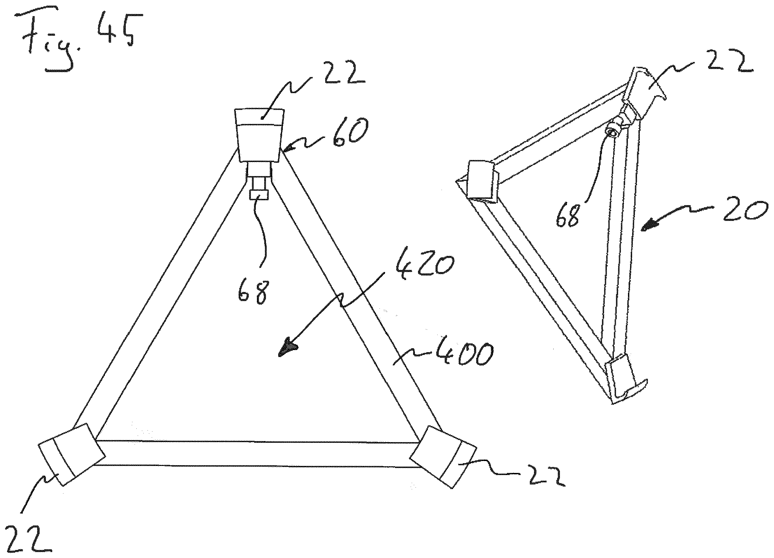

Figur 45 zeigt eine alternative Ausführungsform eines Montageabschnitts 20, der einen Grundkörper 400 aufweist, der einen zentralen materialfreien Bereich 420 in umfänglicher Richtung U geschlossen umschreibt. Auch bei dem Montageabschnitt 20, wie er in Figur 45 dargestellt ist, ist eines der Spannmittel 22 über eine im Bereich des Spannmittels angeordnete Verspanneinrichtung 60 in radialer Richtung verschiebbar ausgebildet.

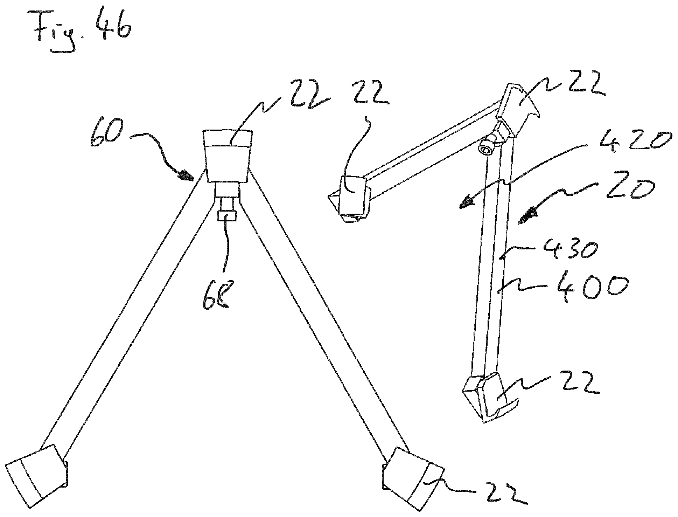

Figur 46 zeigt eine weitere Variante eines erfindungsgemäßen Montageabschnitts, wobei bei dieser Variante ein zentraler materialfreier Bereich 420 durch zwei Schenkel 430 eines Grundkörpers 400 umschrieben ist. Der zentrale materialfreie Bereich 420 ist jedoch nicht geschlossen umschrieben.

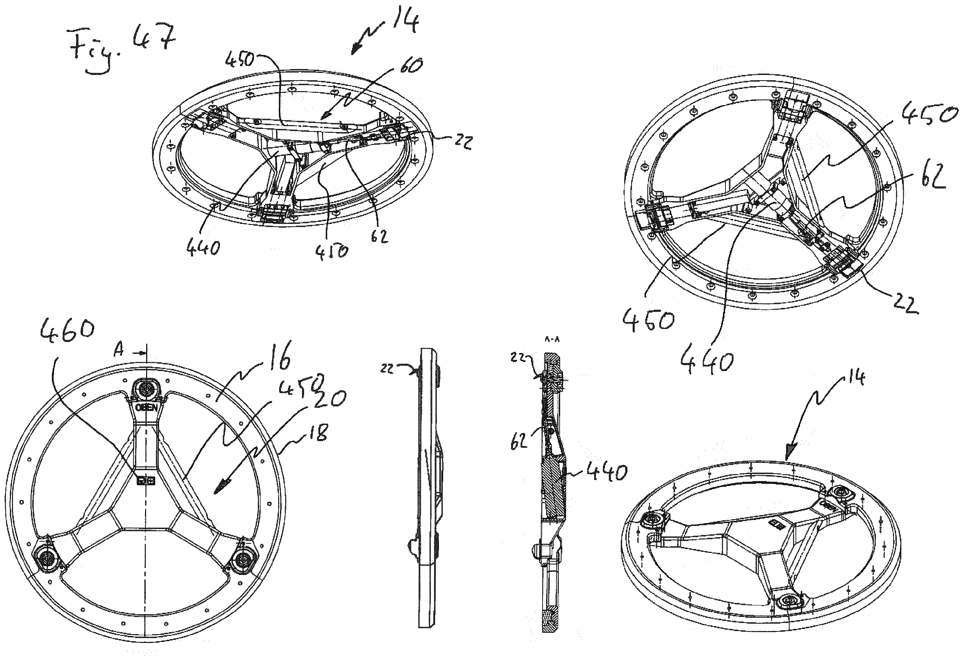

Figur 47 zeigt einen erfindungsgemäßen Aufsatz 14, der eine Verspanneinrichtung 60 mit einem elektrischen Antrieb 440 aufweist. Ein elektrischer Antrieb 440 der Verspanneinrichtung 60 kann bei allen Ausführungsformen des Aufsatzes 14 vorgesehen sein.

Der elektrische Antrieb 440 ist im vorliegenden Beispiel ausgebildet, um das Kopplungsmittel 62 in Rotation zu versetzen, welches dann über ein Gewinde zur translatorischen Verschiebung des Spannmittels 22 zusammenwirken kann. Ein derartiger elektrischer Antrieb zur Verspannung der Spannmittel 22 kann bei sämtlichen in dieser Anmeldung beschriebenen Montageabschnitten vorgesehen sein. Der elektrische Antrieb 440 ist vorliegend über zwei Betätigungselemente 450 betätigbar, wobei diese Betätigungselemente 450 zur Betätigung des elektrischen Antriebs 440 nach radial innen drückbar sind und gleichzeitig als Griffe zum Ansetzen des Montageabschnitts 20 am Fahrzeugrad 1 dienen. Vorliegend ist über eine Auswahleinheit 460 an dem Aufsatz 14 die Drehrichtung des elektrischen Antriebs 440 einstellbar, so dass der elektrische Antrieb 440 sowohl zum Verspannen als auch zum Lösen des Aufsatzes 14 bzw. des Montageabschnitts 20 verwendbar ist.

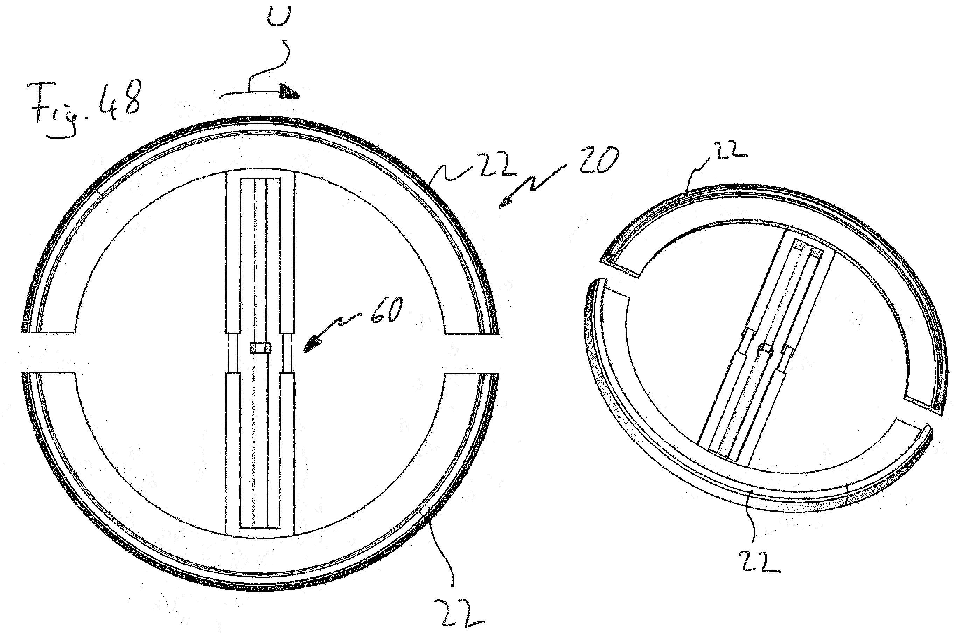

Figur 48 zeigt eine weitere Variante eines Montageabschnitts 20 eines erfindungsgemäßen Aufsatzes. Der Montageabschnitt 20 aus Figur 48 umfasst Spannmittel 22, die eine Erstreckung in umfänglicher Richtung von etwa 180° aufweisen. Derartige Spannmittel 22 erlauben einen sehr großflächigen Kontakt mit dem Felgenhorn 10 des Fahrzeugrads. Ansonsten ist der Montageabschnitt 20 in der Ausführungsform von Figur 48 ähnlich dem von Figur 15 ausgebildet.

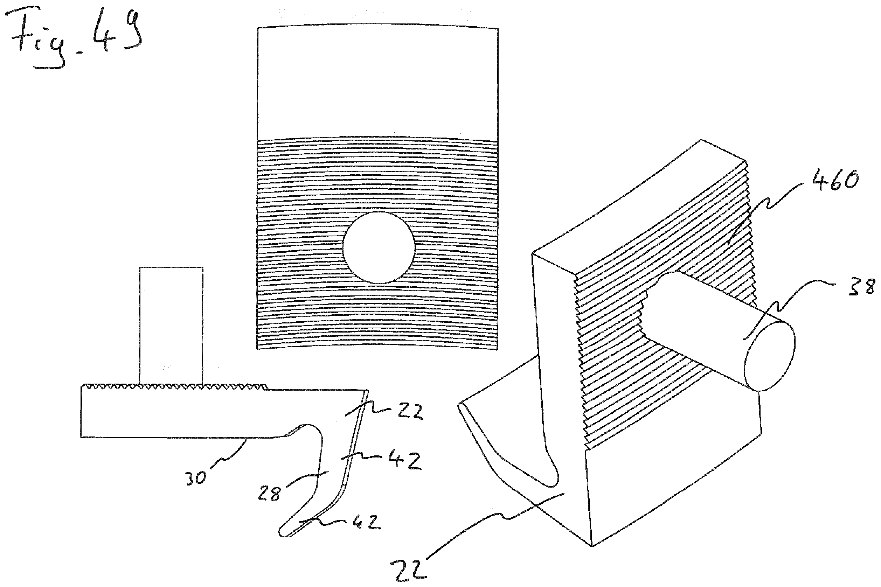

In Figur 49 ist ein Spannmittel gezeigt, welches nicht unter den Schutzbereich der beanspruchten Erfindung fällt, und dass auf seiner axial äußeren Seite eine Riffelung 460 zur Verbesserung des Kontakts mit dem Laufflächenabschnitt 16 aufweist.

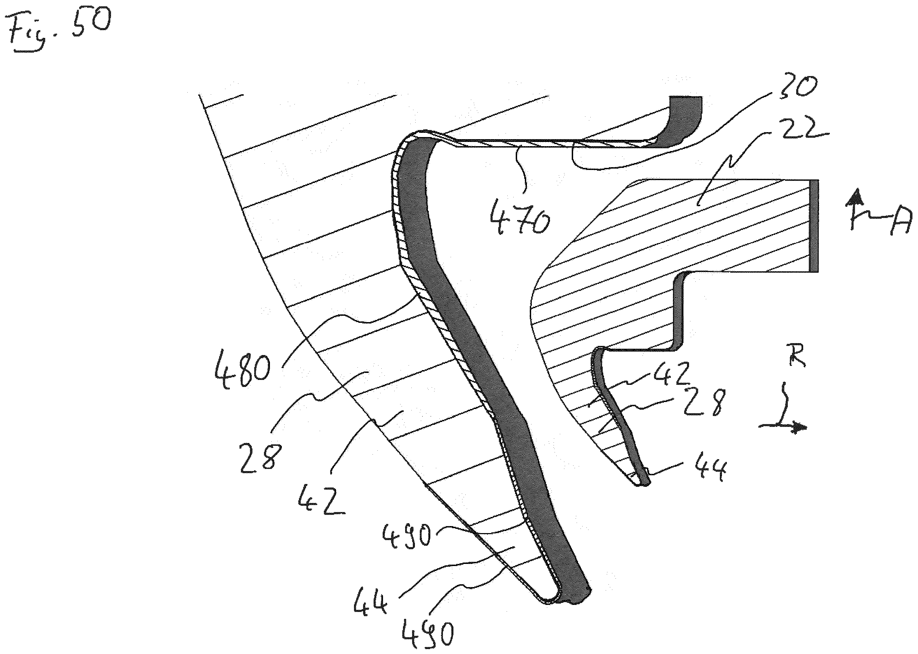

Figur 50 illustriert, dass ein erfindungsgemäßes Spannmittel eine oder mehrere Beschichtungen aufweisen kann. Beispielsweise können die erfindungsgemäßen Spannmittel 22 im Bereich der Anlagefläche 30 eine Beschichtung 470 aufweisen, die haftungserhöhend ausgebildet ist. Insbesondere ist in diesem Bereich eine Gummierung vorgesehen. Im Bereich des Hintergriffabschnitts 28 kann insbesondere im Bereich des Halteabschnitts 42 eine ebenfalls haftungserhöhende Beschichtung 480 vorgesehen sein, die ebenfalls insbesondere als Gummierung ausgebildet sein kann. Im Bereich des Einführabschnitts 44 kann insbesondere eine reibungsvermindernde Beschichtung 490 vorgesehen sein, welche insbesondere beispielsweise als Teflonbeschichtung ausgeführt sein kann. Die Beschichtung im Bereich des Einführabschnitts 44 kann auf der radial innen- und/oder auf der radial außenliegenden Seite des Einführabschnitts 44 angeordnet sein. Die Beschichtung des Einführabschnitts 44 kann insbesondere die komplette radial äußere Oberseite des Hintergriffabschnitts 28 bedecken.

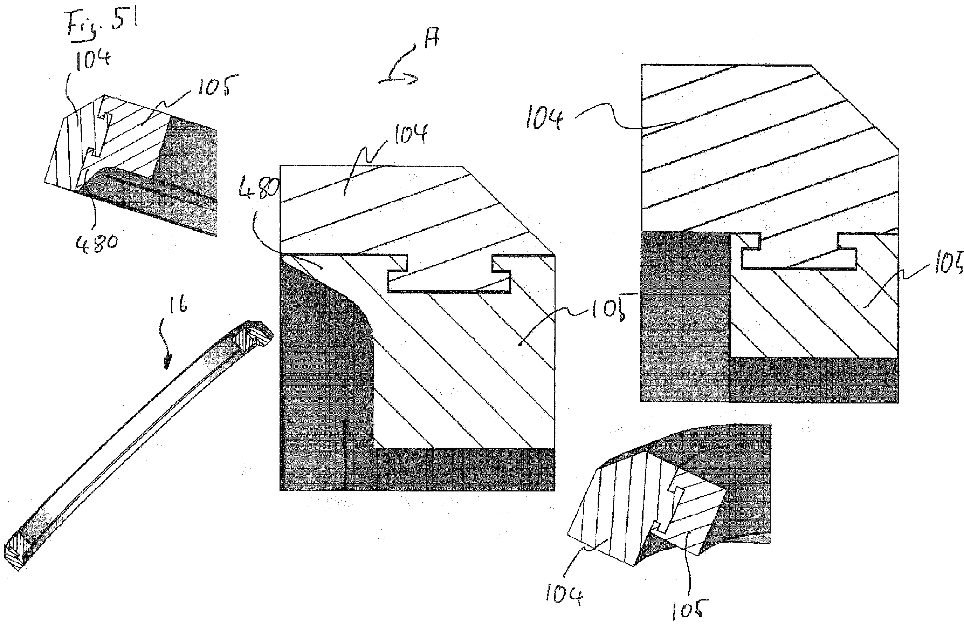

Figur 51 illustriert, dass bei den erfindungsgemäßen Aufsätzen 14 der Tragabschnitt 105 nach axial innen überstehend abragend ausgeführt sein kann. Denkbar ist auch, wie in den beiden Darstellungen in Figur 51 rechts gezeigt, dass der Tragabschnitt 105 ohne einen abragenden Abschnitt 480 ausgebildet ist, dafür aber der Laufbelag 104 nach axial innen übersteht. Eine besonders hohe Stabilität kann sich jedoch durch die Verwendung eines Tragabschnitts 105 mit einem nach axial innen abragenden Abschnitt 480 ergeben.

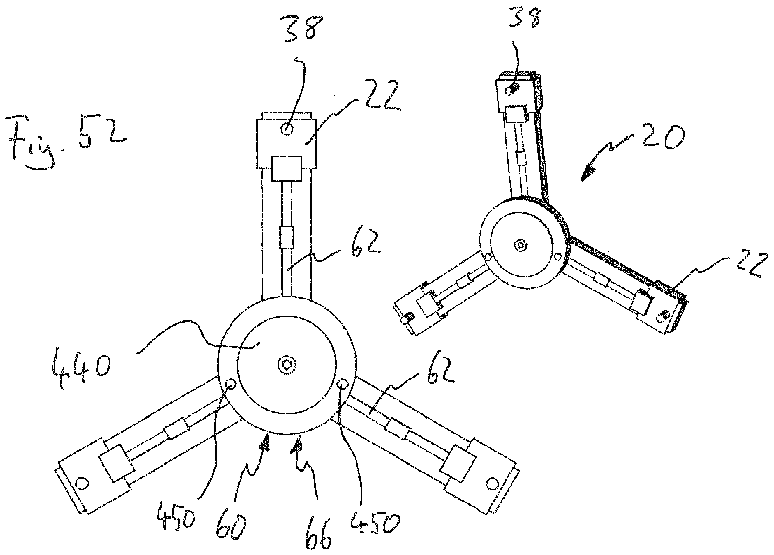

Figur 52 illustriert, dass ein elektrischer Antrieb auch zentral angeordnet sein kann und mehrere Spannmittel 22 bewegungsgekoppelt nach radial innen bzw. außen bewegen kann. Der elektrische Antrieb 440 aus Figur 52 umfasst Betätigungselemente 450, die als Bedienknöpfe 450 ausgebildet sind, mit denen sich die Spannmittel 22 über den elektrischen Antrieb 440 jeweils nach radial innen oder nach radial außen bewegen lassen.

Bei der Darstellung von Figur 52 verdeckt der elektrische Antrieb 440 das Getriebe 60, welches ähnlich dem Getriebe 66 aus Figur 8 ausgebildet sein kann. Das Getriebe 66 kann ausgebildet sein, um eine Rotationsbewegung, die durch den elektrischen Antrieb 440 in das Getriebe eingeleitet wird, bspw. über das Betätigungselement 68, ähnlich wie in Figur 8, in die entsprechende Rotationsbewegung der Kopplungselemente 62 umzuwandeln.

Zur Stromversorgung des elektrischen Antriebs 440 eines erfindungsgemäßen Aufsatzes 14 kann sowohl das Bordspannungsnetz des Fahrzeugs verwendet werden, beispielweise über eine 12V-Steckdose im Kofferraum oder den Zigarettenanzünder oder es kann auch Fremdstrom, beispielsweise ein elektrischer Energiespeicher, ein Akku, oder auch eine Batterie verwendet werden.

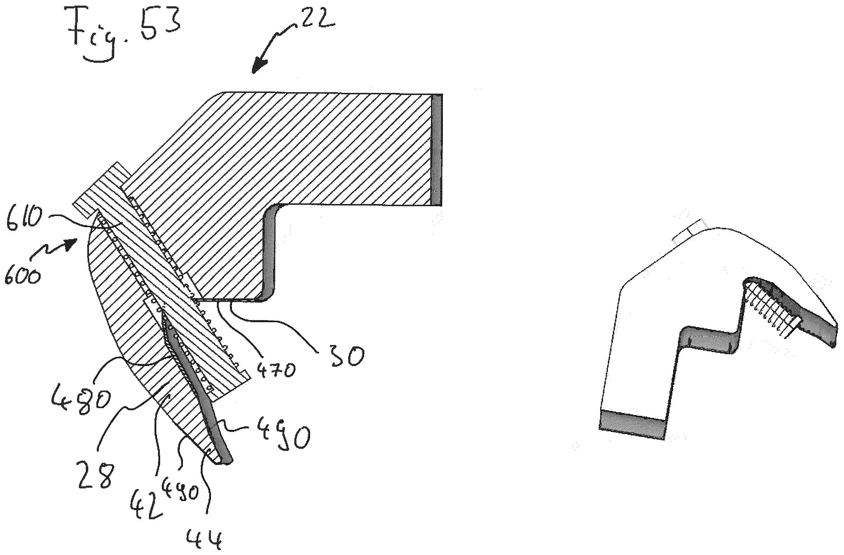

Bei den erfindungsgemäßen Aufsätzen 14 sowie den erfindungsgemäßen Spannmitteln 22 kann, wie in Figur 53 illustriert, vorgesehen sein, dass eine, insbesondere mechanische, Indikationseinrichtung 600 vorgesehen ist, die einem Spannmittel 22 zugeordnet ist und über die erkennbar ist, ob das Spannmittel 22 in Hintergriff, vorzugsweise ob das Spannmittel 22 in der vorgesehenen Stellung in Hintergriff, mit dem Felgenhorn 10 steht, insbesondere wobei die Indikationseinrichtung 600 ein federgespanntes Element 610 umfasst, das im Bereich des Hintergriffabschnitts 28 derart in die vorgesehene Position des Felgenhorns 10 gespannt ist, dass es beim Hintergreifen des Felgenhorns 10 durch das Spannmittel 22 durch den Kontakt mit dem Felgenhorn 10 aus dieser Position gedrängt wird und vorzugsweise auf der axial und/oder radial außen liegenden Seite des Spannmittels 22 über dieses hinaussteht, so dass aus dieser Richtung erkennbar ist, ob das Felgenhorn 10 wie vorgesehen hintergriffen ist. Die Indikationseinrichtung 600 bzw. deren federgespanntes Element 610 kann auch in umfänglicher Richtung U versetzt zu dem Spannmittel 22 angeordnet sein. Die Indikationseinrichtung 600 bzw. deren federgespanntes Element 610 kann jedoch auch in das Spannmittel 22 integriert sein, wie in Figur 53 illustriert.

Das federgespannte Element 610 der Indikationseinrichtung 600 kann sich insbesondere durch das Material des Spannmittels 22 erstrecken. Insbesondere kann die Verspannrichtung des federgespannten Elements 610 parallel zum Verlauf des Halteabschnitts 42 des Spannmittels 22 sein.

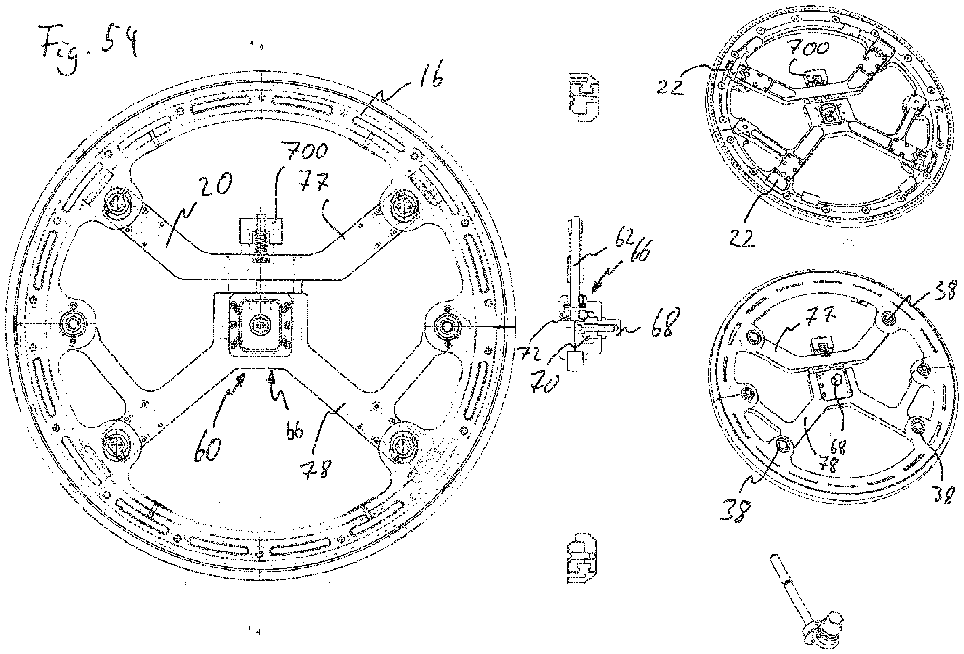

Figur 54 zeigt eine Ausführungsform des erfindungsgemäßen Aufsatzes, die ähnlich zu der in Figur 22 gezeigten ausgebildet ist. Bei der in Figur 54 gezeigten Ausführungsform ist anschaulich illustriert, das die beiden zueinander beweglichen Segmente 77, 78 des Montageabschnitts 20 aufeinander zu verspannt sein können. Bspw. kann, wie in Figur 54 illustriert, ein über das Getriebe 66, das ähnlich dem in Figur 22 gezeigten aufgebaut ist, das Kopplungsmittel 62 rotierbar sein, so dass ein Zugelement 700 über das Kopplungsmittel 62 in radialer Richtung R bewegbar ist. Hierzu trägt das Kopplungsmittel 62 vorliegend ein Außengewinde und das Zugelement 700 ein Innengewinde. Über eine Feder 710 ist das erste bewegliche Segment 77 von dem Zugelement 700 weg in Richtung des zweiten beweglichen Segments 78 gespannt.

## Patentansprüche

1. Spannmittel (22) zum Verspannen eines Aufsatzes (14) an einer Felge (2) eines Fahrzeugrads (1), wobei der Aufsatz (14) dazu ausgebildet ist, in einem am Fahrzeugrad (1) befestigten Betriebszustand einen Fahrbetrieb bei eingeschränkter Reifenfunktion zu ermöglichen, wobei
- das Spannmittel (22) in einem Schnitt durch eine in radialer und axialer Richtung (A) verlaufenden Schnittebene einen in axialer Richtung (A) abragenden und nach radial innen verlaufenden, hakenartig ausgebildeten Hintergriffabschnitt (28) zum formschlüssigen Hintergreifen des Felgenhorns (10) umfasst,
- der Hintergriffabschnitt (28) in eine Anlagefläche (30) übergeht, die dazu ausgebildet und angeordnet ist, das Felgenhorn (10) von axial außen zu kontaktieren,
**dadurch gekennzeichnet, dass**
- der Hintergriffabschnitt (28) des Spannmittels (22) einen Halteabschnitt (42), der zur Aufnahme von Spannkräften ausgebildet ist, und einen Einführabschnitt (44) aufweist, der dazu ausgebildet ist, ein Einfahren des Hintergriffabschnitts (28) zwischen das Felgenhorn (10) und einer am Felgenhorn (10) anliegenden Reifenseitenwand zu ermöglichen, wobei der Einführabschnitt (44) axial innen gegenüber dem Halteabschnitt (42) angeordnet ist, und
- der Einführabschnitt (44) eine felgenhornseitige Oberfläche aufweist, die in der in radialer und axialer Richtung verlaufenden Schnittebene gesehen gegenüber der axialen Richtung in einem flacheren Winkel verläuft als eine felgenhornseitige Oberfläche des Halteabschnitts (42).

2. Spannmittel (22) zum Verspannen eines Aufsatzes (14) an einer Felge (2) eines Fahrzeugrads (1), wobei der Aufsatz (14) dazu ausgebildet ist, in einem am Fahrzeugrad (1) befestigten Betriebszustand einen Fahrbetrieb bei eingeschränkter Reifenfunktion zu ermöglichen, wobei
- das Spannmittel (22) einen hakenartig ausgebildeten Hintergriffabschnitt (28) zum formschlüssigen Hintergreifen des Felgenhorns (10) umfasst,
- der Hintergriffabschnitt (28) um eine tangential zur Umfangsrichtung (U) verlaufende Achse (50) gegenüber wenigstens einem Teil des übrigen Spannmittels (22) verschwenkbar ist und in wenigstens einer ersten Stellung (S1) und einer zur ersten Stellung (S1) um die Achse (50) verschwenkten, zweiten Stellung (52) positionierbar ist,
- der Hintergriffabschnitt (28) in der ersten Stellung (S1) in einem Schnitt durch eine in radialer und axialer Richtung verlaufenden Schnittebene in axialer Richtung abragend und nach radial innen verlaufend hakenartig ausgebildet ist, **dadurch gekennzeichnet, dass**
- der Hintergriffabschnitt (28) des Spannmittels (22) einen Halteabschnitt (42), der zur Aufnahme von Spannkräften ausgebildet ist, und einen Einführabschnitt (44) aufweist, der dazu ausgebildet ist, ein Einfahren des Hintergriffabschnitts (28) zwischen das Felgenhorn (10) und einer am Felgenhorn (10) anliegenden Reifenseitenwand zu ermöglichen, wobei der Einführabschnitt (44) axial innen gegenüber dem Halteabschnitt (42) angeordnet ist, und
- der Einführabschnitt (44) eine felgenhornseitige Oberfläche aufweist, die in der in radialer und axialer Richtung verlaufenden Schnittebene gesehen gegenüber der axialen Richtung in einem flacheren Winkel verläuft als eine felgenhornseitige Oberfläche des Halteabschnitts (42).

3. Spannmittel nach Anspruch 2, **dadurch gekennzeichnet, dass** das Spannmittel (22) eine Anlagefläche (30) aufweist, die dazu ausgebildet und angeordnet ist, das Felgenhorn (10) von axial außen zu kontaktieren, wobei der Hintergriffabschnitt (28) gegenüber der Anlagefläche (30) verschwenkbar ist.

4. Spannmittel nach Anspruch 1 oder 3, **dadurch gekennzeichnet, dass** der Hintergriffabschnitt (28) in die Anlagefläche (30) in einem Übergangsbereich (32) übergeht, wobei die Oberfläche des Übergangsbereichs (32) zwischen dem Hintergriffabschnitt (28) und der Anlagefläche (30) einen zurückversetzten Abschnitt (35) aufweist, der in axialer Richtung (A) gegenüber der Anlagefläche (30) nach axial außen versetzt angeordnet ist.

5. Spannmittel (22) nach einem der Ansprüche 1, 3 oder 4, **dadurch gekennzeichnet, dass** das Spannmittel (22) einen Befestigungsabschnitt (36) zur Verbindung des Spannmittels (22) mit dem Aufsatz (14) aufweist.

6. Spannmittel (22) nach einem der Ansprüche 1 bis 5, **dadurch gekennzeichnet, dass** der Halteabschnitt (42) eine haftungserhöhende Beschichtung (480) aufweist und/oder der Einführabschnitt (44) eine haftungsreduzierende Beschichtung (490) aufweist.

7. Spannmittel (22) nach Anspruch 6, **dadurch gekennzeichnet, dass** der Einführabschnitt (44) eine geringere Materialdicke (46) als der Halteabschnitt (42) aufweist und/oder dass der Einführabschnitt (44) eine nach axial innenliegend, insbesondere kontinuierlich, abnehmende Materialdicke aufweist.

8. Spannmittel nach Anspruch 6 oder 7, **dadurch gekennzeichnet, dass** der Halteabschnitt (42) sich in Umfangsrichtung (U) weiter erstreckt als der Einführabschnitt (44).

9. Spannmittel (22) nach einem Ansprüche 6 bis 8, **dadurch gekennzeichnet, dass** der Halteabschnitt (42) einen sich nach axial innen in seiner Umfangserstreckung verjüngenden Abschnitt aufweist und/oder dass der Einführabschnitt (44) einen sich nach axial innen in seiner Umfangserstreckung verjüngenden Abschnitt aufweist oder über seine gesamte Erstreckung nach axial innen sich in seiner Umfangserstreckung verjüngend ausgebildet ist.

10. Spannmittel (22) nach einem der Ansprüche 1 bis 9, **dadurch gekennzeichnet, dass** die Anlagefläche (30) in einer in radialer und/oder Umfangsrichtung (U) verlaufenden Ebene liegt.

11. Spannmittel (22) nach einem der Ansprüche 1 bis 10, **dadurch gekennzeichnet, dass** die felgenhornseitige Oberfläche des Einführabschnitts (42) in der in radialer und axialer Richtung (A) verlaufenden Schnittebene gesehen gegenüber der axialen Richtung (A) in einem Winkel von wenigstens 10°, vorzusgweise wenigstens 15°, verläuft und/oder dass die felgenhornseitige Oberfläche des Halteabschnitts (42) in der in radialer und axialer Richtung (A) verlaufenden Schnittebene gesehen gegenüber der axialen Richtung (A) in einem Winkel von wenigstens 16°, vorzugsweise wenigstens 20° verläuft.

12. Spannmittel (22) nach einem der Ansprüche 1 bis 11, **dadurch gekennzeichnet, dass** die felgenhornseitige Oberfläche des Einführabschnitts (44) in der in radialer und axialer Richtung verlaufenden Schnittebene gesehen gegenüber der axialen Richtung in einem Winkel von höchstens 40°, vorzugsweise höchstens 35° verläuft und/oder dass die felgenhornseitige Oberfläche des Halteabschnitts (42) in der in radialer und axialer Richtung (A) verlaufenden Schnittebene gesehen gegenüber der axialen Richtung (A) in einem Winkel von höchstens 50°, vorzugsweise höchstens 45° verläuft.

13. Spannmittel (22) nach einem der Ansprüche 1 bis 12, **dadurch gekennzeichnet, dass** das Spannmittel (22) ein Sicherungsmittel (88) umfasst, welches in Umfangsrichtung (U) zu dem Hintergriffabschnitt (28) versetzt und um eine Schwenkachse (90), die vorzugsweise tangential zur Umfangsrichtung (U) verläuft, verschwenkbar an dem Spannmittel (22) angeordnet ist, wobei das Sicherungsmittel (88) einen Formschlussabschnitt (92) umfasst, der dazu ausgebildet ist, durch Verschwenken des Sicherungsmittels (88) in einen formschlüssigen Hintergriff mit dem Felgenhorn (10) gebracht zu werden.

14. Spannmittel nach Anspruch 13, **dadurch gekennzeichnet, dass** der Formschlussabschnitt (92) des Sicherungsmittels (88) einen Kontaktabschnitt (94) umfasst, der dazu ausgebildet ist, das Felgenhorn (10) auf seiner reifenzugewandten Seite zu kontaktieren, wobei der Kontaktabschnitt (94) entsprechend der Kontur des Felgenhorns (10) geformt ist.

15. Spannmittel nach einem der Ansprüche 1 bis 14, **dadurch gekennzeichnet, dass** das Spannmittel (22) einen mehrteiligen Hintergriffabschnitt (28) mit zueinander in radialer Richtung beweglichen Teilabschnitten (140, 142, 144) umfasst.

16. Spannmittel (22) nach einem der Ansprüche 1 bis 15, **dadurch gekennzeichnet, dass** der Hintergriffabschnitt (28) derart ausgebildet ist, dass das Material des Hintergriffabschnitts (28), welches axial innerhalb einer Referenzebene (180) liegt, vollständig in einem gedachten Korridor (182) liegt, wobei die Referenzebene (180) in einem Abstand (184) von 4, 6 oder 7 mm zu einer Anlageebene (186), die vorzugsweise mit der Anlagefläche (30) zusammenfällt, angeordnet ist, wobei die Anlageebene (186) eine in radialer Richtung (R) und Umfangsrichtung (U) verlaufende Ebene ist, in welcher der axial äußere Kontaktpunkt des Felgenhorns (10) mit dem Spannmittel (22) liegt, wobei der gedachte Korridor (182) eine Breite (188) von 12mm oder 10mm oder 9mm oder 8mm oder 7mm oder 6mm oder 5mm oder 4mm aufweist und seine Mittelachse (190) in einem Winkel (192) von wenigstens 42°, vorzugsweise wenigstens 45° und/oder höchstens 72°, vorzugsweise höchstens 69° und besonders bevorzugt in einem Winkel von 57° zur radialen Richtung R verläuft, wobei die Breite (188) und der Winkel (192) der Mittelachse (190) bezogen auf einen Blick auf eine in radialer und axialer Richtung (A) verlaufende Ebene definiert sind.

17. Spannmittel (22) nach Anspruch 16, **dadurch gekennzeichnet, dass** die Mittelachse (190) des gedachten Korridors (182) beim Blick auf die in radialer und axialer Richtung verlaufende Ebene durch den Materialmittelpunkt (194) des Hintergriffabschnitts (28) in dessen Schnitt mit der Referenzebene (180) verläuft und/oder dass die Mittelachse (190) des gedachten Korridors (182) beim Blick auf die in radialer Richtung (R) und axialer Richtung (A) verlaufende Ebene durch den Materialmittelpunkt (200) des Hintergriffabschnitts (28) in dessen Schnitt mit einer zur Referenzebene (180) parallelen Ebene (202) verläuft, in der das axial innere Ende des Hintergriffabschnitts (28) liegt.

18. Aufsatz (14) für ein Fahrzeugrad (1), das eine Felge (2) und einen auf der Felge (2) angeordneten Reifen (3) umfasst, wobei der Aufsatz (14) wenigstens zwei Spannmittel (22) nach Anspruch 1 oder 2 aufweist und dazu ausgebildet ist, in einem am Fahrzeugrad (1) befestigten Betriebszustand einen Fahrbetrieb bei eingeschränkter Reifenfunktion zu ermöglichen, wobei
- der Aufsatz einen mehrteilig aufgebauten Laufflächenabschnitt (16) umfasst, der eine Lauffläche (18) des Aufsatzes (14) zur Kontaktierung der Fahrbahn aufweist,
- der Aufsatz (14) einen Montageabschnitt (20) umfasst, der, wenn der Aufsatz (14) im Betriebszustand am Fahrzeugrad (1) befestigt ist, radial innenliegend von der Lauffläche (18) angeordnet ist,
- der Aufsatz (14) eine Verspanneinrichtung (60) umfasst, mittels der wenigstens ein Spannmittel (22) in einer Verspannbewegung (V) relativ zu dem Montageabschnitt (20) nach radial innen bewegbar ist,
**dadurch gekennzeichnet, dass**
- der Laufflächenabschnitt (16) wenigstens abschnittsweise von dem Montageabschnitt (20) lösbar oder gegenüber diesem beweglich ist, und
- wenigstens ein, vorzugsweise jedes, Spannmittel (22) einen Befestigungsabschnitt (36) mit einer Befestigungseinrichtung (38) aufweist, mittels der der Laufflächenabschnitt (16) an dem Spannmittel (22) befestigbar und in axialer Richtung (A) gegen ein Spiel gegenüber dem Spannmittel (22) sicherbar ist.

19. Aufsatz (14) nach Anspruch 18, **dadurch gekennzeichnet, dass** jedes Spannmittel (22) einen Kopplungsabschnitt (122) umfasst, mit dem es mit der Verspanneinrichtung (60) gekoppelt ist, wobei bei der Verspannbewegung (V) des Spannmittels (22) die Bewegung des Kopplungsabschnitts (122) bezüglich des Montageabschnitts (20) rein translatorisch, vorzugsweise ausschließlich nach radial innen gerichtet, verläuft, wobei alle Spannmittel (22) in einer Verspannbewegung (V) relativ zu dem Montageabschnitt (20) gleichförmig und zueinander bewegungsgekoppelt nach radial innen bewegbar sind.

20. Aufsatz (14) für ein Fahrzeugrad (1), das eine Felge (2) und einen auf der Felge (2) angeordneten Reifen (3) umfasst, wobei der Aufsatz (14) wenigstens zwei Spannmittel (22) nach Anspruch 1 oder 2 aufweist und dazu ausgebildet ist, in einem am Fahrzeugrad (1) befestigten Betriebszustand einen Fahrbetrieb bei eingeschränkter Reifenfunktion zu ermöglichen, wobei
- der Aufsatz (14) einen mehrteilig aufgebauten Laufflächenabschnitt (16) umfasst, der eine Lauffläche (18) des Aufsatzes (14) zur Kontaktierung der Fahrbahn aufweist,
- der Aufsatz (14) einen Montageabschnitt (20) umfasst, der, wenn der Aufsatz (14) im Betriebszustand am Fahrzeugrad (1) befestigt ist, radial innenliegend von der Lauffläche (18) angeordnet ist,
- der Montageabschnitt (20) wenigstens zwei zueinander bewegliche Segmente (77, 78) mit je wenigstens einem Spannmittel (22) umfasst und der Aufsatz (14) eine Verspanneinrichtung (60) umfasst, mittels der die die beiden zueinander beweglichen Segmente (77, 78) in einer Verspannbewegung (V) relativ zueinander bewegbar sind, wobei die Verspannbewegung (V) der Segmente (77, 78) bezüglich einander translatorisch und aufeinander zu gerichtet ist,
**dadurch gekennzeichnet, dass**
- der Laufflächenabschnitt (16) wenigstens abschnittsweise von dem Montageabschnitt (20) lösbar oder gegenüber diesem beweglich ist, und
- wenigstens ein, vorzugsweise jedes, Spannmittel (22) einen Befestigungsabschnitt (36) mit einer Befestigungseinrichtung (38) aufweist, mittels der der Laufflächenabschnitt (16) an dem Spannmittel (22) befestigbar und in axialer Richtung (A) gegen ein Spiel gegenüber dem Spannmittel (22) sicherbar ist.

21. Aufsatz (14) nach Anspruch 20, **dadurch gekennzeichnet, dass** wenigstens eines der zueinander beweglichen Segmente (77, 78) des Montageabschnitts (20) zwei Spannmittel (22) umfasst, die derart an dem beweglichen Segment (77, 78) des Montageabschnitts (20) angeordnet sind, dass sich ihre relative Position zueinander während der Verspannbewegung (V) nicht ändert.

22. Aufsatz (14) nach einem der Ansprüche 18 bis 21, **dadurch gekennzeichnet, dass** der Montageabschnitt (20) wenigstens einen Befestigungsabschnitt (36) mit einer Befestigungseinrichtung (38) aufweist, mittels der der Laufflächenabschnitt (16) am Montageabschnitt (20) befestigbar und in axialer Richtung (A) gegen ein Spiel gegenüber dem Montageabschnitt (20) sicherbar ist.

23. Aufsatz (14) nach Anspruch 21 oder 22, **dadurch gekennzeichnet, dass** die Befestigungseinrichtung (38) derart ausgebildet ist, dass der Laufflächenabschnitt (16) sich bei Befestigung mittels der Befestigungseinrichtung (38) in der axialen Richtung (A) zur Felge (2) hin bewegt.

24. Aufsatz (14) nach einem der Ansprüche 21 bis 23, **dadurch gekennzeichnet, dass** der Laufflächenabschnitt (16) mehrere Umfangssegmente umfasst, die jeweils einen Teil des Umfangs der Lauffläche (18) umfassen und die jeweils von dem Montageabschnitt (20) lösbar sind, und dass jedes der Umfangssegmente des Laufflächenabschnitts (16) über mindestens eine Befestigungseinrichtung (38) an dem gleichen der beweglichen Segmente des Montageabschnitts (20) befestigbar ist.

25. Aufsatz (14) nach 18 oder einem der Ansprüche 21 bis 23 und Anspruch 18, **dadurch gekennzeichnet, dass** der Laufflächenabschnitt (16) mehrere Umfangssegmente (100, 102) umfasst, die jeweils einen Teil des Umfangs der Lauffläche (18) umfassen und die jeweils von dem Montageabschnitt (20) lösbar sind, und dass der Montageabschnitt (20) einteilig ausgeführt ist und jedes der Umfangssegmente des Laufflächenabschnitts (16) an wenigstens zwei voneinander beabstandeten Stellen über je eine Befestigungseinrichtung (38) mit dem Montageabschnitt (20) verbunden ist.

26. Aufsatz (14) nach Anspruch 19 und einem der Ansprüche 21 bis 24, **dadurch gekennzeichnet, dass** wenigstens ein und vorzugsweise jedes Spannmittel (22) starr mit dem Montageabschnitt (20) verbunden ausgeführt ist.

27. Aufsatz (14) nach einem der Ansprüche 18 bis 25, **dadurch gekennzeichnet, dass** die Verspanneinrichtung (60) über ein Kopplungsmittel (62), insbesondere in Form einer Zug- oder Gewindestange, mit dem bzw. jedem Spannmittel (22) gekoppelt ist.

28. Aufsatz (14) nach einem der Ansprüche 18 bis 27, **dadurch gekennzeichnet, dass** die Verspanneinrichtung (60) ein Getriebe (66) zur Umwandlung einer rotierenden Antriebsbewegung (AB) eines Betätigungselements (68) in die translatorische Verspannbewegung aufweist.

29. Aufsatz (14) nach einem der Ansprüche 18 bis 28, **dadurch gekennzeichnet, dass** die Lauffläche (18) durch einen Laufbelag (104) gebildet ist.

30. Aufsatz (14) nach einem der Ansprüche 18 bis 28, **dadurch gekennzeichnet, dass** der Laufflächenabschnitt (16) einen in radialer Richtung (R) zur Felgenseite hin vorstehenden Tragabschnitt (105) aufweist, auf dem ein die Lauffläche (18) bildender Laufbelag (104) angeordnet ist.

31. Aufsatz (14) nach einem der Ansprüche 18 bis 28, **dadurch gekennzeichnet, dass** der Laufflächenabschnitt (16) einen Tragabschnitt (105) aufweist, auf dem ein die Lauffläche (18) bildender Laufbelag (104) angeordnet ist, wobei der Tragabschnitt (105) auf der felgenabgewandten Seite des Aufsatzes (14) derart zurückversetzt ist, dass die felgenabgewandte Seite des Tragabschnitts höchstens 40mm, vorzugsweise höchstens 10mm, in axialer Richtung (A) über das Felgenhorn (10) hinaussteht, wenn der Aufsatz (14) in der vorgesehenen Position an der Felge (2) befestigt ist.

32. Aufsatz (14) nach einem der Ansprüche 18 bis 28, **dadurch gekennzeichnet, dass** der Laufflächenabschnitt (16) einen Tragabschnitt (105) aufweist, auf dem ein die Lauffläche (18) bildender Laufbelag (104) angeordnet ist, wobei der Tragabschnitt (105) auf der felgenzugewandten Seite des Aufsatzes (14) in axialer Richtung (A) zum Felgenhorn (10) höchstens 10mm beabstandet ist oder 5mm, 10mm, 15mm, 20mm, 25mm oder 30mm über das Felgenhorn (10) nach axial innen übersteht.

33. Aufsatz (14) nach einem der Ansprüche 18 bis 32, **dadurch gekennzeichnet, dass** der Laufflächenabschnitt (16) von dem Montageabschnitt (20) lösbar oder beweglich ist und in Umfangsrichtung (U) gesehen wenigstens zwei Segmente (100, 102) aufweist, die jeweils einen Teil des Umfangs der Lauffläche (18) umfassen, wobei die Segmente (100, 102) voneinander lösbar oder gegenüber einander verschwenkbar oder verschiebbar sind wobei der Laufflächenabschnitt (16) ein Segment mit einer umfänglichen Erstreckung von mehr als 180°, insbesondere mehr als 190°, aufweist.

34. Aufsatz (14) nach einem der Ansprüche 19 bis 33, **dadurch gekennzeichnet, dass** der Montageabschnitt (20) wenigstens zwei zueinander bewegliche Segmente (77, 78) und ein Mittelelement (96) umfasst, wobei die Verspanneinrichtung (60) an dem Mittelelement (96) angeordnet ist und derart ausgebildet ist, dass die Verspannbewegung (V) der beiden zueinander beweglichen Segmente (77, 78) bzgl. des Mittelelements (96) gleich jedoch mit umgekehrter Richtung ist.

35. Aufsatz (14) nach dem Anspruch 34, **dadurch gekennzeichnet, dass** eine Befestigungseinrichtung (38) des Montageabschnitt (16) an dem Mittelelement (96) angeordnet ist, wobei die Befestigungseinrichtung (38) derart angeordnet und ausgebildet ist, dass die zueinander beweglichen Segmente (77, 78) zwischen dem Laufflächenabschnitt (16) und dem Mittelelement (96) klemmend verspannt sind, wenn der Laufflächenabschnitt (16) mittels der Befestigungseinrichtung (38) an dem Montageabschnitt (20) befestigt ist.

36. Aufsatz (14) nach einem der Ansprüche 18 bis 34, **dadurch gekennzeichnet, dass** der Aufsatz (14) wenigstens ein Sicherungsmittel (160) umfasst, das bzw. die in Umfangsrichtung (U) versetzt zu den Spannmitteln (22) angeordnet ist bzw. sind und um eine Schwenkachse verschwenkbar an dem Aufsatz (14) angeordnet ist bzw. sind, wobei das Sicherungsmittel (160) einen Formschlussabschnitt (164) umfasst, der dazu ausgebildet ist, durch Verschwenken des Sicherungsmittels (160) in einen formschlüssigen Hintergriff mit dem Felgenhorn (10) gebracht zu werden.

37. Aufsatz (14) nach dem Anspruch 36, **dadurch gekennzeichnet, dass** der Formschlussabschnitt (164) des Sicherungsmittels (160) einen Kontaktabschnitt umfasst, der dazu ausgebildet ist, das Felgenhorn auf seiner reifenzugewandten Seite zu kontaktieren, wobei der Kontaktabschnitt (166) entsprechend der Kontur des Felgenhorns (10) geformt ist.

38. Aufsatz (14) nach Anspruch 36 oder 37, **dadurch gekennzeichnet, dass** der Formschlussabschnitt (164) des Sicherungsmittels (160) eine größere Materialdicke aufweist als der Hintergriffabschnitt (28) des Spannmittels (22).

39. Aufsatz (14) nach einem der Ansprüche 18 bis 38, **dadurch gekennzeichnet, dass** die Spannmittel (22) einen Hintergriffabschnitt (28) umfassen, der in Umfangsrichtung (U) gekrümmt ausgebildet ist, um die Umfangskrümmung des Felgenhorns (10) beim Hintergreifen des Felgenhorns (10) zu kompensieren, oder dass die Sicherungsmittel (160) einen Formschlussabschnitt (164) umfassen, der in Umfangsrichtung (U) gekrümmt ausgebildet ist, um die Umfangskrümmung des Felgenhorns (10) beim Hintergreifen des Felgenhorns (10) zu kompensieren.

40. Aufsatz (14) nach einem der Ansprüche 18 bis 39, **dadurch gekennzeichnet, dass** die Spannmittel (22) und/oder die Sicherungsmittel (160) in verschiedenen radial voneinander beabstandeten Positionsstufen, die auf unterschiedliche Felgendurchmesser abgestimmt sind, an dem Aufsatz, insbesondere dem Montageabschnitt (20), festlegbar sind, wobei vorzugsweise wenigstens ein Spannmittel (38) in den Positionsstufen in radialer Richtung (R) translatorisch beweglich ist, jedoch in den Positionsstufen weniger weit in radialer Richtung (R) beweglich ist als die radial voneinander beabstandeten Positionsstufen voneinander in radialer Richtung (R) beabstandet sind.

41. Aufsatz (14) nach einem der Ansprüche 18 bis 40, **dadurch gekennzeichnet, dass** der Aufsatz eine Vorspannvorrichtung (83, 133) umfasst, mittels der ein Spannmittel (22) oder ein Teilbereich (140, 142, 144) des Hintergriffabschnitts (28) eines Spannmittels (22) nach radial innen, insbesondere gegenüber dem Kopplungsmittel (62), vorspannbar ist oder mittels der eines der beweglichen Segmente (77,78) des Montageabschnitts (20) in Richtung des anderen beweglichen Segments (77, 78) vorspannbar ist.

42. Aufsatz (14) nach einem der Ansprüche 18 bis 41, **dadurch gekennzeichnet, dass** das Spannmittel (22) einen Hintergriffabschnitt (28) umfasst, der derart ausgebildet ist, dass das Material des Hintergriffabschnitts (28), welches axial innerhalb einer Referenzebene (180) liegt, vollständig in einem gedachten Korridor (182) liegt, wobei die Referenzebene 4, 6 oder 7 mm von einer Anlageebene (186), die mit einer Anlagefläche des Aufsatzes zusammenfällt, beabstandet ist, wobei die Anlagefläche des Aufsatzes den axial äußeren Kontaktpunkt des Felgenhorns (10) mit dem Aufsatz (14) umfasst, wobei der gedachte Korridor (182) eine Breite (188) von 12mm oder 10mm oder 9mm oder 8mm aufweist und seine Mittelachse (190) in einem Winkel (192) von wenigstens 42°
und/oder höchstens 72°, insbesondere in einem Winkel von 57° zur radialen Richtung (R) verläuft, wobei die Breite (188) und der Winkel (192) der Mittelachse bezogen auf einen Blick auf eine in radialer und axialer Richtung verlaufende Ebene definiert sind.

43. Aufsatz (14) nach Anspruch 42, **dadurch gekennzeichnet, dass** die Mittelachse (190) des gedachten Korridors (182) beim Blick auf eine in radialer und axialer Richtung verlaufende Ebene durch den Materialmittelpunkt (194) des Hintergriffabschnitts (28) des Spannmittels (22) in dessen Schnitt mit der Referenzebene (180) verläuft und/oder dass die Mittelachse (190) des gedachten Korridors (182) beim Blick auf die in radialer und axialer Richtung (A) verlaufende Ebene durch den Materialmittelpunkt (200) des Hintergriffabschnitts (28) in dessen Schnitt mit einer zur Referenzebene parallelen Ebene (202) verläuft, in der das axial innere Ende des Hintergriffabschnitts liegt.

44. Aufsatz (14) nach Anspruch 43, **dadurch gekennzeichnet, dass** der Montageabschnitt (20) einen Grundkörper (400) umfasst, der um einen zentralen materialfreien Abschnitt (420) herum angeordnet ist.

45. Aufsatz (14) nach Anspruch 44, **dadurch gekennzeichnet, dass** das Spannmittel (22) einen Kopplungsabschnitt (122) aufweist, mit dem es mit der Verspanneinrichtung (60) gekoppelt ist, wobei der Kopplungsabschnitt (122) mit dem Hintergriffabschnitt (28) der zum Hintergreifen des Felgenhorns (10) ausgebildet ist, über ein biegsames Segment verbunden ist, wobei der Aufsatz eine Führung für das Spannmittel (22) umfasst, so dass wenn der Kopplungsabschnitt (122) über die Verspanneinrichtung (60) nach radial innen bewegt wird, der Hintergriffabschnitt (22) durch die Bewegung nach radial innen und durch die Führung in eine Bewegung nach axial innen gedrängt wird, wobei das biegsame Segment gebogen wird.

## Claims

1. Clamping device (22) for tensioning an attachment (14) on a rim (2) of a vehicle wheel (1), wherein the attachment (14), in an operating state in which it is fastened on the vehicle wheel (1), is configured to enable a driving operation with a limited tire function, wherein
- the clamping device (22), in a section through a section plane extending in a radial and axial direction (A), comprises a hook-like rear engagement section (28), which for positive engagement behind the rim flange (10) protrudes in an axial direction (A) and extends radially inwards,
- the rear engagement section (28) transitions into a contact surface (30), which is configured and arranged to contact the rim flange (10) from axially outside,
**characterised in that**
- the rear engagement section (28) of the clamping device (22) has a retaining section (42), which is configured to take up clamping forces, and an insertion section (44), which is configured to enable insertion of the rear engagement section (28) between the rim flange (10) and a tire side wall abutting the rim flange (10), wherein the insertion section (44) is arranged axially inwards relative to the retaining section (42), and
- the insertion section (44) has a surface on the rim flange side that extends, as seen in the section plane extending in a radial and axial direction, at a flatter angle relative to the axial direction than a surface of the retaining section (42) on the rim flange side.

2. Clamping device (22) for tensioning an attachment (14) on a rim (2) of a vehicle wheel (1), wherein the attachment (14), in an operating state in which it is fastened on the vehicle wheel (1), is configured to enable a driving operation with a limited tire function, wherein
- the clamping device (22) comprises a hook-like rear engagement section (28) for positive engagement behind the rim flange (10),
- the rear engagement section (28) is pivotable about an axis (50), which extends tangentially to the circumferential direction (U), relative to at least a part of the remainder of the clamping device (22) and is adapted to be positioned in at least a first position (S1) and a second position (S2) pivoted about the axis (50) from the first position (S1),
- the rear engagement section (28), in the first position (S1) and in a section through a section plane extending in a radial and axial direction, is formed axially protruding in the manner of a hook and extending radially inwards,
**characterised in that**
- the rear engagement section (28) of the clamping device (22) has a retaining section (42), which is configured to take up clamping forces, and an insertion section (44), which is configured to enable insertion of the rear engagement section (28) between the rim flange (10) and a tire side wall abutting the rim flange (10), wherein the insertion section (44) is arranged axially inwards opposite to the retaining section (42), and
- the insertion section (44) has a surface on the rim flange side that extends, as seen in the section plane extending in a radial and axial direction, at a flatter angle relative to the axial direction than a surface of the retaining section (42) on the rim flange side.

3. Clamping device according to claim 2, **characterised in that** the clamping device (22) has a contact surface (30), which is formed and arranged to contact the rim flange (10) from axially outside, wherein the rear engagement section (28) is pivotable relative to the contact surface (30).

4. Clamping device according to claim 1 or 3, **characterised in that** the rear engagement section (28) transitions into the contact surface (30) in a transition region (32), wherein the surface of the transition region (32) between the rear engagement section (28) and the contact surface (30) includes a recessed section (35), which is arranged offset axially outwards in an axial direction (A) relative to the contact surface (30).

5. Clamping device (22) according to one of claims 1, 3 or 4, **characterised in that** the clamping device (22) has a fastening section (36) for connecting the clamping device (22) to the attachment (14).

6. Clamping device (22) according to one of claims 1 to 5, **characterised in that** the retaining section (42) has an adhesion-enhancing coating (480),
and/or the insertion section (44) has an adhesion-reducing coating (490).

7. Clamping device (22) according to claim 6, **characterised in that** the insertion section (44) has a smaller material thickness (46) than the retaining section (42) and/or that the insertion section (44) has a material thickness that decreases, in particular continuously, axially inwards.

8. Clamping device according to claim 6 or 7, **characterised in that** the retaining section (42) extends further in a circumferential direction (U) than the insertion section (44).

9. Clamping device (22) according to one of claims 6 to 8, **characterised in that** the retaining section (42) has a section tapering axially inwards in its circumferential extension and/or that the insertion section (44) has a section tapering axially inwards in its circumferential extension or is formed tapering axially inwards in its circumferential extension over its entire extension.

10. Clamping device (22) according to one of claims 1 to 9, **characterised in that** the contact surface (30) lies in a plane extending in a radial and/or circumferential direction (U).

11. Clamping device (22) according to one of claims 1 to 10, **characterised in that** the surface of the insertion section (42) on the rim flange side, as seen in the section plane extending in a radial and axial direction (A), extends relative to the axial direction (A) at an angle of at least 10°, preferably at least 15°, and/or that the surface of the retaining section (42) on the rim flange side, as seen in the section plane extending in a radial and axial direction (A), extends relative to the axial direction (A) at an angle of at least 16°, preferably at least 20°.

12. Clamping device (22) according to one of claims 1 to 11, **characterised in that** the surface of the insertion section (44) on the rim flange side, as seen in the section plane extending in a radial and axial direction, extends relative to the axial direction at an angle of at most 40°, preferably at most 35°, and/or that the surface of the retaining section (42) on the rim flange side, as seen in the section plane extending in a radial and axial direction (A), extends relative to the axial direction (A) at an angle of at most 50°, preferably at most 45°.

13. Clamping device (22) according to one of claims 1 to 12, **characterised in that** the clamping device (22) comprises a securing means (88), which is arranged on the clamping device (22) offset in a circumferential direction (U) to the rear engagement section (28) and pivotably about a pivot axis (90), which extends preferably tangentially to the circumferential direction (U), wherein the securing means (88) comprises a positive-engagement section (92), which is configured to be brought into a positive rear engagement with the rim flange (10) by pivoting the securing means (88).

14. Clamping device according to claim 13, **characterised in that** the positive-engagement section (92) of the securing means (88) comprises a contact section (94), which is configured to contact the rim flange (10) on its side facing the tire, wherein the contact section (94) is shaped corresponding to the contour of the rim flange (10).

15. Clamping device according to one of claims 1 to 14, **characterised in that** the clamping device (22) comprises a multipart rear engagement section (28) with subsections (140, 142, 144) that are movable relative to one another in a radial direction.

16. Clamping device (22) according to one of claims 1 to 15, **characterised in that** the rear engagement section (28) is configured such that the material of the rear engagement section (28) lying axially inside a reference plane (180) lies completely in an imaginary corridor (182), wherein the reference plane (180) is arranged at a distance (184) of 4, 6 or 7 mm from a contact plane (186) that preferably coincides with the contact surface (30), wherein the contact plane (186) is a plane extending in a radial direction (R) and circumferential direction (U) and including the axially outer contact point of the rim flange (10) with the clamping device (22), wherein the imaginary corridor (182) has a width (188) of 12 mm or 10 mm or 9 mm or 8 mm or 7 mm or 6 mm or 5 mm or 4 mm and its center line (190) extends at an angle (192) of at least 42°, preferably at least 45° and/or at most 72°, preferably at most 69° and particularly preferably at an angle of 57° to the radial direction (R), wherein the width (188) and the angle (192) of the center line (190) are defined with reference to a view of a plane extending in a radial and axial direction (A).

17. Clamping device (22) according to claim 16, **characterised in that** the center line (190) of the imaginary corridor (182) extends, in a view of the plane extending in a radial and axial direction, through the material center point (194) of the rear engagement section (28) in its section with the reference plane (180) and/or that the center line (190) of the imaginary corridor (182) extends, in a view of the plane extending in a radial direction (R) and axial direction (A), through the material center point (200) of the rear engagement section (28) in its section with a plane (202) parallel to the reference plane (180) which includes the axially inner end of the rear engagement section (28).

18. Attachment (14) for a vehicle wheel (1), which comprises a rim (2) and a tire (3) arranged on the rim (2), wherein the attachment (14) has at least two clamping devices (22) according to claim 1 or 2 and is configured, in an operating state in which it is fastened on the vehicle wheel (1), to enable a driving operation with a limited tire function, wherein
- the attachment comprises a tread section (16), which is constructed in multiple parts and has a tread (18) of the attachment (14) for contacting the road,
- the attachment (14) comprises a mounting section (20) which, when the attachment (14) is fastened to the vehicle wheel (1) in the operating state, is arranged radially inwards from the tread (18),
- the attachment (14) comprises a tensioning device (60), by means of which the at least one clamping device (22) is movable radially inwards in a tensioning movement (V) relative to the mounting section (20),
**characterised in that**
- the tread section (16) is detachable, at least in sections, from the mounting section (20) or is movable relative thereto, and
- at least one, preferably each, clamping device (22) has a fastening section (36) comprising a fastening device (38), by means of which the tread section (16) is adapted to be fastened to the clamping device (22) and to be secured in an axial direction (A) against play relative to the clamping device (22).

19. Attachment (14) according to claim 18, **characterised in that** each clamping device (22) comprises a coupling section (122) with which it is coupled to the tensioning device (60), wherein during the tensioning movement (V) of the clamping device (22), the movement of the coupling section (122) with respect to the mounting section (20) is purely translationally, preferably directed exclusively radially inwards, wherein all clamping devices (22) are movable, uniformly and motion-coupled to one another, radially inwards in a tensioning movement (V) relative to the mounting section (20).

20. Attachment (14) for a vehicle wheel (1), which comprises a rim (2) and a tire (3) arranged on the rim (2), wherein the attachment (14) has at least two clamping devices (22) according to claim 1 or 2 and is configured, in an operating state in which it is fastened on the vehicle wheel (1), to enable a driving operation with a limited tire function, wherein
- the attachment (14) comprises a tread section (16), which is constructed in multiple parts and has a tread (18) of the attachment (14) for contacting the road,
- the attachment (14) comprises a mounting section (20) which, when the attachment (14) is fastened to the vehicle wheel (1) in the operating state, is arranged radially inwards from the tread (18),
- the mounting section (20) comprises at least two segments (77, 78) that are movable relative to one another, each comprising at least one clamping device (22), and the attachment (14) comprises a tensioning device (60), by means of which the two segments (77, 78) movable relative to one another are movable in a tensioning movement (V) relative to one another, wherein the tensioning movement (V) of the segments (77, 78) with regard to one another is translational and directed towards one another,
**characterised in that**
- the tread section (16) is detachable, at least in sections, from the mounting section (20) or is movable relative thereto, and
- at least one, preferably each, clamping device (22) has a fastening section (36) including a fastening device (38), by means of which the tread section (16) is adapted to be fastened to the clamping device (22) and to be secured in an axial direction (A) against play relative to the clamping device (22).

21. Attachment (14) according to claim 20, **characterised in that** at least one of the segments (77, 78) of the mounting section (20) that are movable to one another comprises two clamping devices (22), which are arranged on the movable segment (77, 78) of the mounting section (20) such that their relative position to one another does not change during the tensioning movement (V).

22. Attachment (14) according to one of claims 18 to 21, **characterised in that** the mounting section (20) has at least one fastening section (36) with a fastening device (38), by means of which the tread section (16) is adapted to be fastened to the mounting section (20) and to be secured in an axial direction (A) against play relative to the mounting section (20).

23. Attachment (14) according to claim 21 or 22, **characterised in that** the fastening device (38) is configured such that, on fastening by means of the fastening device (38), the tread section (16) moves in the axial direction (A) towards the rim (2).

24. Attachment (14) according to one of claims 21 to 23, **characterised in that** the tread section (16) comprises several circumferential segments, which each comprise a portion of the circumference of the tread (18) and are each detachable from the mounting section (20), and that each of the circumferential segments of the tread section (16) is adapted to be fastened via at least one fastening device (38) to the same of the movable segments of the mounting section (20).

25. Attachment (14) according to claim 18 or one of claims 21 to 23 and claim 18, **characterised in that** the tread section (16) comprises several circumferential segments (100, 102), which each comprise a portion of the circumference of the tread (18) and are each detachable from the mounting section (20), and that the mounting section (20) is implemented in one piece and each of the circumferential segments of the tread section (16) is connected to the mounting section (20) via a respective fastening device (38) at least at two points spaced from one another.

26. Attachment (14) according to claim 19 and one of claims 21 to 24, **characterised in that** at least one and preferably each clamping device (22) is connected rigidly to the mounting section (20).

27. Attachment (14) according to one of claims 18 to 25, **characterised in that** the tensioning device (60) is coupled via a coupling means (62), in particular in the form of a tie rod or threaded rod, to the or to each clamping device (22).

28. Attachment (14) according to one of claims 18 to 27, **characterised in that** the tensioning device (60) comprises a gear train (66) for converting a rotary drive movement (AB) of an actuating element (68) into the translational tensioning movement.

29. Attachment (14) according to one of claims 18 to 28, **characterised in that** the tread (18) is formed by a tread coating (104).

30. Attachment (14) according to one of claims 18 to 28, **characterised in that** the tread section (16) has a support section (105) projecting in a radial direction (R) towards the rim side, on which support section a tread coating (104) forming the tread (18) is arranged.

31. Attachment (14) according to one of claims 18 to 28, **characterised in that** the tread section (16) has a support section (105) on which a tread coating (104) forming the tread (18) is arranged, wherein the support section (105) is recessed on the side of the attachment (14) facing away from the rim such that the side of the support section facing away from the rim projects at most 40 mm, preferably at most 10 mm in axial direction (A) beyond the rim flange (10) when the attachment (14) is fastened on the rim (2) in the intended position.

32. Attachment (14) according to one of claims 18 to 28, **characterised in that** the tread section (16) has a support section (105) on which a tread coating (104) forming the tread (18) is arranged, wherein the support section (105) is spaced at most 10 mm from the rim flange (10) in axial direction (A) on the side of the attachment (14) facing the rim or projects axially inwards 5 mm, 10 mm, 15 mm, 20 mm, 25 mm, or 30 mm beyond the rim flange (10).

33. Attachment (14) according to one of claims 18 to 32, **characterised in that** the tread section (16) is detachable from the mounting section (20) or is movable and comprises, as seen in a circumferential direction (U), at least two segments (100, 102), which each comprise a portion of the circumference of the tread (18), wherein the segments (100, 102) are detachable from one another or are pivotable or displaceable relative to one another, wherein the tread section (16) comprises a segment with a circumferential extension of more than 180°, in particular more than 190°.

34. Attachment (14) according to one of claims 19 to 33, **characterised in that** the mounting section (20) comprises at least two segments (77, 78) that are movable relative to one another and a central element (96), wherein the tensioning device (60) is arranged at the central element (96) and is configured such that the tensioning movement (V) of the two segments (77, 78), which are movable relative to one another, is identical with respect to the central element (96) but in the reverse direction.

35. Attachment (14) according to claim 34, **characterised in that** a fastening device (38) of the mounting section (16) is arranged at the central element (96), wherein the fastening device (38) is arranged and configured such that the segments (77, 78) movable to one another are clamp-tensioned between the tread section (16) and the central element (96) when the tread section (16) is fastened to the mounting section (20) by means of the fastening device (38).

36. Attachment (14) according to one of claims 18 to 34, **characterised in that** the attachment (14) comprises at least one securing means (160), which is or are arranged offset to the clamping devices (22) in the circumferential direction (U) and is or are arranged at the attachment (14) pivotably about a pivot axis, wherein the securing means (160) comprises a positive-engagement section (164) configured to be brought into positive engagement behind the rim flange (10) by pivoting the securing means (160).

37. Attachment (14) according to claim 36, **characterised in that** the positive-engagement section (164) of the securing means (160) comprises a contact section, which is configured to contact the rim flange on its side facing the tire, wherein the contact section (166) is formed corresponding to the contour of the rim flange (10).

38. Attachment (14) according to claim 36 or 37, **characterised in that** the positive-engagement section (164) of the securing means (160) has a greater material thickness than the rear engagement section (28) of the clamping device (22).

39. Attachment (14) according to one of the preceding claims 18 to 38, **characterised in that** the clamping devices (22) comprise a rear engagement section (28) which is curved in a circumferential direction (U) to compensate for the circumferential curvature of the rim flange (10) when engaging behind the rim flange (10), or that the securing means (160) comprise a positive-engagement section (164) which is curved in a circumferential direction (U) to compensate for the circumferential curvature of the rim flange (10) when engaging behind the rim flange (10).

40. Attachment (14) according to one of claims 18 to 39, **characterised in that** the clamping devices (22) and/or the securing means (160) are adapted to be fixed in different positional stages spaced radially from one another, which stages match with different rim diameters, on the attachment, in particular on the mounting section (20), wherein preferably at least one clamping device (38) is movable translationally in the positional stages in radial direction (R), but is movable in the positional stages in radial direction (R) less than the radially spaced position stages are spaced from one another in radial direction (R).

41. Attachment (14) according to one of claims 18 to 40, **characterised in that** the attachment comprises a biasing mechanism (83, 133), by means of which a clamping device (22) or a sub-area (140, 142, 144) of the rear engagement section (28) of a clamping device (22) can be biased radially inwards, in particular relative to the coupling means (62), or by means of which one of the movable segments (77, 78) of the mounting section (20) can be biased in the direction of the other movable segment (77, 78).

42. Attachment (14) according to one of claims 18 to 41, **characterised in that** the clamping device (22) comprises a rear engagement section (28), which is configured such that the material of the rear engagement section (28) that lies axially inside a reference place (180) lies completely in an imaginary corridor (182), wherein the reference plane is spaced 4, 6 or 7 mm from a contact plane (186), which coincides with a contact surface of the attachment, wherein the contact surface of the attachment comprises the axially outer contact point of the rim flange (10) with the attachment (14), wherein the imaginary corridor (182) has a width (188) of 12 mm or 10 mm or 9 mm or 8 mm and its center line (190) extends at an angle (192) of at least 42° and/or at most 72°, in particular at an angle of 57° to the radial direction (R), wherein the width (188) and the angle (192) of the center line are defined with reference to a view of a plane extending in a radial and axial direction.

43. Attachment (14) according to claim 42, **characterised in that** the center line (190) of the imaginary corridor (182) extends, in a view of a plane extending in a radial and axial direction, through the material center point (194) of the rear engagement section (28) of the clamping device (22) in its section with the reference plane (180) and/or that the center line (190) of the imaginary corridor (182), in a view of the plane extending in the radial and axial direction (A), extends through the material center point (200) of the rear engagement section (28) in its section with a plane (202) parallel to the reference plane which includes the axially inner end of the rear engagement section.

44. Attachment (14) according to claim 43, **characterised in that** the mounting section (20) comprises a base body (400), which is arranged around a central material-free section (420).

45. Attachment (14) according to claim 44, **characterised in that** the clamping device (22) has a coupling section (122) by means of which it is coupled to the tensioning device (60), wherein the coupling section (122) is connected to the rear engagement section (28), which is configured to engage behind the rim flange (10), via a flexible segment, wherein the attachment comprises a guide for the clamping device (22), so that when the coupling section (122) is moved radially inwards via the tensioning device (60), the rear engagement section (28) by this movement is pushed radially inwards and by the guide into a movement axially inwards, wherein the flexible segment is bent.

## Revendications

1. Dispositif de serrage (22) pour serrer une pièce rapportée (14) sur une jante (2) d'une roue de véhicule (1), la pièce rapportée (14) étant conçue, lorsqu'elle est fixée sur la roue de véhicule (1), pour permettre la conduite en cas de fonctionnement restreint du pneu,
- le dispositif de serrage (22) comprend une partie de blocage arrière (28) conçue sous forme de crochet s'étendant radialement vers l'intérieur et faisant saillie dans la direction axiale (A) dans une fente par un plan d'intersection s'étendant dans une direction radiale et axiale (A) pour bloquer par l'arrière par complémentarité de forme le rebord de jante (10),
- la partie de blocage arrière (28) se prolonge dans une surface d'appui (30) qui est conçue et disposée pour entrer en contact axialement depuis l'extérieur avec le rebord de jante (10).
**caractérisé en ce que**
- la partie de blocage arrière (28) du dispositif de serrage (22) présente une partie de retenue (42) qui est conçue pour recevoir des forces de serrage, et une section d'insertion (44), qui est conçue pour permettre un introduction de la partie de blocage arrière (28) entre le rebord de jante (10) et une paroi latérale de pneu située sur le rebord de jante (10), la partie d'insertion (44) étant disposée axialement à l'intérieur par rapport à la partie de retenue (42), et
- la partie d'insertion (44) présente une surface côté rebord de jante, qui, lorsqu'elle est vue dans le plan d'intersection s'étendant dans la direction radiale et axiale, s'étend par rapport à la direction axiale dans un angle inférieur à une surface côté rebord de jante de la partie de retenue (42).

2. Dispositif de serrage (22) pour serrer une pièce rapportée (14) sur une jante (2) d'une roue de véhicule (1), la pièce rapportée (14) étant conçue, lorsqu'elle est fixée sur la roue de véhicule (1), pour permettre la conduite en cas de fonctionnement restreint du pneu,
- le dispositif de serrage (22) comprenant une partie de blocage arrière (28) conçue sous forme de crochet pour bloquer par l'arrière le rebord de jante (10) par complémentarité de forme,
- la partie de blocage arrière (28) pouvant pivoter autour d'un axe (50) s'étendant tangentiellement au sens de la circonférence (U) par rapport au moins une partie du dispositif de serrage (22) restant et pouvant être positionnée dans au moins une première position (S1) et une seconde position (52) pivotant par rapport à la première position autour de l'axe (50),
- la partie de blocage arrière (28) étant conçue sous la forme d'un crochet s'étend radialement vers l'intérieur et faisant saillie dans la direction axiale dans la première position (S1) dans une fente par un plan d'intersection s'étendant dans la direction axiale et radiale,
**caractérisé en ce que**
- la partie de blocage arrière (28) du dispositif de serrage (22) présente une partie de retenue (42) qui est conçue pour recevoir des forces de serrage, et une section d'insertion (44), qui est conçue pour permettre une introduction de la partie de blocage arrière (28) entre le rebord de jante (10) et une paroi latérale de pneu située sur le rebord de jante (10), la partie d'insertion (44) étant disposée axialement à l'intérieur par rapport à la partie de retenue (42), et
- la partie d'insertion (44) présente une surface côté rebord de jante, qui, lorsqu'elle est vue dans le plan de coupe s'étendant dans la direction radiale et axiale, s'étend par rapport à la direction axiale dans un angle inférieur à une surface côté rebord de jante de la partie de retenue (42).

3. Dispositif de serrage selon la revendication 2, **caractérisé en ce que** le dispositif de serrage (22) comporte une surface d'appui (30) qui est conçue et disposée pour entrer en contact avec le rebord de jante (10) axialement depuis l'extérieur, la partie de blocage arrière (28) étant pivotante par rapport à la surface d'appui (30).

4. Dispositif de serrage selon la revendication 1 ou 3, **caractérisé en ce que** la partie de blocage arrière (28) se prolonge dans la surface d'appui (30) dans une zone de transition, la surface de la zone de transition (32) comportant entre la partie de blocage arrière (28) et la surface d'appui (30) une partie en retrait (35) qui est décalée axialement vers l'extérieur dans la direction axiale (A) par rapport à la surface d'appui (30).

5. Dispositif de serrage (22) selon l'une quelconque des revendications 1, 3 ou 4, **caractérisé en ce que** le dispositif de serrage (22) comporte une partie de fixation (36) destinée à relier le dispositif de serrage (22) à la pièce rapportée (14).

6. Dispositif de serrage (22) selon l'une quelconque des revendications 1 à 5, **caractérisé en ce que** la partie de retenue (42) comporte un revêtement renforçant l'adhésion (480) et/ou la partie d'insertion (44) comporte un revêtement réduisant l'adhésion (490).

7. Dispositif de serrage (22) selon la revendication 6, **caractérisé en ce que** la partie d'insertion (44) présente une épaisseur de matériau (46) inférieure à celle de la partie de retenue (42) et/ou **en ce que** la partie d'insertion (44) comporte une épaisseur de matériau se réduisant axialement vers l'intérieur, en particulier, en continu.

8. Dispositif de serrage selon la revendication 6 ou 7, **caractérisé en ce que** la partie de retenue (42) s'étend davantage dans la direction circonférence (U) que la partie d'insertion (44).

9. Dispositif de serrage (22) selon l'une quelconque des revendications 6 à 8, **caractérisé en ce que** la partie de retenue (42) comporte une partie effilée axialement vers l'intérieur sur sa circonférence et/ou **en ce que** la partie d'insertion (44) comporte une partie effilée axialement vers l'intérieur sur sa circonférence ou est conçue de manière effilée sur sa circonférence sur toute son étendue axialement vers l'intérieur.

10. Dispositif de serrage (22) selon l'une quelconque des revendications 1 à 9, **caractérisé en ce que** la surface d'appui (30) se situe dans un plan s'étendant dans la direction radiale et/ou dans le sens de la circonférence (U).

11. Dispositif de serrage (22) selon l'une quelconque des revendications 1 à 10, **caractérisé en ce que** la surface côté rebord de jante de la partie d'insertion (42) s'étend, lorsque observée dans le plan d'intersection s'étendant dans la direction radiale et axiale (A), à un angle d'au moins 10°, de préférence 15° par rapport à la direction axiale (A), et/ou **en ce que** la surface côté rebord de jante de la partie de retenue (42) s'étend, lorsque observée dans le plan d'intersection s'étendant dans la direction radiale et axiale (A), à un angle d'au moins 16°, de préférence au moins 20° par rapport à la direction axiale (1).

12. Dispositif de serrage (22) selon l'une quelconque des revendications 1 à 11, **caractérisé en ce que** la surface côté rebord de jante de la partie d'insertion (44), lorsque observée dans le plan d'intersection s'étendant dans la direction radiale et axiale, s'étend à un angle de 40° maximum, de préférence 35° maximum par rapport à la direction axiale et/ou **en ce que** la surface de rebord de jante de la partie de retenue (42) s'étend lorsque observée dans le plan d'intersection s'étendant dans la direction radiale et axiale (A), à un angle de 50° maximum, de préférence 45° maximum, par rapport à la direction axiale (A).

13. Dispositif de serrage (22) selon l'une quelconque des revendications 1 à 12, **caractérisé en ce que** le dispositif de serrage (22) comprend un dispositif de fixation (88), qui se déplace dans le sens de la circonférence (U) par rapport à la partie de blocage arrière (28) et est disposé en pivotement sur le dispositif de serrage (22) autour d'un axe de pivotement (90) qui s'étend de préférence tangentiellement au sens de la circonférence (U), le dispositif de fixation (88) comprenant une partie de complémentarité de forme (92) qui est conçue pour être amenée par pivotement du dispositif de fixation (88) dans un blocage arrière par complémentarité de forme avec le rebord de jante (10).

14. Dispositif de serrage (22) selon la revendication 13, **caractérisé en ce que** la partie de complémentarité de forme (92) du dispositif de fixation (88) comprend une partie de contact (94) qui est conçue pour entrer en contact avec le rebord de jante (10) sur son côté orienté vers le pneu, la partie de contact (94) étant formée de manière correspondante au contour du rebord de jante (10).

15. Dispositif de serrage (22) selon l'une quelconque des revendications 1 à 14, **caractérisé en ce que** le dispositif de serrage (22) comprend une partie de blocage arrière (28) en plusieurs parties avec des sous-parties (140, 142, 144) mobiles entre elles dans la direction radiale.

16. Dispositif de serrage (22) selon l'une quelconque des revendications 1 à 15, **caractérisé en ce que** la partie de blocage arrière (28) est conçu de manière à ce que le matériau de la partie de blocage arrière (28), qui se trouve axialement à l'intérieur d'un plan de référence (180), se trouve entièrement dans un couloir projeté (182), le plan de référence (180) étant disposé dans un espace (184) de 4, 6 ou 7 mm par rapport à un plan d'appui (186) qui de préférence coïncide avec la surface d'appui (30), le plan d'appui (186) étant un plan s'étendant dans la direction radiale et dans le sens de la circonférence (U), dans lequel le point de contact axialement externe du rebord de jante (10) se trouve avec le dispositif de serrage (22), le corridor projeté (182) présentant une largeur (188) de 12 mm ou 10 mm ou 9 mm ou 8 mm ou 7 mm ou 6 mm ou 5 mm ou 4 mm et son axe central (190) se trouve à un angle (192) d'au moins 42°, de préférence d'au moins 45° et/ou de 72° maximum, de préférence de 69° maximum et de préférence encore à un angle de 57° par rapport à la direction radiale R, la largeur (188) et l'angle (192) de l'axe central (190) étant définis par rapport au regard sur le plan s'étendant dans la direction radiale et axiale (A).

17. Dispositif de serrage (22) selon la revendication 16, **caractérisé en ce que** l'axe central (190) du corridor projeté (182), lorsqu'on observe le plan s'étendant dans la direction radiale et axiale, s'étend par le point central de matériau (194) de la partie de blocage arrière (28) à son intersection avec le plan de référence (180) et/ou **en ce que** l'axe central (190) du corridor projeté (182), lorsqu'on observe le plan s'étendant dans la direction radiale (R) et la direction axiale (A) par le point central de matériau (200) de la partie de blocage arrière (28) à son intersection avec un plan parallèle (202) au plan de référence (180), dans lequel se trouve l'extrémité axiale interne de la partie de blocage arrière (28).

18. Pièce rapportée (14) pour une roue de véhicule (1), qui comprend une jante (2) et un pneu (3) disposé sur la jante (2), la pièce rapportée (14) comprenant au moins deux dispositifs de serrage (22) selon la revendication 1 ou 2, et est conçue lorsqu'elle est fixée sur la roue de véhicule (1), pour permettre la conduite en cas de fonctionnement restreint du pneu,
- la pièce rapportée comprenant une partie de bande de roulement (16) constituée de plusieurs parties, qui comporte une bande de roulement (18) de la pièce rapportée (14) pour entrer en contact avec le chaussée,
- la pièce rapportée (14) comprenant une partie de montage (20), qui est disposée radialement à l'intérieur de la bande de roulement (18) lorsque la pièce rapportée (14) est fixée sur la roue de véhicule (1) et est en état de fonctionnement,
- la pièce rapportée (14) comprenant un système de serrage (60) au moyen duquel au moins un dispositif de serrage (22) dans un mouvement de serrage (V) peut se déplacer par rapport à la partie de montage (20) radialement vers l'intérieur.
**caractérisée en ce que**
- la partie de bande de roulement (16) est amovible, au moins à certains endroits, de la partie de montage (20) ou peut se déplacer par rapport à cette dernière, et
- au moins un dispositif de serrage (22), de préférence chaque dispositif de serrage, comporte une partie de fixation (36) avec un dispositif de fixation (38) au moyen duquel la partie de bande de roulement (16) peut être fixée au dispositif de serrage (22) et bloquée dans la direction axiale (A) moyennant un jeu par rapport au dispositif de serrage (22).

19. Pièce rapportée (14) selon la revendication 18, **caractérisée en ce que** chaque dispositif de serrage (22) comprend une partie d'accouplement (122) avec laquelle il est accouplé au système de serrage (60), lors du mouvement de serrage (V) du dispositif de serrage (22) le mouvement de la partie d'accouplement (122) par rapport à la partie de montage (20) est une translation, de préférence uniquement orienté radialement vers l'intérieur, tous les dispositifs de serrage (22) pouvant être déplacés dans un mouvement de serrage (V) par rapport à la partie de montage (20) de manière uniforme et couplés en mouvement entre eux.

20. Pièce rapportée (14) pour une roue de véhicule (1), qui comprend une jante (2) et un pneu (3) disposé sur la jante, la pièce rapportée (14) comporte au moins deux dispositifs de serrage (22) selon la revendication 1 ou 2 et est conçue lorsqu'elle est fixée sur la roue de véhicule (1), pour permettre la conduite en cas de fonctionnement restreint du pneu,
- la pièce rapportée (14) comprenant une partie de bande de roulement (16) constituée de plusieurs parties, qui comporte une bande de roulement (18) de la pièce rapportée (14) pour entrer en contact avec le chaussée,
- la pièce rapportée (14) comprenant une partie de montage (20), qui est disposée radialement à l'intérieur de la bande de roulement (18) lorsque la pièce rapportée (14) est fixée sur la roue de véhicule (1) et est en état de fonctionnement,
- la pièce de montage (20) comprenant au moins deux segments mobiles entre eux (77, 78) avec chacun au moins un dispositif de serrage (22) et la pièce rapportée (14) comprenant un système de serrage (60) au moyen duquel les deux segments mobiles (77, 78) l'un par rapport à l'autre peuvent se déplacer l'un par rapport à l'autre dans un mouvement de serrage (V), le mouvement de serrage (V) des segments (77, 78) étant une translation et orienté l'un vers l'autre,
**caractérisée en ce que**
- la partie de bande de roulement (16) est amovible, au moins à certains endroits, de la partie de montage (20) ou peut se déplacer par rapport à cette dernière, et
- au moins un dispositif de serrage (22), de préférence chaque dispositif de serrage, comporte une partie de fixation (36) avec un dispositif de fixation (38) au moyen duquel la partie de bande de roulement (16) peut être fixée au dispositif de serrage (22) et bloquée dans la direction axiale (A) moyennant un jeu par rapport au dispositif de serrage (22).

21. Pièce rapportée (14) selon la revendication 20, **caractérisée en ce que** au moins un des segments mobiles l'un par rapport à l'autre (77, 78) de la partie de montage (20) comporte deux dispositifs de serrage (22) qui sont disposés sur le segment mobile (77, 78) de la partie de montage (20) de manière à ce que leur position relative ne change pas pendant le mouvement de serrage (V).

22. Pièce rapportée (14) selon l'une quelconque des revendications 18 à 21, **caractérisée en ce que** la partie de montage (20) comporte au moins une partie de fixation (36) avec un dispositif de fixation (38), au moyen duquel la partie de bande de roulement (16) peut être fixée à la partie de montage (20) et bloquée dans la direction axiale (A) moyennant un jeu par rapport à la partie de montage (20).

23. Pièce rapportée (14) selon la revendication 21 ou 22, **caractérisée en ce que** le dispositif de fixation (38) est conçu de manière à ce que la partie de bande de roulement (16) se déplace, lors de la fixation, au moyen du dispositif de fixation (38) dans la direction axiale (A) vers la jante (2).

24. Pièce rapportée (14) selon l'une quelconque des revendications 21 à 23, **caractérisée en ce que** la partie de bande de roulement (16) comprend plusieurs segments circonférentiels, qui comprennent respectivement une partie de la circonférence de la bande de roulement (18) et qui peuvent être amovibles respectivement de la partie de montage (20), et **en ce que** chacun des segments circonférentiels de la partie de bande de roulement (16) peut être fixé par au moins un dispositif de fixation (38) sur le même segment parmi les segments mobiles de la partie de montage (20).

25. Pièce rapportée (14) selon la revendication 18 ou selon l'une quelconque des revendications 21 à 23, et selon la revendication 18, **caractérisée en ce que** la partie de bande de roulement (16) comprend plusieurs segments circonférentiels (100, 102), qui comprennent respectivement une partie de la circonférence de la bande de roulement (18) et qui peuvent être amovibles respectivement de la partie de montage (20), et **en ce que** la partie de montage (20) est conçue d'un seul tenant et chacun des segments circonférentiels de la partie de bande de roulement (16) est reliée à la partie de montage (20) à au moins deux emplacements éloignés l'un de l'autre par un dispositif de fixation (38) respectif.

26. Pièce rapportée (14) selon la revendication 19, et selon l'une quelconque des revendications 21 à 24, **caractérisée en ce que** au moins un dispositif de serrage et de préférence chaque dispositif de serrage (22) est relié rigidement à la partie de montage (20).

27. Pièce rapportée (14) selon l'une quelconque des revendications 18 à 25, **caractérisée en ce que** le système de serrage (60) est accouplé par un dispositif d'accouplement (62), en particulier sous la forme d'une tige filetée ou une tige de raccordement, avec le ou chaque dispositif de serrage (22).

28. Pièce rapportée (14) selon l'une quelconque des revendications 18 à 27, **caractérisée en ce que** le système de serrage (60) comporte un système de transmission (66) pour convertir un mouvement d'entraînement rotatif (AB) d'un élément d'actionnement (68) en un mouvement de serrage de translation.

29. Pièce rapportée (14) selon l'une quelconque des revendications 18 à 28, **caractérisée en ce que** la bande de roulement (18) est formée par une couche de roulement (104).

30. Pièce rapportée (14) selon l'une quelconque des revendications 18 à 28, **caractérisée en ce que** la section de bande de roulement (16) comporte une section de support (105) faisant saillie dans la direction radiale (R) par rapport au côté de jante, sur laquelle est disposée une couche de roulement (104) formant la bande de roulement (18).

31. Pièce rapportée (14) selon l'une quelconque des revendications 18 à 28, **caractérisée en ce que** la section de bande de roulement (16) comporte un section de support (105), sur laquelle est disposée une couche de roulement (104) formant la bande de roulement (18), la section de support (105) étant décalée côté opposé à la jante de la section de support de manière à ce que le côté opposé à la jante de la section de support dépasse au plus de 40 mm, de préférence au plus de 10 mm, dans la direction axiale (A), du rebord de jante (10), lorsque la pièce rapportée (14) est fixée dans la position prévue sur la jante (2).

32. Pièce rapportée (14) selon l'une quelconque des revendications 18 à 28, **caractérisée en ce que** la section de bande de roulement (16) comporte une section de support (105) sur laquelle est disposée une couche de roulement (104) formant la bande de roulement (18), la section de support (105) étant éloignée du rebord de jante (10) de au plus 10 mm sur le côté face à la jante de la pièce rapportée (14) dans la direction axiale (A), ou dépassant radialement vers l'intérieur de 5 mm, 10 mm, 15 mm, 20 mm, 25 mm ou 30 mm du rebord de la jante (10).

33. Pièce rapportée (14) selon l'une quelconque des revendications 18 à 32, **caractérisée en ce que** la section de bande de roulement (16) peut être démontée de la partie de fixation (20) et peut se déplacer et comporte dans le sens de la circonférence (U) au moins deux segments (100, 102) qui chacun comprennent une partie de la circonférence de la bande de roulement (18), les segments (100, 102) peuvent se détacher l'un de l'autre ou peuvent pivoter l'un par rapport à l'autre ou peuvent être déplacés, la partie de bande de roulement (16) comporte un segment s'étendant sur plus de 180° sur la circonférence, de préférence sur plus de 190°.

34. Pièce rapportée (14) selon l'une quelconque des revendications 19 à 33, **caractérisée en ce que** la partie de montage (20) comporte au moins deux segments (77, 78) mobiles l'un par rapport à l'autre et un élément intermédiaire (96), le système de serrage (60) étant disposé sur l'élément intermédiaire (96) et étant conçu de manière à ce que le mouvement de serrage (V) des deux segments (77, 78) mobiles l'un par rapport à l'autre ou de l'élément intermédiaire (96) est identique mais cependant dans la direction opposée.

35. Pièce rapportée (14) selon la revendication 34, **caractérisée en ce qu'**un dispositif de fixation (38) de la partie de montage (16) est disposé sur l'élément intermédiaire (96), le dispositif de fixation (38) étant disposé et conçu de manière à ce que les segments (77, 78) mobiles l'un par rapport à l'autre soient fixés par serrage entre la partie de bande de roulement (16) et l'élément intermédiaire (96) lorsque la partie de bande de roulement (16) est fixée à la partie de montage (20) au moyen du dispositif de fixation (38).

36. Pièce rapportée (14) selon l'une quelconque des revendications 18 à 34, **caractérisée en ce que** la pièce rapportée (14) comporte au moins un élément de fixation (160) qui est décalé dans le sens de la circonférence (U) par rapport aux dispositifs de serrage (22) et est disposé en pivotement sur la pièce rapportée (14) autour d'un axe de pivotement, le dispositif de fixation (160) comprenant une partie de complémentarité de forme (164) qui est conçue pour être amenée par pivotement du dispositif de fixation (160) dans un blocage arrière par complémentarité de forme avec le rebord de jante (10).

37. Pièce rapportée (14) selon la revendication 36, **caractérisé en ce que** la partie de complémentarité de forme (164) du dispositif de fixation (160) comprend une partie de contact qui est conçue pour entrer en contact avec le rebord de jante sur son côté orienté vers le pneu, la partie de contact (166) étant formée de manière correspondante au contour du rebord de jante (10).

38. Pièce rapportée (14) selon la revendication 36 ou 37, **caractérisée en ce que** la partie de complémentarité de forme (164) du dispositif de fixation (160) comporte une épaisseur de matériau supérieure à celle de la partie de blocage arrière (28) de l'élément de serrage (22).

39. Pièce rapportée (14) selon l'une quelconque des revendications 18 à 38, **caractérisée en ce que** les éléments de serrage (22) comprennent une partie de blocage arrière (28) qui est courbée dans le sens de la circonférence (U) pour compenser la courbure circonférentielle du rebord de jante (10) lorsque le bord de jante (10) est bloqué par l'arrière, ou **en ce que** les dispositifs de fixation (160) comprennent une partie de complémentarité de forme (164) qui est courbée dans le sens de la circonférence (U) pour compenser la courbure circonférentielle du rebord de jante (10) lorsque le rebord de jante (10) est bloqué par l'arrière.

40. Pièce rapportée (14) selon l'une quelconque des revendications 18 à 39, **caractérisée en ce que** les éléments de serrage (22) et/ou les dispositifs de fixation (160) peuvent être fixée à différentes positions espacées les unes des autres qui concordent avec différents diamètres de jante, sur la pièce rapportée, en particulier sur la partie de montage (20), de préférence au moins un élément de serrage (38) est mobile par translation dans des positions dans la direction radiale (R), est mobile dans des positions moins éloignées dans la direction radiale (R) que les positions espacées les unes des autres dans la direction radiale (R).

41. Pièce rapportée (14) selon l'une quelconque des revendications 18 à 40, **caractérisée en ce que** la pièce rapportée comprend un dispositif de précontrainte (83, 133), au moyen duquel l'élément de serrage (22) ou une certaine partie (140, 142, 144) de la partie de blocage arrière (28) d'un élément de serrage (22), peut être précontraint(e) radialement vers l'intérieur, en particulier par rapport à l'élément d'accouplement (62), ou au moyen duquel l'un des segments mobiles (77, 78) de la partie de montage (20) peut être précontraint en direction de l'autre segment mobile (77, 78).

42. Pièce rapportée (14) selon l'une quelconque des revendications 18 à 41, **caractérisée en ce que** le dispositif de serrage (22) comporte une partie de blocage arrière (28) conçue de manière à ce que le matériau de la partie de blocage arrière (28), qui se trouve axialement à l'intérieur d'un plan de référence (180), se trouve entièrement dans un couloir projeté (182), le plan de référence (180) étant éloigné de 4, 6 ou 7 mm par rapport à un plan d'appui (186) qui coïncide avec la surface d'appui (30) de la pièce rapportée, le plan d'appui de la pièce rapportée comportant le point de contact axialement externe du rebord de jante (10) avec la pièce rapportée (14), le corridor projeté (182) présentant une largeur (188) de 12 mm ou 10 mm ou 9 mm ou 8 mm et son axe central (190) se trouve à un angle (192) d'au moins 42° et/ou de 72° maximum, en particulier à un angle de 57° par rapport à la direction radiale R, la largeur (188) et l'angle (192) de l'axe central étant définis par rapport au regard sur le plan s'étendant dans la direction radiale et axiale.

43. Pièce rapportée (14) selon la revendication 42, **caractérisée en ce que** l'axe central (190) du corridor projeté (182), lorsqu'on observe le plan s'étendant dans la direction radiale et axiale, s'étend par le point central de matériau (194) de la partie de blocage arrière (28) de l'élément de serrage (22) à son intersection avec le plan de référence (180) et/ou **en ce que** l'axe central (190) du corridor projeté (182), lorsqu'on observe le plan s'étendant dans la direction radiale et axiale (A) par le point central de matériau (200) de la partie de blocage arrière (28) à son intersection avec un plan parallèle (202) au plan de référence, dans lequel se trouve l'extrémité interne axiale de la partie de blocage arrière.

44. Pièce rapportée (14) selon la revendication 43 **caractérisée en ce que** la partie de montage (20) comprend un corps de base (400) qui est disposée autour d'une partie centrale (420) exempte de matière.

45. Pièce rapportée (14) selon la revendication 44, **caractérisée en ce que** l'élément de serrage (22) comporte une partie d'accouplement (122), qui lui permet d'être accouplé au système de serrage (60), la partie d'accouplement (122) étant reliée à la partie de blocage arrière (28) qui est conçue pour bloquer par l'arrière le rebord de jante (10), au moyen d'un élément souple, la pièce rapportée comportant un guide pour l'élément de serrage (22), de sorte que lorsque la partie d'accouplement (122) est déplacée radialement vers l'intérieur par le système de serrage (60), la partie de blocage arrière (22) par le mouvement radialement vers l'intérieur et par le guidage en un mouvement axialement vers l'intérieur, le segment souple se fléchissant.
